# EUROPEAN PATENT APPLICATION

(11) **EP 2 720 141 A1**
(43) Date of publication of application: **16.04.2014**
(21) Application number: 13188182.3
(22) Date of filing: 10.10.2013
(51) Int. Cl.: G06F 3/14, G06F 3/048

(54) **Display apparatus and method of controlling display thereof**

(30) Priority: 10.10.2012 KR 20120112654
(71) Applicant: Samsung Electronics Co., Ltd, Gyeonggi-do 443-742 (KR)
(72) Inventor: Kim, Dae-hyun, Gyeonggi-do (KR); Kwak, Ji-yeon, Seoul (KR); Kim, Hyun-jin, Seoul (KR)
(74) Representative: Walaski, Jan Filip

(57) **Abstract**

A display apparatus includes a first body configured to have a first display placed therein, a second body configured to have a second display placed therein, a hinge configured to connect the first body and the second body and to rotatably support the first body and the second body, a communicator configured to communicate with a web server when a web browser is executed, a storage configured to store web page data received from the web server, and a controller configured to display, on the first display, a first web browsing screen based on the web page data, and to display, on the second display, when a first object is selected on the first web browsing screen, a second web browsing screen, which is linked with the first object.

## Description

The present invention relates to a display apparatus and a method of controlling a display thereof, and more particularly, to a multi display apparatus which improves user convenience, and a method of controlling a display thereof.

Portable electronic apparatuses increasingly in use today, such as smartphones, are equipped with a single display. As the hardware performance of such portable electronic apparatuses has been improved, users are better able to multitask.

However, since the display of such portable electronic apparatuses has limited dimensions, it may be difficult for users to display many windows at the same time to multitask.

In particular, when a user may be surfing the web, toggling between linked web pages, and opening and viewing many web pages, like web browsing, a small display screen may limit the ability to display many web pages.

If a portable apparatus is designed with a display screen large enough to overcome such a limit, the size of the whole portable electronic apparatus is likely too large, and thus this approach does not provide a good solution.

One solution to overcome the limit of a single display while maintaining a compactness of an electronic apparatus that has appeared in the market is electronic apparatuses equipped with two or more displays.

Since a multi-display apparatus is equipped with two or more displays, it may improve user convenience in multitasking. However, since such a multi-display apparatus may have a configuration different from that of a related-art single display apparatus, it may be difficult to employ a display method that was designed to be used in a single display apparatus. In particular, when using the Internet, users frequently want to access a plurality of web servers and check web browsing screens. However, a control method related to the display of a web browsing screen has not been effectively provided and thus users may experience an inconvenience in using a multi-display apparatus.

The present invention provides a multi display apparatus configured to provide a plurality of web browsing screens, thereby improving user convenience, and a method of controlling a display thereof.

Additional features and utilities of the present invention will be set forth in part in the description which follows and, in part, will be obvious from the description, or may be learned by practice of the invention.

The foregoing and/or other features and utilities of the present invention may be achieved by providing a multi-display apparatus including: a first display, a second display, a hinge configured to connect a first body and a second body, and a controller configured to generate a first web browsing screen by executing a web browser, to display the first web browsing screen on the first display, to generate a second web browsing screen having a relationship with the first web browsing screen, and to display the second web browsing screen on the second display.

The controller may be configured to receive data from a source, which may be linked with an object selected from objects displayed on the first web browsing screen, to generate the second web browsing screen using the data, and to display the second web browsing screen on the second display.

The controller may be configured to receive, when an object is selected on the second web browsing screen, data from a source linked with the object, to generate a third web browsing screen using the data, and to display the third web browsing screen on the first display.

The controller may be configured to have the first web browsing screen overlaid with the third web browsing screen, and to alternately switch between the first web browsing screen and the third web browsing screen according to a selection.

The multi-display apparatus may further include a storage, and the controller may be configured to remove, from the first display, when the third web browsing screen is generated, the first web browsing screen, to store information related to the first web browsing screen in the storage, to display the third web browsing screen on the first display, to remove, from the first display, in response to a command to switch a screen, the third web browsing screen, and to display, using the information, the first web browsing screen.

The controller may be configured to display, on the first display, when an object is selected on a screen displayed on the second display, a web browsing screen corresponding to the object.

The controller may be configured to generate a first web browsing screen using source information, to display the first web browsing screen on the first display, to generate, when an object displayed on the first web browsing screen is selected, a second web browsing screen linked with the object, and to display the second web browsing screen on the second display.

The first web browsing screen may include a main content and an additional content, and the controller may be configured to generate the second web browsing screen by separating the additional content from the first web browsing screen. The additional content may include at least one of a banner image and a pop-up image.

The controller may be configured to receive first and second web page data from the same source, to generate the first web browsing screen having a first layout using the first web page data, and to generate the second web browsing screen having a second layout using the second web page data.

The first web browsing screen and the second web browsing screen may be displayed according to different display options, and the display option may include at least one of a resolution, a screen size, a layout, a screen arrangement direction, a color, a font, and a letter size.

The foregoing and/or other features and utilities of the present invention also provide a method of controlling a display of a multi-display apparatus, the method including generating a first web browsing screen by executing a web browser, displaying the first web browsing screen on a first display, generating a second web browsing screen having a relationship with the first web browsing screen, and displaying the second web browsing screen on a second display.

The method may further include receiving data from a source, which may be linked with an object selected from among objects displayed on the first web browsing screen, generating the second web browsing screen using the data, and displaying the second web browsing screen on the second display.

The method may further include receiving, when an object is selected on the second web browsing screen, data from a source linked with the object, generating a third web browsing screen using the data, and displaying the third web browsing screen on the first display.

The method may further include having the first web browsing screen overlaid with the third web browsing screen, and alternately switching between the first web browsing screen and the third web browsing screen according to a selection.

The method may further include removing, from the first display, when the third web browsing screen is generated, the first web browsing screen, storing information related to the first web browsing screen, displaying the third web browsing screen on the first display, removing, from the first display, in response to a command to switch a screen, the third web browsing screen, and displaying, using the information, the first web browsing screen.

The method may further include displaying, on the first display, when an object is selected on a screen displayed on the second display, a web browsing screen corresponding to the object.

The method may further include generating a first web browsing screen using source information, displaying the first web browsing screen on the first display, generating, when an object displayed on the first web browsing screen is selected, a second web browsing screen linked with the object, and displaying the second web browsing screen on the second display.

The method may further include separating an additional content from the first web browsing screen and generating the second web browsing screen based on the separated additional content, wherein the additional content may include at least one of a banner image and a pop-up image.

The method may further include receiving first and second web page data from the same source, generating the first web browsing screen having a first layout using the first web page data, and generating the second web browsing screen having a second layout using the second web page data.

The first web browsing screen and the second web browsing screen may be displayed according to different display options, which may include at least one of a resolution, a screen size, a layout, a screen arrangement direction, a color, a font, and a letter size.

The foregoing and/or other features and utilities of the present invention also provide a multi-display apparatus including at least two bodies, each of the at least two bodies configured to be coupled to at least one other of the at least two bodies and to have at least two surfaces, at least one of the at least two surfaces having a display disposed therein, and a controller configured to display a first web browsing screen on a display of a first body of the at least two bodies and to display a second web browsing screen on a display of a second body of the at least two bodies, wherein the first web browsing screen is associated with the second web browsing screen.

The controller may be configured to generate the first web browsing screen from data stored in a memory and to generate the second web browsing screen in response to a selection of an object in the first web browsing screen.

The controller may be configured to generate a third web browsing screen in response to a selection of an object in the second web browsing screen and to display the third web browsing screen on a display of a third body of the at least two bodies.

The controller may be configured to display the second web browsing screen on the display of the second body on a first surface of the at least two surfaces, to generate a third web browsing screen in response to a selection of an object in the second web browsing screen, and to display the third web browsing screen on a display of the second body on a second surface of the at least two surfaces.

The controller may be configured to generate the first web browsing screen from data stored in a memory and to generate the second web browsing screen from the data, wherein the data may be associated with a common web site and the first web browsing screen may be different from the second web browsing screen.

The controller may be configured to extract first data from the data and to extract second data from the data, wherein the first data may be associated with the first web browsing screen and the second data may be associated with the second web browsing screen.

The first web browsing screen may be a first version of the common web site, the second web browsing screen may be a second version of the common web site, the first version may be configured to support a first type of display, and the second version may be configured to support a second type of display.

The foregoing and/or other features and utilities of the present invention also provide a method of displaying web browsing screens, the method including displaying a first web browsing screen on a display of a first body of a multi-display apparatus having at least two bodies, each of the at least two bodies configured to be coupled to at least one other of the at least two bodies and to have at least two surfaces, at least one of the at least two surfaces having a display disposed therein, and displaying a second web browsing screen on a display of a second body of the at least two bodies, wherein the first web browsing screen is associated with the second web browsing screen.

The foregoing and/or other features and utilities of the present invention also provide a non-transitory computer-readable recording medium containing instructions which, when executed by an electronic processing element, cause the electronic processing element to perform a method, the method including displaying, under a control of the electronic processing element, a first web browsing screen on a display of a first body of a multi-display apparatus having at least two bodies, each of the at least two bodies configured to be coupled to at least one other of the at least two bodies and to have at least two surfaces, at least one of the at least two surfaces having a display disposed therein, and displaying, under the control of the electronic processing element, a second web browsing screen on a display of a second body of the at least two bodies, wherein the first web browsing screen is associated with the second web browsing screen.

The foregoing and/or other features and utilities of the present invention also provide a multi-display apparatus including a first body having a first display, a second body having a second display, and a controller configured to display a first web browsing screen on the first display, to generate a second web browsing screen in response to a selection of an object in the first web browsing screen, and to display the second web browsing screen on the second display.

These and/or other features and utilities of the present invention will become apparent and more readily appreciated from the following description of the embodiments, taken in conjunction with the accompanying drawings of which:
FIG. 1 is a schematic block diagram illustrating a multi-display apparatus according to an exemplary embodiment of the present invention;
FIG. 2 is a block diagram illustrating an example of a detailed configuration of a controller illustrated in FIG. 1;
FIG. 3 is a block diagram illustrating an example of a configuration of a multi-display apparatus configured to control an operation of each display using a plurality of frame buffers;
FIG. 4 is a block diagram illustrating an example of a configuration of a multi-display apparatus configured to control an operation of each display using an integrated frame buffer;
FIG. 5 is a schematic block diagram illustrating an example of a detailed configuration of a first display of FIG. 4;
FIG. 6 is a schematic block diagram illustrating an example of a circuit configuration of R, G, and B pixels constituting a display panel illustrated in FIG. 5;
FIG. 7 is a cross sectional view illustrating of a display according to an exemplary embodiment of the present invention;
FIG. 8 is a block diagram illustrating a configuration of a multi-display apparatus in detail according to an exemplary embodiment of the present invention;
FIG. 9 illustrates a system hierarchy of a multi-display apparatus according to an exemplary embodiment of the present invention;
FIG. 10 is a perspective view illustrating a multi-display apparatus in detail according to an exemplary embodiment of the present invention;
FIGS. 11 to 15 are perspective views illustrating screen modes configured to vary according to a relative angle between a first body and a second body of a multi-display apparatus according to an exemplary embodiment of the present invention;
FIG. 16 is a cross sectional view illustrating an example of a method of sensing hovering in a multi-display apparatus;
FIGS. 17 and 18 illustrate placements of two cameras of a multi-display apparatus according to exemplary embodiments of the present invention;
FIG. 19 illustrates a screen of a multi-display apparatus on which a plurality of icons may be displayed according to an exemplary embodiment of the present invention;
FIG. 20 illustrates executing web browsing in a multi-display apparatus according to an exemplary embodiment of the present invention;
FIG. 21 illustrates an example of displaying a web browsing screen on first and second displays of a multi-display apparatus in full size;
FIG. 22 illustrates an example of displaying a web browsing screen and a different application execution screen, respectively, on first and second displays of a multi-display apparatus;
FIG. 23 illustrates an example of displaying a home screen and a web browsing screens, respectively, on first and second displays of a multi-display apparatus;
FIG. 24 is a timing chart illustrating a method of displaying a plurality of web browsing screens on a multi-display apparatus according to an exemplary embodiment of the present invention;
FIG. 25 illustrates a method of displaying a plurality of web browsing screens on a multi-display apparatus in detail according to an exemplary embodiment of the present invention;
FIGS. 26 to 29 illustrate a process of displaying a web browsing screen on a second display according to a user selection command on a first display in a multi-display apparatus according to an exemplary embodiment of the present invention;
FIGS. 30 to 33 illustrate displaying a web browsing screen on a first display according to a user selection command on a second display in a multi-display apparatus according to an exemplary embodiment of the present invention;
FIGS. 34 to 36 illustrate toggling between web browsing screens on each display in a multi-display apparatus according to an exemplary embodiment of the present invention;
FIGS. 37 to 41 illustrate toggling between web browsing screens on each display in a multi-display apparatus according to an exemplary embodiment of the present invention;
FIGS. 42 to 44 illustrate displaying a web browsing abstract screen as a thumbnail screen in a multi-display apparatus according to an exemplary embodiment of the present invention;
FIGS. 45 and 46 illustrate separately displaying a main content and a sub content on a web browsing screen in a multi-display apparatus according to an exemplary embodiment of the present invention;
FIGS. 47 to 51 illustrate rearranging a region selected by a user and displaying the region in a multi-display apparatus according to an exemplary embodiment of the present invention;
FIGS. 52 to 57 illustrate updating a web browsing screen by changing a resolution of each display in a multi-display apparatus, and displaying the web browsing screen according to an exemplary embodiment of the present invention;
FIG. 58 illustrate first and second displays on which web browsing screens are displayed in a multi-display apparatus according to an exemplary embodiment of the present invention;
FIGS. 59 and 60 illustrate rotating a web browsing screen according to rotation of a multi-display apparatus, and displaying the web browsing screen according to an exemplary embodiment of the present invention;
FIGS. 61 to 64 illustrate updating and changing a web browsing screen by means of a button provided on a multi-display apparatus according to an exemplary embodiment of the present invention;
FIGS. 65 to 69 illustrate adding a new web browsing screen and toggling between a plurality of web browsing screens in a multi-display apparatus according to an exemplary embodiment of the present invention;
FIG. 70 is a flowchart illustrating a method of controlling multiple displays of a multi-display apparatus according to an exemplary embodiment of the present invention; and
FIG. 71 is a flowchart illustrating in detail a method of controlling multiple displays of a multi-display apparatus according to an exemplary embodiment of the present invention.
FIGS. 72 to 74 illustrate a multi-display apparatus according to various exemplary embodiments of the present invention.

In the following description, a multi-display apparatus is an apparatus that includes a plurality of displays and that may display various screens through the displays. For example, the multi-display apparatus may be implemented by using a tablet personal computer (PC), a portable multimedia player (PMP), a personal digital assistant (PDA), a smart phone, a mobile phone, a digital album, and/or a game console.

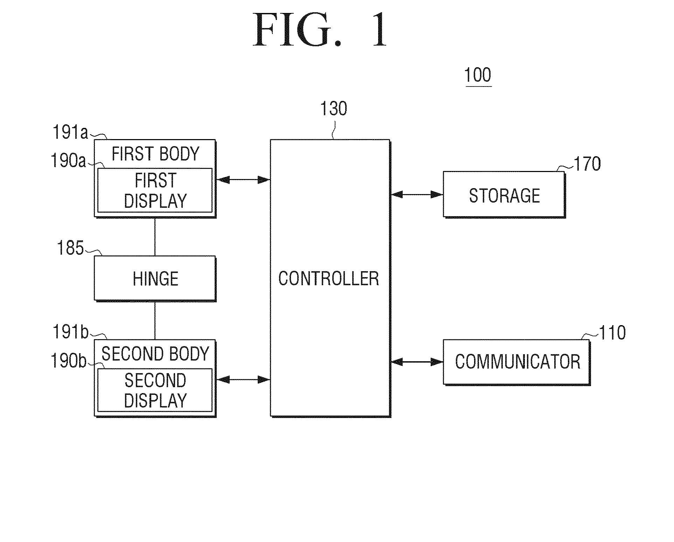

Referring to FIG. 1, the multi-display apparatus 100, according to an exemplary embodiment of the present invention, may include a communicator 110, a controller 130, a storage 170, a hinge 185, a first display 190a, and a second display 190b.

The communicator 110 may be configured to communicate with an external apparatus. The communicator 110 may be configured to be connected to various kinds of external apparatuses under the control of the controller 130. For example, when a web browser is executed by the controller 130, the communicator 110 may use a predetermined source address and may accesses an external apparatus corresponding to the source address. Then, the communicator 110 may receive web page data from the corresponding external apparatus.

The communicator 110 may be configured to be connected to the Internet using various communication methods such as, for example, various wire/wireless LANs, cellular communication network, Wi-Fi, and/or Zigbee, thereby accessing an external apparatus. To achieve this, the communicator 110 may include, for example, a cellular communication module, a wireless LAN module, a Wi-Fi module, a Zigbee module, and/or a network interface card.

The communicator 110 may communicate, for example, with more diverse source apparatuses according to an ability of the multi-display apparatus 100. For example, the communicator 110 may include a wireless communication module, such as a short-range communication module, a GPS communication module, a satellite DMB module, and/or a terrestrial DMB module, and a wire communication module, such as a high-definition multimedia interface (HDMI), a universal serial bus (USB), and/or an apparatus configured to operate according to Institute of Electrical and Electronics Engineers (IEEE) Standard 1394. As described above, the configuration of the communicator 110 may be changed variously according to an exemplary embodiment of the present invention and is explained in detail below.

The hinge 185 may physically connect the first display 190a and the second display 190b. For example, the multi-display apparatus 100 may be divided into two bodies. The first display 190a may be placed on one of the two bodies, a first body 191a, and the second display 190b may be placed on the other body, a second body 191b.

The hinge 185 may be physically connected to the first and second bodies 191a and 191b such that the first and second bodies 191a and 191b are connected to each other, and may serve, for example, as a shaft to allow the first and second bodies 191a and 191b to rotate thereabout in the connected state. The hinge 185 may be implemented, for example, by an integral type that may be connected, respectively, to the first body 191a and the second body 191b and may connect the first body 191a and the second body 191b at an intermediate region between the first and second bodies 191a and 191b, that is, the hinge 185 may connect ends of the bodies 191a and 191b. Exterior configurations of the first and second bodies 191a and 191b and the hinge 185 are explained in detail below with reference to the accompanying drawings. Hereinafter, the hinge 185 connecting the first display 190a and the second display 190b is explained. The hinge 185 may be a structure and/or a function to provide a relationship between the first and second bodies 191a and 191b. The structure and/or function may be referred to as a mechanical and/or electrical element to provide the relationship thereof.

The hinge 185 may further include a hinge sensor (not illustrated) configured to sense a degree of folding between the first display 190a and the second display 190b. In this case, the hinge sensor may transmit, to the controller 130 through a wire connection or wirelessly, a signal that corresponds to a degree of folding between the first and second bodies 191a and 191b.

The first and second displays 190a and 190b may be configured to rotate about the hinge 185. Accordingly, the first and second displays 190a and 190b may be closed such that they are brought into contact with each other, or may be bent back in the opposite direction and opened such that their rear surfaces are brought into contact with each other. The first and second displays 190a and 190b may also be flipped 180 degrees according to a configuration of the hinge 185. A way in which the first display 190a and the second display 190b may be folded or unfolded with reference to the hinge 185 according to exemplary embodiments of the present invention is explained in detail below.

The first and second displays 190a and 190b may be configured to display, under the control of the controller 130, various screens, such as, for example, a desktop screen including various icons, a web browsing screen, an application execution screen, various content playback screens such as a moving image and a photo, and a user interface screen.

The first and second displays 190a and 190b may be implemented, for example, by using a touch screen to sense a user's touch. For example, the first and second display 190a and 190b may be formed of a touch sensor (not illustrated) and a display (not illustrated) which may be layered one on the other. The touch sensor may include, for example, a touch sensor configured to sense a user' touch and a proximity sensor configured to sense hovering, and the display may be implemented, for example, by using a liquid crystal display (LCD) panel.

The controller 130 may control the first and second displays 190a and 190b according to a user selection and may perform various operations.

When the multi-display apparatus 100 is turned on and is booted, the controller 130 may control to display a desktop screen based on, for example, information stored in the storage 170 and pre-set setting information. Various icons, including an icon configured to execute a web browser, may be displayed on the desktop screen.

The user may select at least one of the various icons using various input methods such as, for example, touching a screen, a motion gesture, a voice command, and/or manipulating a button.

When a web browser icon is selected, the controller 130 may execute a web browser. When the web browser is executed, the communicator 110 may access an external apparatus and may receive web page data. The received web page data may be stored in the storage 170. The received web page data may have a format of a hypertext markup language (HTML).

The controller 130 may analyze the stored web page data and may configure a web browsing screen, and then may control to display the web browsing screen on at least one of the first and second displays 190a and 190b. On the other hand, when there is linked additional information in the web page data, the controller 130 may store the additional information in the storage 170. When the controller 130 configures a first web browsing screen using the web page data, the controller 130 may control to display the first web browsing screen on at least one of the first display 190a and the second display 190b. That is, the controller 130 may determine a display to display the first web browsing screen according to various criteria. For example, the controller 130 may determine the display based on default information. That is, when default information for setting the first display 190a as a main display is stored, the controller 130 may display the first web browsing screen on the first display 190a.

For example, the controller 130 may determine the display to be used to display the first web browsing screen according to a display state of each of displays 190a and 190b. For example, when another screen is already being displayed on the first display 190a, the controller 130 may display the first web browsing screen on the second display 190b.

For example, the controller 130 may display the first web browsing screen on a display on which a final web browsing screen may be displayed when an indication that a previously executed web browser is or has been terminated is displayed.

For example, the controller 130 may determine attributes of applications that may currently be displayed on the displays, and may control to display the first web browsing screen on the display on which an application having a lower priority than that of the first web browsing screen is displayed.

Also, one of the first and second displays 190a and 190b may be set to display the first web browsing screen according to setting information determined by a user, and the single first web browsing screen may be displayed using the two displays 190a and 190b.

When a specific condition is satisfied after the first web browsing screen is or has been displayed, the controller 130 may display a second web browsing screen. In this case, the second web browsing screen may be displayed on the display on which the first web browsing screen is not displayed. For example, when the first web browsing screen is displayed on the first display 190a, the second web browsing screen may be displayed on the second display 190b. On the other hand, when the first web browsing screen is displayed on both the first and second displays 190a and 190b, the first web browsing screen may be reduced and may be displayed on one of the first and second displays 190a and 190b, and the second web browsing screen may be displayed the other display.

The first web browsing screen, as recited herein, may refer to a web page that may be displayed first when a web browser is executed, and the second web browsing screen may be a second web page that may be generated at a later time than and separately from the first web browsing screen and that may be displayed.

The controller 130 may configure the second web browsing screen to have a relationship with the first web browsing screen. The second web browsing screen that has the relationship with the first web browsing screen may vary according to an exemplary embodiment of the present invention.

For example, the controller 130 may determine the second web browsing screen by considering a characteristic of the first web browsing screen, a manipulation of the first web browsing screen by a user, a characteristic of an external source that provides the first web browsing screen, link information included in the first web browsing screen, and/or additional information included in the web page data to configure the first web browsing screen. Hereinafter, a web browsing operation according to various exemplary embodiments of the present invention is explained in detail below.

According to an exemplary embodiment of the present invention, when an object is selected on a first web browsing screen after the first web browsing screen is or has been displayed, the controller 130 may display a second web browsing screen, which may be generated using a source linked with the selected object. The object recited herein may include, for example, various types of objects such as an image, a text, and/or an icon.

For example, when the first web browsing screen is displayed on the first display 190a and the user touches the first web browsing screen, the controller 130 may sense, using a touch sensor (not illustrated) provided in the first display 190a, the touch by the user. Accordingly, the controller 130 may calculate an X-coordinate value and an Y-coordinate value of the region of touch.

Since the multi-display apparatus 100 may include a multi-display, X and Y coordinates on both the first display 190a and the second display 190b may use the same coordinates system and thus an X1 coordinate and a Y1 coordinate that correspond to a touch on the first display 190a may be different from an X₂ coordinate and a Y₂ coordinate that correspond to a touch on the second display 190b even when the user touches the same corresponding point on each display screen.

For example, when an X₁ coordinate of a first region of touch of the first display 190a is 10 pixels away in a rightward direction from a reference pixel, and a Y1 coordinate is 20 pixels away in a downward direction from the reference pixel, a coordinate value of the first region of touch is (10, 20).

When a user touches the same point on the second display 190b as the point of touch of the first display 190a, an X₂ coordinate of a second region of touch is 600 pixels further away from the reference pixel than the X1 coordinate is from the reference pixel, that is, 610 pixels away in the rightward direction from the reference pixel, and a Y2 coordinate of the second region of touch is 20 pixels away in the downward direction from the reference pixel in the same way as in the Y1 coordinate. Therefore, a coordinate value of the second region of touch is (610, 20).

The controller 130 may compare the calculated coordinate value and the first web browsing screen, and may determine which one is selected from among the objects displayed on the first web browsing screen. The object recited herein may be various types of objects such as, for example, an image, a photo, a banner advertisement, a text, a figure, an URL address, and/or a menu icon.

When it is determined that a certain object is or has been selected, the controller 130 may analyze link information linked with the selected object. That is, the controller 130 may determine whether there is linked first source data in the selected object. When it is determined that there is first source data, the controller 130 may control the communicator 110 to communicate with an external server (not illustrated) based on the first source data.

The first source data may be received along with web page data to configure the first web browsing screen, and may be stored in the storage 170 in advance. For example, the controller 130 may read out the first source data from the storage 170 and may use the first source data. Also, the first source data may be provided from another source which may be different from the source that provides the web page data, or may be provided from various storage media connected to the multi-display apparatus 100 or another electronic apparatus.

The controller 130 may receive second web page data from the source that corresponds to the first source data, and may generate the second web browsing screen using the second web page data. The controller 130 may control the second display 190b to display the second web browsing screen. The second web browsing screen that may be generated in this way may be a web browsing screen that has a relationship with the first web browsing screen that may be displayed on the first display 190a.

When it is determined that a general background screen portion other than an object is selected, the controller 130 may not perform any operation or may perform a general operation such as, for example, zooming-in/zooming-out a screen and/or changing a mode,

On the other hand, when the first and second web browsing screens are displayed and a user touches one of the web browsing screens again, the controller 130 may newly generate a third web browsing screen according to the region of touch. For example, the third web browsing screen may be displayed on the other display which the user has not touched. For example, when the user touches an object of the second web browsing screen, the third web browsing screen that is linked with the touched object may be displayed on the first display 190a. At this time, the first web browsing screen may be removed or may be hidden under the third web browsing screen. Additionally, a fourth web browsing screen and a fifth web browsing screen may be generated in sequence and may be displayed on corresponding displays. Toggling between the displayed web browsing screens may be performed freely according to a user selection. Displaying the web browsing screen and toggling between the web browsing screens are explained in detail in the later parts of this specification.

A display option of each web browsing screen may be determined separately according to a user selection or a characteristic of a display. The display option may include various options such as, for example, a resolution, a screen size, a layout, a screen alignment direction, a color, a font, and/or a letter size.

According to an exemplary embodiment of the present invention, the controller 130 may generate a plurality of web browsing screens based on a single web page datum, which may be received from a web server, and may display the web browsing screen on each display. For example, when the user selects a specific region of a first web browsing screen, the controller 130 may display additional information, corresponding to the selected region, as a second web browsing screen. The region may be selected on a basis of an object as described above, or may be selected on a basis of a screen region having a predetermined area. The region may be designated by a part of a user's body, a pen, or other inputting means. When an object is selected, additional information about the selected object, such as, for example, a detailed explanation, an enlarged image, and/or a relevant image, may be displayed on the second web browsing screen. Also, when a predetermined screen region is selected, the selected screen region may be displayed on the second web browsing screen. For example, when the first web browsing screen is updated, the second web browsing screen may also be updated.

According to the exemplary embodiment as described above, the controller 130 may display a main page of a web site, including various contents, as the first web browsing screen, and may show the user details of one of the contents of the first web browsing screen through the second web browsing screen.

For example, the controller 130 may automatically configure the second web browsing screen and may display the second web browsing screen on the display other than the display on which the first web browsing screen is displayed even when separate user manipulation is not or has not been performed on the first web browsing screen.

That is, the source that provides web page data to configure the first web browsing screen may further transmit, separately, detailed information added to the web page data, and the controller 130 may display the second web browsing screen using the detailed information. For example, when a main screen of a portal Internet site is displayed on the first web browsing screen, detailed information about a specific content, from among contents constituting the main screen of the portal Internet site, such as, for example, a specific content pre-set by the user, a news article updated on a real time basis, and/or real time information provided by the portal Internet site, may be displayed on the second web browsing screen. Also, when a content such as, for example, a movie is displayed on the first web browsing screen, detailed information about the content such as, for example, a storyline, characters, a theater, a running time, and/or a review of the movie may be arranged and automatically displayed.

According to an exemplary embodiment of the present invention, the controller 130 may separate a main content and an additional content included in web page data provided from a single source, that is, for example, a web server, and may generate first and second web browsing screens using the separated contents.

The additional content, as recited herein, may refer to content that is additionally provided on the main content, such as, for example, a banner advertisement, a Flash image, and/or a pop-up image. Since various advertisements may be provided along with a basic content in a portal site, a display space may be insufficient to display the basic content due to such an additional content. Accordingly, according to an exemplary embodiment of the present invention, only the additional content may be separated from the main content and may be provided to the other screen so that the user may see the main content effectively.

For example, the controller 130 may analyze attributes of the main content and the additional content of the source data, and may separate the main content and the additional content from each other. The controller 130 may generate a first web browsing screen that includes the main content, and may generte a second web browsing screen that includes the additional content. That is, the second web browsing screen may be implemented by a collection of, for example, a banner advertisement, a Flash image, and/or a pop-up image, which may be originally included in the first web browsing screen. Also, the first web browsing screen may include the main content and the additional content or may include only the main content.

At this time, the additional content may include, for example, a banner advertisement, a Flash image, and/or a pop-up image. When display sizes of the first and second displays 190a and 190b are small, the banner advertisement, the Flash image, and/or the pop-up image may hinder the user from viewing the main content.

In order to solve this problem, the controller 130 may separate only the additional content and may display it on the second web browsing screen. For example, the controller 130 may distinguish between the additional content and the main content by comparing metadata included in the main content and metadata included in the additional content.

That is, the controller 130 may analyze the metadata that identifies the main content included in the source data, and the metadata that identifies the additional content. By comparing the metadata, the controller 130 may distinguish between the main content and the additional content. According to an exemplary embodiment of the present invention, the second web browsing screen may be a screen that displays the same content as that of the first web browsing screen, but in a different layout. An external apparatus that provides web page data on the first web browsing screen may provide various versions of the same content. A layout of each version may be set differently from those of the other versions. For example, a screen for a personal computer (PC) and a screen for a mobile phone may be provided together. The controller 130 may display the screen for the PC, which is one of the screens, as the first web browsing screen, and may separately display the screen for the mobile phone as the second web browsing screen.

According to an exemplary embodiment of the present invention, the controller 130 may generate the second web browsing screen by changing, for example, a resolution, a size, and/or an aspect ratio of the first web browsing screen. When a display setting of a display is or has been changed, the controller 130 may regenerate a screen for a currently displayed web browsing screen and may display it.

As described above, the controller 130 may control to selectively display the plurality of web browsing screens, that is, web browsing screens or various application execution screens, through the plurality of displays 190a and 190b. The method of displaying each web browsing screen may be variously determined according to each exemplary embodiment.

Operation of the display and the web browsing screen, according to each exemplary embodiment, are explained in detail below. Each web browsing screen may be displayed according a different display option. For example, the user may set various display options for the first and second displays 190a and 190b, such as a screen size, a layout, a screen alignment direction, a color, a font, and/or a letter size. The controller 130 may store the set display options in the storage 170, and may control the first and second displays 190a and 190b to display according to the stored display options.

On the other hand, when the first and second web browsing screens are displayed as described above, the controller 130 may perform various follow-up operations.

For example, when the first web browsing screen and the second web browsing screen are displayed and a user touches one display again, the controller 130 may generate a third web browsing screen that corresponds to the touched object and then may display the third web browsing screen on the other display that is not or has not been touched.

For example, when one object is selected on the above-described second web browsing screen, the controller 130 may control the communicator 110 to communicate with an external source using source data linked with the selected object. Upon receiving third web page data from the newly connected external source, the controller 130 may generate the third web browsing screen based on the third web page data, and may display the third web browsing screen on the first display 190a.

At this time, the controller 130 may have, for example, the first web browsing screen overlaid with the third web browsing screen. Also, the controller 130 may display, for example, a menu to return to the first web browsing screen or a tab, on one side of the screen of the first display 190a, to indicate that the first web browsing screen exists under the third web browsing screen.

When the first web browsing screen is overlaid with the third web browsing screen, the controller 130 may alternate, for example, between the first web browsing screen and the third web browsing screen according to a user selection. For example, when first to Nth web browsing screens are overlaid with one another on the first display 190a, the first to Nth web browsing screens may be arranged and displayed in an order of latest update according to a user selection. In this state, when the user touches a menu on the screen or performs a predetermined gesture, the first to Nth web browsing screens may be switched in sequence. Also, a specific web browsing screen, for example, an initial web browsing screen may be set to be switched when a user touches a display.

Displaying the plurality of web browsing screens overlaid with one another may be done be overlapping the plurality of web browsing screens with one another, and may mean that the user may view a whole content of one web browsing screen, but may not view the other web browsing screens because they are hidden by the one web browsing screen.

In the above-described exemplary embodiment, the first web browsing screen may be overlaid with the third web browsing screen. However, according to an exemplary embodiment of the present invention, the controller 130 may remove the first web browsing screen from the first display 190a and may display the third web browsing screen.

The storage 170 may store, for example, various web page data and additional data, which may be received from the web server as described above. Also, the storage 170 may store, for example, various programs and data used for the operations of the multi-display apparatus.

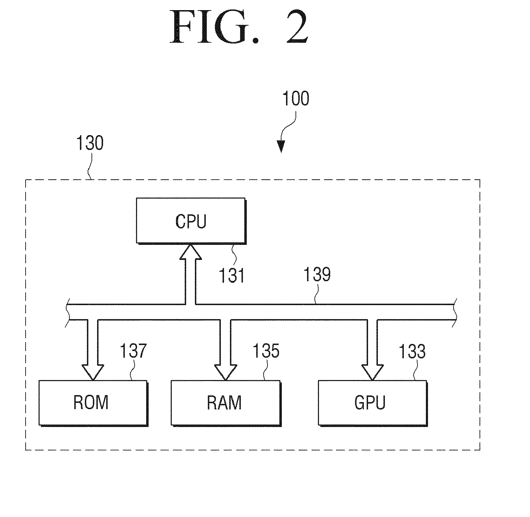

The storage 170 may refer to a storage medium that may be provided separately from a read only memory (ROM) 135 (see FIG. 2) and/or a random access memory (RAM) 137 (see FIG. 2), which may exist in the controller 130. The storage 170 may be implemented, for example, by using a hard disk drive (HDD), a solid state drive (SSD), a flash memory, or a USB memory.

The storage 170 may store, under the control of the controller 130, for example, various multimedia content data or may store management data of a system, a system use history, information about a web browsing screen display, a history of each user, and/or information about a web browsing screen display history of each display. For example, the storage 170 may continue to store the information about the web browsing screen display history. Such a web browsing screen display history may be stored and managed in various formats and methods according to a type of an operating system (OS) used in the multi-display apparatus 100.

Also, the storage 170 may store, under the control of the controller 130, data that may be received from an external apparatus. The controller 130 may search for a location of data using a memory address of data recorded in the storage 170, and may read out a data value from the corresponding location.

FIG. 2 is a block diagram that illustrates a detailed configuration of controller 130 of the multi-display apparatus 100, according to an exemplary embodiment of the present invention. Referring to FIG. 2, the controller 130 may include a central processing unit (CPU) 131, a graphic processing unit (GPU) 133, the RAM 135, the ROM 137, and a system bus 139.

The CPU 131 may control entire elements included in the multi-display apparatus 100 in addition to internal elements constituting the controller 130. For example, the CPU 131 may perform data communication with each element through the system bus 139, and may control a function of each element. The CPU 131 may collect a result of the controlling, may transmit a control signal to various peripherals connected to the controller 130 based on the result of the controlling, and may control the peripherals. For example, the CPU 131 may perform booting using booting information pre-stored in the ROM 137. The CPU 131 may read out data stored in a storage (not illustrated) from the RAM 135 and may transmit data, from among the data stored in the RAM 135, that may be graphic-processed to the GPU 133. The CPU 131 may receive the data that have been graphic-processed by the GPU 133, may transmit the data to an LCD controller (not illustrated) connected to the system bus 139, and may display an image on the display.

The CPU 131 may temporarily store, in a virtual frame buffer region assigned to a predetermined region of the RAM 135, the image data that has been processed by the GPU 133. The CPU 131 may assign the region of the virtual frame buffer in order to support the highest resolution of the display (for example, a 1024 by 600 resolution). If two displays are provided, the CPU 131 may assign, for example, the region of the virtual frame buffer on a scale of 1024 by 1200.

The CPU 131 may input the data temporarily stored in the virtual frame buffer to the GPU 133, and may perform digital signal processing.

The GPU 133 may perform graphic processing with respect to the data input under the control of the CPU 131. For example, the GPU 133 may generate, using an operator (not illustrated) and a renderer (not illustrated), a screen that includes various objects such as, for example, an icon, an image, and/or a text. The operator may calculate an attribute value such as, for example, coordinate values, a shape, a size, and/or a color of each object to be displayed according to a layout of the screen. The renderer may generate a screen of various layouts that include an object based on the attribute value calculated by the operator. The screen generated by the renderer may be transmitted to the first and second displays 190a and 190b through the bus 139 and may be displayed on a display region or may be stored in the storage 170.

The CPU 131 may control to display the data graphic-processed by the GPU 133 through at least one of the first and second displays 190a and 190b, or to store the data in the storage 170. Also, the CPU 131 may input the processed data to a display controller (not illustrated).

The GPU 133 may include a decoder (not illustrated), a renderer (not illustrated), and a scaler (not illustrated). Accordingly, the GPU 133, under the control of the display controller (not illustrated), may decode a stored content, may render the decoded content data and may form a frame, and may scale a size of the formed frame according to a size of a display. If the frame is to be displayed on one of the first and second displays 190a and 190b, the frame may be scaled according to the size of one display, and, if the frame is to be displayed on both the two displays 190a and 190b, the frame may be scaled according to the entire display size. The GPU 133 may provide the processed frame to the display and may display it.

The controller 130 may further include an audio processor (not illustrated) and an interface (not illustrated). The interface may be an element configured to interface with the surrounding elements.

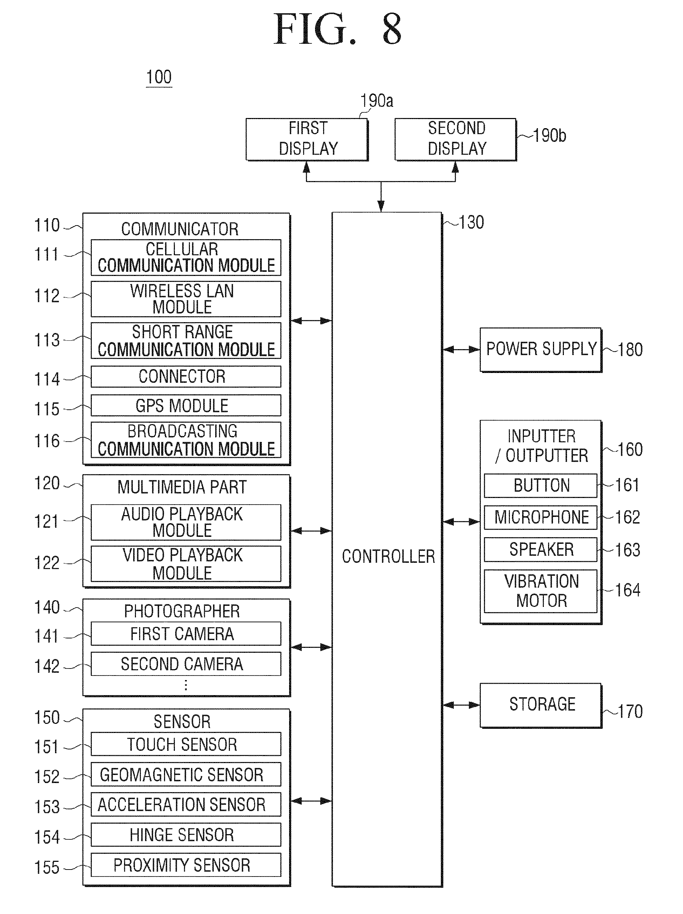

The audio processor (not illustrated) may be an element configured to interface with a multimedia part 120 (see FIG. 8) through an audio interface (not illustrated), to process audio data, and to provide the audio data to a sound outputting means such as, for example, a speaker (not illustrated). The audio processor may perform audio signal processing such as, for example, decoding audio data, which may be stored in the storage 170 or may be received through the communicator 110, filtering noise, and amplifying the data to an appropriate decibel. In the above example, if a played back content is a moving image content, the audio processor may process audio data that is or has been demultiplexed from the moving image content, may synchronize the audio data with the GPU 133, and may provide the audio data to the speaker to be output.

When audio data is included in web browsing data, the CPU 131 may control the audio processor to play back audio signals while displaying a web browsing screen.

When a web browser program is executed, the CPU 131 may access a web server through a network interface (not illustrated). When web page data is or have been received from the web server, the CPU 131 may control the GPU 133 to configure a web page screen and may display the configured web page screen on a multi-display 190. (A configuration that includes the first and second displays 190a and 190b and the hinge 185 described above may be called the multi-display 190.)

The ROM 137 may store a set of commands to boot a system. When a turn on command is or has been input and power is or has been supplied, the CPU 131, according to a command stored in the ROM 137, may copy an OS stored in the storage 170 into the RAM, may execute the OS, and may boot the system. When booting is or has been completed, the CPU 131 may copy various application programs stored in the storage 170 into the RAM 135, and may perform various operations by executing the application programs copied into the RAM 135. As described above, the CPU 131 may perform various operations by executing the application programs stored in the storage 170.

As described above, when at least one of a touch by a user and another manipulation by a user is sensed on the multi-display apparatus 100, the controller 130 may determine whether the touch and/or manipulation was intended or not. When it is or has been determined that the touch and/or manipulation was intended, the controller 130 may read out, from the storage 170, information about an operation that corresponds to the touch and/or manipulation and may perform the operation that corresponds to the information. The above-described operation of the controller 130 may be implemented by executing various programs stored in the storage 170.

As described above, the multi-display apparatus 100 may include various elements. Since the multi-display apparatus 100 includes a plurality of displays, it may provide various screens that use those displays. Hereinafter, various examples of a basic detailed configuration and of operations of the multi-display apparatus 100 are explained.

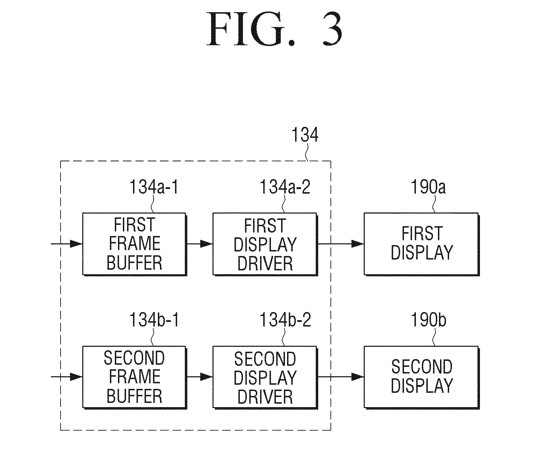

Referring to FIG. 3, the multi-display apparatus 100 may include first and second displays 190a and 190b, and a display controller 134. The display controller 134 may be an element separate from the controller 130 of FIG. 2, or may be an element that is included in the controller 130.

Referring to FIG. 3, the display controller 134 may include a first frame buffer 134a-1, a first display driver 134a-2, a second frame buffer 134b-₁, and a second display driver 134b-2.

The first frame buffer 134a-1 may be configured to buffer an image frame to be displayed on the first display 190a, and the second frame buffer 134b-1 may be configured to buffer an image frame to be displayed on the second display 190b.

For example, an image frame that has been digital signal processed by the GPU 133 may be stored in the first and second frame buffers 134a-1 and 134b-1 in a bitmap format. In this case, a buffering region of each of the frame buffers 134a-1 and 134b-1 may be assigned, for example, according to a maximum pixel size supportable by each of the displays 190a and 190b. For example, when the maximum pixel size that may be displayed on the first display 190a is 1024X1200, the first frame buffer 134a-1 may assign a buffer storage region to store an image of a bitmap format of a 1024X1200 size. The first display driver 134a-2 may analyze the image frame stored in the first frame buffer 134a-1 in the bitmap format and may convert the image frame into a first image source signal. The first display driver 134a-2 may provide the first image source signal to the first display 190a and may drive the first display 190a to display the image frame.

Likewise, the second display driver 134b-2 may analyze the image frame stored in the second frame buffer 134b-1, may convert the image frame into a second image source signal, may provide the second image source signal to the second display 190b, and may display the image frame.

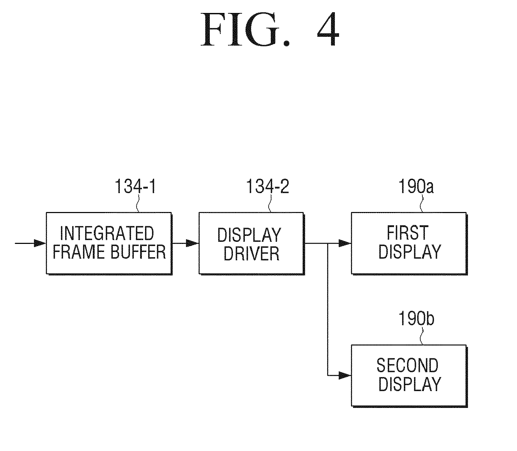

In FIG. 3, the first frame buffer 134a-1 and the second frame buffer 134b-1 that correspond, respectively, to the displays 190a and 190b may be provided separately. However, FIG. 4 illustrates a single integrated frame buffer according to another exemplary embodiment of the present invention.

FIG. 4 is a block diagram that illustrates a configuration of the multi-display apparatus 100 configured to control an operation of each display using an integrated frame buffer 134-1. When the frame buffer is implemented by using the integrated frame buffer 134-1, the integrated frame buffer 134-1 may be assigned a memory size greater than a memory required to support a maximum resolution of the first and second displays 190a and 190b.

For example, when each of the first and second displays 190a and 190b has a maximum resolution of 1024X800, the integrated frame buffer 134-1 may assign a storage region that corresponds to a frame buffer size configured to display a 1024X1600 resolution. A first region of the integrated frame buffer 134-1 may store a first image frame to be displayed on the first display 190a, and a second region may store a second image frame to be displayed on the second display 190b.

A display driver 134-2 may provide the first or second image frame to the first display 190a or the second display 190b using addresses of the first image frame and the second image frame stored in the integrated frame buffer 134-1, and may drive each of the displays 190a and 190b.

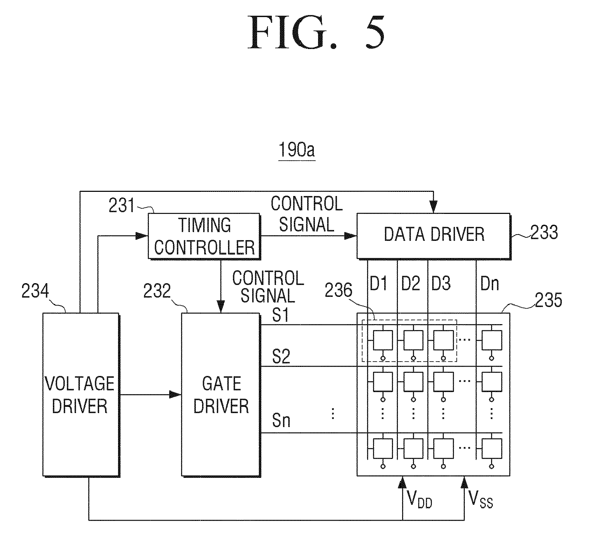

FIG. 5 is a schematic block diagram that illustrates an example of a detailed configuration of the first display 190a of FIG. 4. Although only the first display 190a is illustrated in FIG. 5 for convenience of explanation, the second display 190b may be implemented in the same or in a similar form.

Referring to FIG. 5, the first display 190a may include a timing controller 231, a gate driver 232_{,} a data driver 233, a voltage driver 234, and a display panel 235.

The timing controller 231 may receive, from an external source (not illustrated), a clock signal (DCLK) (not illustrated), a horizontal sync signal (Hsync) (not illustrated), and a vertical sync signal (Vsync) (not illustrated), which may be suitable for a resolution of, for example, a touch screen, may generate a gate control signal (scan control signal) and a data control signal (data signal), may rearrange input R, G, and B data, and may provide the R, G, and B data to the data driver 233.

The timing controller 231 may generate a gate shift clock (GSC) (not illustrated), a gate output enable (GOE) (not illustrated), and a gate start pulse (GSP) (not illustrated) with regard to the above-mentioned gate control signal. The GSC may be a signal that determines a time at which a thin film transistor (TFT) connected to light emitting elements such as, for example, R, G, and B organic light emitting diodes (OLEDs) may be turned on/off. The GOE may be a signal that controls output of the gate driver 232, and the GSP may be a signal that indicates a first driving line of a screen out of one vertical sync signal.

Also, the timing controller 231 may generate a source sampling clock (SSC) (not illustrated), a source output enable (SOE) (not illustrated), and a source start pulse (SSP) (not illustrated) with regard to the data control signal. The SSC may be used as a sampling clock to latch data in the data driver 233, and may determine an operation frequency of a data drive integrated circuit (IC). The SOE may transmit the data latched by the SSC to the display panel 235. The SSP may be a signal that indicates a start of latch or that samples for one horizontal synchronization duration.

The gate driver 232 may generate a scan signal and may be connected to the display panel 235 through scan lines S1, S2, ..., Sn. The gate driver 232 may apply a gate on/off voltage (Vgh/Vgl), which may be provided from the voltage driver 234, to the display panel 235 according to the gate control signal generated by the timing controller 231. The gate on voltage (Vgh) may be transmitted to a gate line 1 (GL1) (not illustrated) through a gate line n (GLn) (not illustrated) in sequence to realize a unit frame image on the display panel 235.

The data driver 233 may generate a data signal and may be connected to the display panel 235 through data lines D1, D2, D3, ..., Dn. The data driver 233 may complete scaling and may input the RGB data of the image frame to the display panel 235 according to the data control signal generated by the timing controller 231. The data driver 233 may convert the image data of the RGB, which may be provided from the timing controller 231 in series, into data in parallel, may convert digital data into an analog voltage, and may provide image data that corresponds to one horizontal line to the display panel 235. This process may be performed for each horizontal line in sequence.

The voltage driver 234 may generate driving voltages and may transmit them to the gate driver 232_{,} the data driver 233, and the display panel 235. That is, the voltage driver 234 may receive a supply voltage from an external source, that is, an alternating current (AC) voltage of 110V or 220V, and may generate a power voltage (VDD) necessary for the display panel 235 and may provide the power voltage, or may provide a grounded voltage (VSS). Also, the voltage driver 234 may generate the gate on voltage (Vgh) and may provide it to the gate driver 232. To achieve this, the voltage driver 234 may include, for example, a plurality of voltage driving modules (not illustrated), which may be individually operated. The plurality of voltage driving modules (not illustrated) may be operated, under the control of the controller 130, to provide different voltages, and the controller 130 may control the voltage driver 234 such that, for example, the plurality of voltage driving modules provide different driving voltages according to pre-set information. For example, the plurality of voltage driving modules may provide, according to pre-set information and under the control of the controller 130, different first voltages and a second voltage that may be set as a default voltage.

According to an exemplary embodiment, the voltage driver 234 may include a plurality of voltage driving modules (not illustrated) that correspond to a plurality of regions into which the display panel 235 may be divided. In this case, the controller 130 may control the plurality of voltage driving modules to provide different first voltages, that is, electroluminescence (EL) power voltages (ELVDD) according to screen information (or input image information) of the plurality of regions. That is, the controller 130 may control a level of the ELVDD using an image signal that may be input to the data driver 233. The screen information may be, for example, at least one of brightness and grayscale information of the input image.

The display panel 235 may include a plurality of gate lines (GL1 to GLn) (not illustrated) and a plurality of data lines (DL1 to DLn) that intersect to define a pixel region 236. R, G, and B light emitting elements such as, for example, OLEDs may be formed on the pixel region 236 where the gate lines and the data lines intersect. Also, a switching element (not illustrated), that is, a TFT may be formed on a certain region of the pixel region 236, for example, a corner. When such a TFT is turned on, grayscale voltages may be provided from the data driver 233 to the R, G, and B light emitting elements. At this time, the R, G, and B light emitting elements may provide light according to an amount of electricity provided based on the grayscale voltages. That is, when much electricity is provided, the R, G, and B light emitting elements may provide much light.

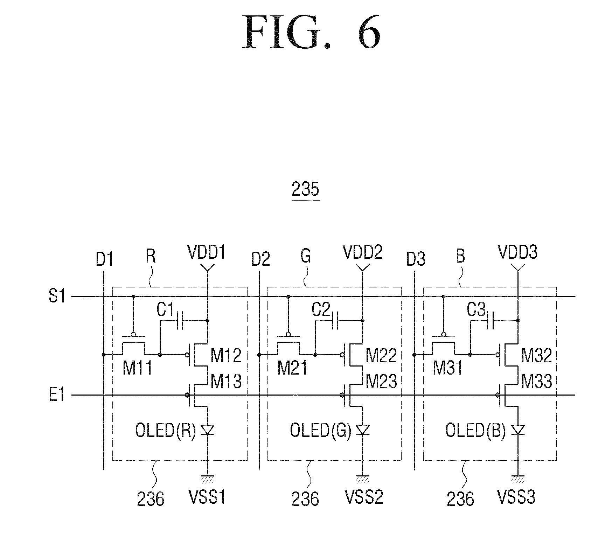

Referring to FIG. 6, the display panel 235 may include three R, G, and B pixel regions 236. The R, G, and B pixel regions 236 may include switching elements M11, M21, and M31, which may be operated by a scan signal (S1) and a gate on voltage (Vgh), switching elements M12, M22, and M32, which may output electricity based on a pixel value that includes a changed high grayscale value to be provided to the data lines (DL1 to DLn), and switching elements M13, M23, and M33, which may adjust an amount of electricity transmitted from the switching elements M12, M22, and M23 to the R, G, and B light emitting elements according to the control signal provided by the timing controller 231. The switching elements M13, M23, and M33 may be connected to the OLEDs and may supply electricity to the OLEDs. The OLED, as recited herein, may be a display that emits light by itself using a principle of emission of an electric field when currents flow in a fluorescent or phosphorescent organic matter thin film. An anode electrode of the OLED may be connected to a pixel circuit (not illustrated) and a cathode electrode may be connected to an electroluminescence (EL) grounded voltage (ELVSS). Such an OLED may generate light of a predetermined brightness in response to currents supplied from the pixel circuit. Gate electrodes of the switching elements M11, M21, and M31 may be connected to the scan line (S1), and one of a source electrode and a drain electrode of the switching elements M11, M21, and M31 may be connected, respectively, to the data line (D1), the data line (D2) and the data line (D3). As described above, the display panel 235 may be implemented, for example, by using an active matrix OLED (AM -OLED). However, the above-described exemplary embodiment is merely an example and does not exclude a passive matrix OLED (PM-OLED), which may be driven by a single line emitting light simultaneously.

Although the OLED has been described in the exemplary embodiment of FIG. 6, the display may be implemented by using various displays such as, for example, a liquid crystal display (LCD) panel, a plasma display panel (PDP), a vacuum fluorescent display (VFD), a field emission display (FED), and an electro luminescence display (ELD).

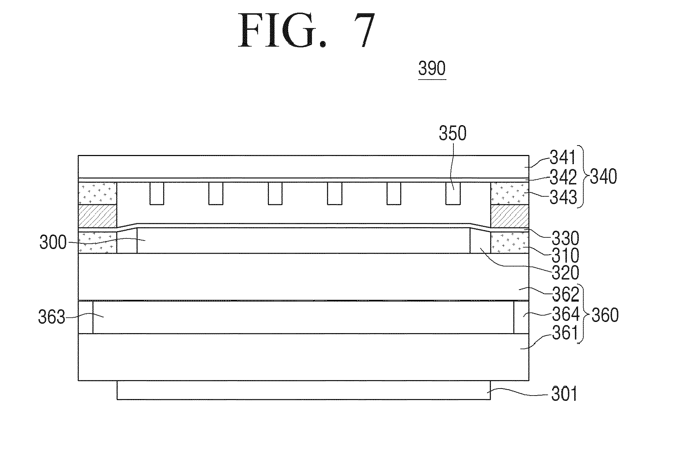

FIG. 7 is a cross section view that illustrates a display 390 according to an exemplary embodiment of the present inventive concept. The configuration of FIG. 7 may be applied to the first and second displays 190a and 190b described above.

Referring to FIG. 7, the display 390 may include a display panel 360 in which an upper substrate 362 and a lower substrate 361 may be formed in close contact with each other, an upper polarizing plate 300, which may be formed on the upper substrate 362 of the display panel 360, a lower electrode 310, which may be formed on an edge of the upper polarizing plate 300, a lower transparent electrode 330, which may be connected to the lower electrode 310 and may be formed on the upper polarizing plate 300, a touch pad 340 in which an upper transparent electrode 342 may be provided and which may be attached to the upper substrate 362, and a protrusion 350, which may be provided between the upper transparent electrode 342 and the lower transparent electrode 330. The display 390 may further include a lower polarizing plate 301, which may be formed on the lower substrate 361.

The touch pad 340 may include a base film 341, the upper transparent electrode 342, which may be formed on the base film 341, and an upper electrode 343, which may be formed on the upper transparent electrode 342.

A liquid crystal layer 363 may be formed between the upper substrate 362 and the lower substrate 361. The upper substrate 362 and the lower substrate 361 may include a display region (not illustrated) to display an image, and a border region (not illustrated), which may be formed along an edge of the display region. Although not illustrated, the display region of the lower substrate 361 may include a plurality of gate lines and a plurality of data lines, a thin film transistor, which may be formed on a region where the plurality of gate lines and the plurality of data lines intersect, and a pixel electrode, which may be connected to the thin film transistor. A sustain electrode (not illustrated), which may partially overlap the pixel electrode may be provided. A plurality of pads (not illustrated) may be formed on the border region of the lower substrate 361 to be connected with the gate lines and the data lines.

The upper substrate 362 and the lower substrate 361 may be sealed by a sealing member 364 such as, for example, a sealant. The sealing member 364 may be formed along the border region of the upper substrate 362 and the lower substrate 361. In the case of the display illustrated in FIG. 7, when the touch pad 340 is pressed by a predetermined external force, the protrusion 350 of the region to which the force is applied may be brought into close contact with the lower transparent electrode 330, and accordingly, the lower transparent electrode 330 and the upper transparent electrode 342 may be electrically connected to each other. The currents that flow in the upper transparent electrode 342 and/or the lower transparent electrode 330 may be changed by the electrical connection, and this change may be sensed by a separate sensing means (not illustrated). The sensing means may transmit a signal to the controller 130, which may be provided separately. The controller 130 may generate coordinates of the region in which the flow of the currents may be or may have been changed using the signal, and may transmit the coordinates, for example, to a predetermined driver (not illustrated). The driver, in response to the input coordinates, may perform the same operation or a similar operation to that of manipulating an image displayed on the display panel 360 using an input tool such as a mouse.

Referring to FIG. 8, the multi-display apparatus 100 may be configured to be connected to an external apparatus (not illustrated) using at least one of a cellular communication module 111, a wireless LAN module 112, a short-range communication module 113, and a connector 114 of a communicator 110. The "external apparatus" may include, for example, at least one of another apparatus, a mobile phone, a smart phone, a tablet PC, a computer server, and a digital TV.

Referring to FIG. 8, the multi-display apparatus 100 may include two displays 190a and 190b. Although the two displays 190a and 190b are illustrated in FIG. 8, three or more displays may be implemented.

The multi-display apparatus 100, according to an exemplary embodiment of the present invention, may include the communicator 110, a multimedia part 120, the controller 130, a photographer 140, a sensor 150, an inputter/outputter 160, the storage 170, a power supply 180, and the first and second displays 190a and 190b.

The communicator 110 may include, for example, the cellular communication module 111, the wireless LAN module 112, the short-range communication module 113, the connector 114, a GPS communication module 115, and a broadcasting communication module 116.

The cellular communication module 111, under the control of the controller 130, may use wireless access technology according to a cellular communication protocol, and may allow the multi-display apparatus 100 to be connected with an external apparatus (for example, a base station of a cellular system) through at least one antenna or a plurality of antennas (not illustrated).

Also, the cellular communication module 111 may exchange radio signals containing, for example, a voice, a video, a short message service (SMS) message, or a multimedia messaging service (MMS) message with another apparatus which may be configured to communicate, such as, for example, a mobile phone having a phone number input to the multi-display apparatus 100, a smart phone, a tablet PC, or another apparatus.

The communicator 110 may include, for example, at least one of the wireless LAN module 112 and the short-range communication module 113. For example, the communicator 110 may include only the wireless LAN module 112 or may include only the short-range communication module 113, or may include both the wireless LAN module 112 and the short-range module 113.

The wireless LAN module 112, under the control of the controller 130, may be configured to be connected to the Internet in a place where a wireless access point (AP) (not illustrated) is installed. The wireless LAN module 112 may support the wireless LAN standard of the IEEE (e.g., IEEE 802.11X).

The short-range communication module 113, under the control of the controller 130, may allow the multi-display apparatus 100 to perform wireless short-range communication with an external apparatus. The short range communication method may include, for example, Bluetooth and/or infrared data association (IrDA).

The connector 114 may provide an interface with various apparatuses that operate according to wireless standards such as, for example, a USB 2.0, a USB 3.0, an HDMI, and/or an IEEE 1394 standard.

The connector 114, under the control of the controller 130, may be used as an interface to connect the multi-display apparatus 100 and an external apparatus or a power source. The connector 114 may transmit data stored in the storage 170 of the multi-display apparatus 100 to the external apparatus or may receive data from the external apparatus through, for example, a wire cable connected to the connector 114. Power may be input from a power source or a battery (not sillustrated) may be charged through the wire cable connected to the connector 114.

The GPS module 115 may receive electromagnetic waves from a plurality of GPS satellites (not illustrated) that orbit around the Earth, and may calculate a location of the multi-display apparatus 100 using a time of arrival from the GPS satellites (not illustrated) to the multi-display apparatus 100 and GPS parameters.

The broadcasting communication module 116, under the control of the controller 130, may receive broadcast signals (for example, TV broadcast signals, radio broadcast signals, and/or data broadcast signals) and/or additional broadcast information (for example, electronic program guide (EPG) and/or electronic service guide (ESG)) from a broadcasting station through a broadcast communication antenna (not illustrated).

The multimedia part 120 may include, for example, an audio playback module 121 and a video playback module 122.

The audio playback module 121, under the control of the controller 130, may play back a stored or received digital audio file (for example, a file having an extension of mp3, wma, ogg, or wav). A moving image playback module (not illustrated), under the control of the controller 130, may play back a stored or received digital moving image file (for example, a file having an extension of mpeg, mpg, mp4, avi, mov, or mkv). The audio playback module 121 or the moving image playback module of the multimedia module 120 may be included in the controller 130.

The video playback module 122 may support various codecs to be able to play back a digital video file. That is, the video playback module 122, for example, may play back a video file by means of a codec which is pre-stored according to a codec format of the video file to be played back.

The controller 130 may include the CPU 131, the ROM 137, which may store a control program that controls the multi-display apparatus 100, and the RAM 135, which may store a signal or data input from an external apparatus or may be used as a memory region for a task performed in the multi-display apparatus 100. The CPU 131 may include, for example, at least one of a single core processor, a multi core processor, a triple core processor, and a quad core processor. The CPU 131, the ROM 137, and the RAM 135 may be connected to one another through the system bus 139.

The controller 130 may control the communicator 110, the multimedia part 120, the photographer 140, the sensor 150, the inputter/outputter 160, the storage 170, the power supply 180, and the first and second displays 190a and 190b.

The photographer 140 may include, for example, at least one of a first camera 141 and a second camera 142. Although only the first camera 141 and the second camera 142 are illustrated in FIG. 8, an additional camera may be included according to an exemplary embodiment of the present invention.

The photographer 140, under the control of the controller 130, may include at least one of the first camera 141 and the second camera 142 configured to shoot at least one of a still image and a moving image. According to circumstances, the photographer 140 may further include additional cameras. At least one of the first camera 141 and the second camera 142 may be provided in a housing of the multi-display apparatus 100 or may be configured to be connected to the multi-display apparatus 100 using a separate connecting means. At least one of the first camera 141 and the second camera 142 may include an auxiliary light source (for example, a flash (not illustrated)) to provide necessary light for photographing.

According to an exemplary embodiment of the present invention, the first camera 141 may be disposed on a front surface of the multi-display apparatus 100, and the second camera 142 may be disposed on a rear surface of the multi-display apparatus 100. According to an exemplary embodiment of the present invention, the first camera 141 and the second camera 142 may be adjacent to each other (for example, a gap between the first camera 141 and the second camera 142 may be larger than 1cm but smaller than 8cm) to shoot at least one of a 3D still image and a 3D moving image. According to an exemplary embodiment of the present invention, the first camera 141 may be placed on a first panel and the second camera 142 may be placed on a second panel.

The photographer 140 may transmit an image, which may be photographed through at least one of the first camera 141 and the second camera 142, to the controller 130. The controller 130 may detect a user's motion or shape by analyzing the image, and may perform a control operation that corresponds to the sensed motion or shape. For example, the user's motion may refer to a user's hand motion sensed by the first or second camera 141 or 142. The user's shape may refer to a facial shape of the user sensed by the first or second camera 141 or 142.

According to an exemplary embodiment of the present invention, the multi-display apparatus 100 may detect a user's motion using other means such as, for example, an infrared ray sensor, and may execute or control an application in response to the motion.

The sensor 150 may include, for example, a touch sensor 151, a geomagnetic sensor 152, an acceleration sensor 153, a hinge sensor 154, and/or a proximity sensor 155.

The touch sensor 151 may be a sensor that may sense a touch by a user on the multi-display 190. The touch sensor 151 may be implemented as a capacitive touch sensor or a piezoelectric touch sensor, according to how a user's touch is sensed. The touch sensor 151, according to an exemplary embodiment of the present invention, may be implemented in two methods. The touch sensor 151 may be included in the display 390 along with the display panel 360. This has been described above in detail.

The touch sensor 151 may be a sensor that may sense a user inputting an instruction displayed on a display screen by pressing at least one of the first and second displays 190a and 190b with user's body such as, for example, a finger, or another inputting means which may be sensed. The touch sensor 151 may use a change in an amount of capacitance, a change in an amount of resistance, and/or a change in an amount of light.

The geomagnetic sensor 152 may sense an azimuth by detecting, for example, terrestrial magnetism. Accordingly, the geomagnetic sensor 152 may recognize an orientation of the multi-display apparatus 100. The acceleration sensor 153 may process an output signal and may measure a dynamic force of an object such as, for example, acceleration, vibration, and shock, and may detect a change in a moving speed of the multi-display apparatus 100 or a magnitude of a force. The hinge sensor 154 may detect an angle or motion of the hinge 135. The proximity sensor 155 may detect whether or not an object approaches the multi-display apparatus 100.

Although not illustrated in FIG. 8, the sensor 150 of the multi-display apparatus 100 may further include, for example, at least one of a gravity sensor, which may sense in which direction gravity is acting, a gyro sensor, which may recognize six degrees of motion in total by including rotational motion to an existing acceleration sensor, an orientation sensor, which may automatically sense horizontal and vertical frames of a content such as, for example, an image and may automatically rotate and arrange the content, an illumination sensor, which may sense an amount of ambient light around the multi-display apparatus 100, an altitude sensor, which may measure atmospheric pressure, an RGB sensor, which may sense a color of an object, a distance sensor, which may measure a distance using ultrasonic wave and/or infrared rays, and a Hall effect sensor, which may change a voltage according to a magnitude of a magnetic field.

The sensor 150 may detect a state of each individual sensor, may generate a signal corresponding to the detected state, and may transmit the signal to the controller 130. Individual sensors of the sensor 150 may be added or removed according to performance needs of the multi-display apparatus 100.

The inputter/outputter 160 may include, for example, a button 161, a microphone 162, a speaker 163, and a vibration motor 164.

At least one button 161 may be formed on a front surface, a side surface, and/or a rear surface of a housing of the multi-display apparatus 100 in the form, for example, of a push type or a touch type, and may include at least one of a power/lock button, a volume control button, a menu button, a home button, a back button, and a search button.

The microphone 162, under the control of the controller 130, may receive a voice or a sound and may generate an electric signal.

The speaker 163, under the control of the controller 130, may output a sound that corresponds to various signals of, for example, the cellular communication module 111, the wireless LAN module 112, the short-range communication module 113, the multimedia part 120, and/or the photographer 140 (for example, a radio signal, a broadcast signal, a digital audio file, a digital moving image file, and/or photographing) to the outside of the multi-display apparatus 100.

The speaker 163 may output a sound that corresponds to a function of the multi-display apparatus 100 (for example, a button sound or a ringtone that corresponds to calling). A single speaker 163 or a plurality of speakers 163 may be formed at an appropriate location or locations of the housing the multi-display apparatus 100. For example, the speaker 163 may include an internal speaker module, which may be formed at a location that may be in the proximity to the user's ears when the user is on the phone, and an external speaker module that may have a higher output suitable to reproduce audio/video files or viewing a broadcast, and may be disposed at an appropriate location of the housing of the multi-display apparatus 100.

The vibration motor 164, under the control of the controller 130, may convert an electric signal into a mechanical vibration. For example, when a voice call is received from another apparatus (not illustrated), the multi-display apparatus 100, which may be in a vibration mode, may drive the vibration motor 164. A single vibration motor 164 or a plurality of vibration motors 164 may be disposed in the housing of the multi-display apparatus 100. The vibration motor 164 may be operated in response to at least one of a user's touch gesture, sensed on at least one of the first and second displays 190a and 190b, and a continuous touch motion sensed on at least one of the first and second displays 190a and 190b.

The storage 170 may store various multimedia data, which may be processed by the controller 130, content data, and data that may be received from an external source.

For example, the storage 170, under the control of the controller 130, may store signals, information, or data, which may be input/output according to the operations of, for example, the cellular communication module 111, the wireless LAN module 112, the short-range communication module 113, the connector 114, the GPS module 115, the multimedia part 120, the photographer 140, the sensor 150, the inputter/outputter 160, and the first and second displays 190a and 190b.

The storage 170 may store control programs configured to control the multi-display apparatus 100 or the controller 130, and applications. Hereinafter, the term "storage" may include, for example, a memory card, ROM, and/or RAM. Also, the storage 170 may include, for example, a non-volatile memory, a volatile memory, a hard disk drive (HDD), or a solid state drive (SSD).

The power supply 180 may supply power to be used in the multi-display apparatus 100. The power supply 180 may be implemented, for example, by a rechargeable battery, and may further include a voltage converter to convert power from an external power source and to supply it to a rechargeable battery.

The power supply 180, under the power control of the controller 130, may supply power to the multi-display apparatus 100 in various modes such as, for example, a maximum performance mode, a general mode, a power saving mode, and a standby mode.

The first and second displays 190a and 190b may be configured to be connected to each other by means of a hinge (not illustrated). The first and second displays 190a and 190b, under the control of the controller 130, may display multimedia contents, images, moving images, and/or texts.

The first display 190a and the second display 190b may be physically separated from each other. Display screens that may be displayed on the first display 190a and on the second display 190b may be controlled independently. For example, a resolution of the first display 190a and a resolution of the second display 190b may be individually set. Also, screen enlargement, rotation, screen movement, and screen split, for example, of the first display 190a and the second display 190b may be individually performed.

The first display 190a and the second display 190b may display a single display screen using a virtual integrated frame buffer.

The first and second displays 190a and 190b may be display apparatuses that may display various applications executable by the controller 130 (for example, call, data transfer, broadcasting, and camera) and may provide user interfaces that correspond to the applications. The first and second displays 190a and 190b may be implemented, for example, by using a touch screen, and may receive input of at least one touch gesture through a user's body (for example, fingers including a thumb) or an inputting means that may be sensed (for example, a stylus pen).

Such a user interface may include, for example, a predetermined touch region, a soft key, and/or a soft menu. An electronic signal, that corresponds to at least one touch gesture that may be input through the user interface, may be transmitted to the first and second display 190a and 190b through an LCD controller (not illustrated). Also, the first and second displays 190a and 190b may sense a continuous touch motion and may transmit an electronic signal, that corresponds to a continuous or discontinuous touch motion, to the LCD controller.

The first and second displays 190a and 190b may be implemented, for example, by a resistive method, a capacitive method, an infrared rays method, and/or an acoustic wave method.

The first and second displays 190a and 190b may convert a signal that corresponds to a user operation, which may be sensed through the touch sensor 151, into a digital signal (for example, X and Y coordinates), and may transmit the digital signal to the controller 130. The controller 130 may perform a control operation that corresponds to the user operation, which may be input through the first and second displays 190a and 190b by using the received digital signal.

For example, the controller 130 may select a soft key, which may be displayed on at least one of the first and second displays 190a and 190b or may, in response to an operation by the user, execute an application that corresponds to the soft key.

The above-described user gesture is not limited to direct contact of the user's body or to a touch inputting means with the first and second displays 190a and 190b, and may be made by a method that does not involve contact. Sensitivity to an operation by a user that may be detectable by at least one of the first and second displays 190a and 190b may be changed according to performance needs or a configuration of the multi-display apparatus 100.

The controller 130 may change screens that may be displayed on at least one of the first and second displays 190a and 190b according to, for example, various touch gestures on at least one of the first and second displays 190a and 190b. For example, the controller 130 may display web pages by executing a web browser program. Hereinafter, various types of touch gestures are explained.

The touch gesture, according to an exemplary embodiment of the present invention, may include all kinds of user gestures that may be sensed by the multi-display apparatus 100 by at least one of directly contacting a touch screen and approaching the touch screen. For example, the touch gesture may be an operation by a user of selecting a single position or a plurality of continuous positions on the touch screen using the user's finger of at least one of the left and right hands (for example, an index finger), the user's thumb, or an object that may be sensed by the touch screen (for example, a stylus pen).

The touch gestures are explained in detail with reference to the following tables.

**[Table 1]**

| Type | | Mark |
|---|---|---|
| Single Finger Gesture | Tap | 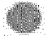 |
| | Touch & Hold | 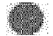 |
| | Double Tap | 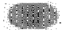 |
| | Drag | 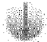 |
| | Drag & Drop | 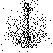 |
| | Flick | 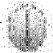 |

Table 1 illustrates marks associated with types of gestures that may be made using a single finger.

Referring to table 1, the types of gestures that may be made using a single finger may include, for example, a tap, a touch & hold, a double tap, a drag, a drag & drop, and a flick. The tap may be an operation by a user of touching the touch screen slightly and then raising the user's finger. The touch & hold may be an operation by a user of touching the touch screen and maintaining contact with the touch screen for a relatively long time. The double tap may be an operation by a user of tapping the touch screen twice quickly. The drag may be an operation by a user of touching the touch screen with a finger and moving the finger in a direction while maintaining contact with the touch screen, and the drag & drop may be an operation by a user of touching an object on the touch screen and simulating dragging the object from one position to another position. The flick may be an operation by a user of rapidly dragging an object on the touch screen.

**[Table 2]**

| | | |
|---|---|---|
| Type | | Mark |
| Two Finger Gesture | Two finger Tap | 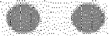 |
| | Touch & Spread | 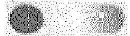 |
| | Pinch Out | 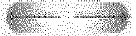 |
| | Pinch In | 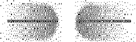 |
| | Two finger Drag | 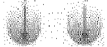 |
| | Cross Two Finger | 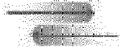 |
| | Touch & Rotate | 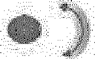 |

Table 2 illustrates marks associated with types of gestures that may be made using two fingers.

Referring to table 2, the types of gestures that may be made using two fingers may include, for example, a two finger tap, a touch & spread, a pinch-out, a pinch-in, a two finger drag, a cross two fingers, and a touch & rotate. The two finger tap may be an operation by a user of tapping with two fingers simultaneously. The touch & spread may be an operation by a user of pressing the touch screen with two fingers simultaneously and moving only one finger in a straight line without moving the other finger. The pinch-out may be an operation by a user of touching the touch screen with two fingers simultaneously and then moving the two fingers further apart. The pinch-in may be an operation by a user of touching the touch screen with two fingers simultaneously and then moving the two fingers closer together. The two finger drag may be an operation by a user of dragging with two fingers in the same direction. The cross two fingers may be an operation by a user of dragging with two fingers close together, crossing the two fingers, and then dragging further apart. Finally, the touch & rotate may be an operation by a user of touching the touch screen with one finger and maintaining contact with the touch screen (touch & hold), and touching with another finger and rotating it about the fixed one finger while still maintaining contact with the touch screen.

**[Table 3]**

| Type | | Mark |
|---|---|---|
| Multi-Finger Gesture | Three finger touch | 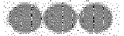 |
| | Four finger touch | 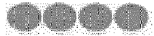 |
| | Five finger touch | 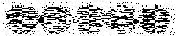 |
| Palm | Palm | 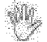 |

Table 3 illustrates marks associated with types of gestures that may be made using three or more fingers, and with a type of gesture that may be made using the user's palm.

Referring to table 3, the types of gestures that may be made using three or more fingers may include, for example, a three finger touch, a four finger touch, and a five finger touch. Also, gestures such as a tap, a drag, and a rotate may be performed using three or more fingers as described above and illustrated in tables 1 and 2.

When one of the above-described various touch gestures is recognized, the controller 130 may perform an operation that corresponds to the touch gesture. For example, the controller 130 may execute an application, a widget, or a web browser stored in the storage 170, and may display an execution screen thereof on at least one of the first and second displays 190a and 190b.

The bodies of the multi-display apparatus 100 may be connected to each other by means of the hinge 185 in the above-described exemplary embodiments of the present invention, but alternatively the bodies may be connected to each other by means of a flexible connector instead of the hinge 185.

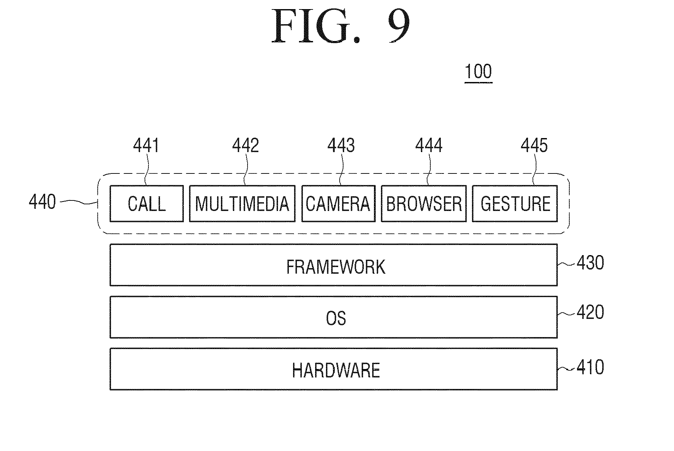

FIG. 9 illustrates a system hierarchy of the multi-display apparatus 100 according to an exemplary embodiment of the present invention. The multi-display apparatus 100 may include hardware 410, an operating system (OS) 420, a framework 430, and an application layer 440 that may include a variety of software such as, for example, a call application 441, a multimedia application 442, a camera application 443, a browser application 444, and/or a gesture recognition application 445.

The hardware 410 may include various elements illustrated in FIG. 8.

The OS 420 may control an overall operation of the hardware 410 and may manage the hardware 410. That is, the OS 420 may be a layer that manages the hardware and performs a basic function such as, for example, memory and security. The OS 420 may control the operation of the multi-display apparatus 100 by driving modules such as, for example, a display driver (not illustrated) to drive a multi-display, a communication driver (not illustrated) to exchange data, a camera driver (not illustrated) to drive a camera, an audio driver (not illustrated) to drive an audio part, and a power supply manager (not illustrated). The framework layer 430 may exist as an upper layer of the OS 420. The framework 430 may connect the application layer 440 and the OS layer 420. That is, the framework layer 430 may include, for example, a location manager (not illustrated), a notification manager (not illustrated), and/or a frame buffer (not illustrated) to display an image on a touch screen.

The application layer 440 may exist as an upper layer of the framework layer 430 to perform various functions of the multi-display apparatus 100. For example, the application layer 440 may include various applications such as, for example, the call application 441, the multimedia application 442, the camera application 443, the browser application 444, and the gesture recognition application 445.

Hereinafter, an exterior of the multi-display apparatus 100, according to an exemplary embodiment of the present invention, is explained with reference to the accompanying perspective views.

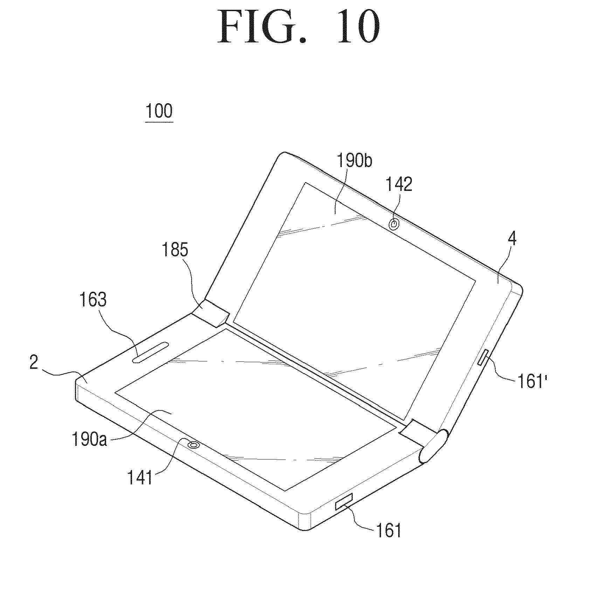

FIG. 10 is a perspective view that illustrates the multi-display apparatus 100 in detail according to an exemplary embodiment of the present invention. In FIG. 10, the multi-display apparatus 100 may include two displays 190a and 190b that may be connected to each other by means of the hinge 185.

Referring to FIG. 10, the multi-display apparatus 100 may include first and second bodies 2 and 4, which may be connected to each other by means of the hinge 185 and may be movable relative to each other. The first display 190a may be provided on one surface of the first body 2, and at least one physical button 161 may be provided on one side surface of the first body 2. The second display 190b may be provided on one surface of the second body 4, and at least one physical button 161' may be provided on one side surface of the second body 4. The physical buttons 161 and 161' may include at least one of a push button and a touch button. In an exemplary embodiment of the present invention, the first display 190a, which may be provided on the first body 2, may include a speaker (not illustrated) and/or a microphone (not illustrated) and may be operated as a main screen, and the second display 190b, which may be provided on the second body 4 and may be operated as a sub screen. In an exemplary embodiment of the present invention, the first body 2 may include the first camera 141 and the second body 4 may include the second camera 142.

When the multi-display apparatus 100 is positioned as illustrated in FIG. 10, the first and second displays 190a and 190b may display screens in a landscape mode.

When the multi-display apparatus 100 is configured to have the first body 2 and the second body 4 connected to each other by means of the hinge 185 and to move relative to each other, the multi-display apparatus 100 may be any device like, for example, a mobile phone, a laptop computer, a tablet PC, and/or a portable multimedia player (PMP). Although the first display 190a and the second display 190b may be provided, respectively, on the first body 2 and the second body 4, the following explanation may be applied to a device in which a touch screen display is provided on only one of the two panels. Also, at least one of the function buttons 161 and 161' on the side surfaces of the first body 2 and the second body 4 may be omitted. Furthermore, although the first body 2 and the second body 4 may be connected to each other by means of the hinge 185, they also may be connected to each other by means of another element (not illustrated) such that, for example, the first body 2 and the second body 4 may be folded in relation to each other.

As shown in FIG. 10, the hinge 185 may include, for example, two hinges, which may be formed at upper and lower edges of a connection portion between the first body 2 and the second body 4. Also, the hinge 185, for example, may be a single hinge, which may be disposed on the entire connection portion between the first body 2 and the second body 4.

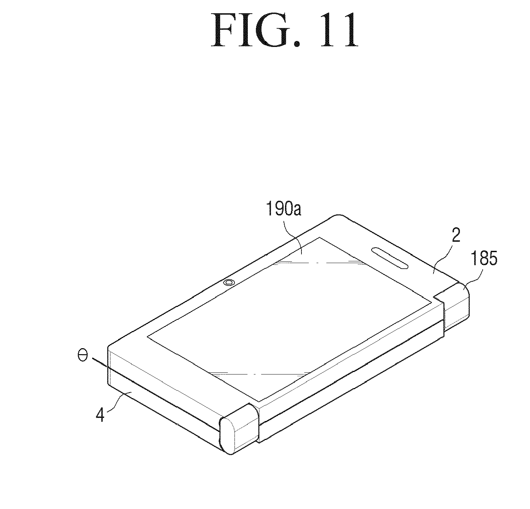

The multi-display apparatus 100 may include a display apparatus, which may include the first display 190a and the second display 19b, which may be physically or graphically separated from each other, and may support various screen modes as illustrated in FIGS. 11 to 15 using the two displays 190a and 190b.

FIGS. 11 to 15 are perspective views that illustrate examples of screen modes configured to vary according to a relative angle between the first body 2 and the second body 4 of the multi display apparatus 100 according to an exemplary embodiment of the present invention.

A relative angle (θ) may be an angle of rotation of the second body 4 with respect to the first body 2 in, for example, a predetermined direction (for example, a counter clockwise direction).
For example, the relative angle (θ) may be detected using the hinge sensor 154, which may be embedded in the hinge 185. The hinge sensor 154 may include at least one of a Hall effect sensor, a pressure sensor, an inductive sensor, an electric contact sensor, and/or an optical sensor, and may recognize the relative angle (θ) by detecting a movement and a relative location of the hinge 185.

Also, the relative angle (θ) may be recognized by the geomagnetic sensor 152 or the acceleration sensor 153 by detecting locations of the first and second bodies 2 and 4, in addition to the hinge sensor 154.

FIG. 11 is a perspective view that illustrates an example in which the multi-display apparatus 100 is in a folded configuration. As shown in FIG. 11, the first body 2 and the second body 4 may be in contact with each other with the first and second displays 190a and 190b on, respectively, the first body 2 and the second body 4 facing in opposite directions. That is, the second display 190b may be positioned on the other side of the first display 190a. When the user views the first display 190a, the user may not directly view the second display 190b since it is placed on the other side of the first display 190a. In this configuration, the user may view only one display.

At this time, the relative angle (θ) is 0°. A state in which the first and second displays 190a and 190b may be folded as illustrated in FIG. 11 may be called a single mode. For example, when the relative angle (θ) between the first and second bodies 2 and 4 is between 0° and 60°, the multi-display apparatus 100 may be recognized as being in the single mode. The single mode may be usefully used when the multi-display apparatus 100 is not in use and/or is in a locked state or may be used in a call application. In the single mode, the first display 190a on a front surface may display, for example, a task screen of at least one application, and the second display 190b on a rear surface may be turned off. Some applications may turn on the second display 190b on the rear surface by using an option menu. Since the user may view only one display screen in the single mode, the controller 130 may control only one display. That is, the controller 130 may transmit a control signal with regard to the display that the user may be currently viewing. By not transmitting a separate control signal and a separate data signal to the display that is not being controlled by the controller 130, power consumption may be reduced.

At this time, the display that does not receive a control signal and a data signal may be operated in a sleep mode, and may be released from the sleep mode when a signal to disable the sleep mode is applied from the controller 130 or when the user changes the orientation of the multi-display apparatus 100 and views the display that is or has been in the sleep mode.

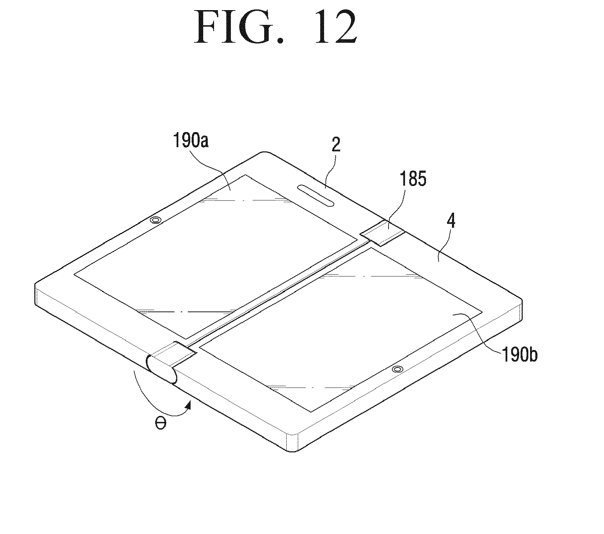

FIG. 12 is a perspective view that illustrates an example in which the first body 2 is substantially in the same plane as the second body 4, that is, the multi-display apparatus 100 is in an unfolded configuration. In this state, the relative angle (θ) may be 180°, or may approach 180° within a predetermined range. Hereinafter, this state may be referred to as an expanding mode. For example, when the angle between the first and second bodies 2 and 4 ranges from 175° to 185°, the multi-display apparatus 100 may determine that the first and second bodies 2 and 4 are unfolded. In the expanding mode, two task screens of two applications, for example, may be displayed, respectively, on the displays 190a and 190b. One screen of one application may be displayed on the two displays 190a and 190b, or two task screens of one application may be displayed on the two displays 190a and 190b. No application may be displayed on one of the displays or a defaulted home screen may be displayed. The expanding mode may be usefully used, for example, as an E-book, a moving image player application, and/or a web browsing screen.

The controller 130 may display a first web browsing screen on the first display 190a, and may display a second web browsing screen on the second display 190b. At this time, the first web browsing screen and the second web browsing screen may have a relationship, and a third web browsing screen, which may have a relationship with the second web browsing screen, may be displayed on the first display 190a, and a fourth web browsing screen, which may have a relationship with the third web browsing screen, may be displayed on the second display 190b.

The controller 130 may alternately display the web browsing screens which may be displayed on the first display 190a and the second display 190b, and may toggle between a plurality of web browsing screens displayed on each of the displays 190a and 190b. Also, the controller 130 may display the web browsing screen, which may be displayed on the first display 190a, and the web browsing screen, which may be displayed on the second display 190b, in different layouts.

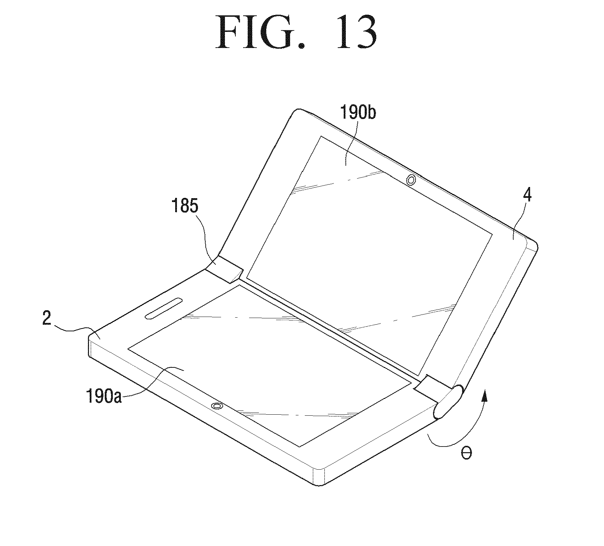

FIG. 13 is a perspective view that illustrates an example in which the relative angle (θ) of the second body 4 to the first body 2 exceeds 180°, that is, the two displays 190a and 190b are slightly folded in. In the following descriptions, this state may be referred to as a tool kit mode. For example, when the relative angle (θ) between the first and second bodies 2 and 4 is between 185° and 265°, the tool kit mode may be recognized. The tool kit mode may refer to a state in which the two displays 190a and 190b may be slightly folded in and may be useful when the multi-display apparatus 100 is used like a laptop computer. For example, a task screen may be displayed on one display 190a, whereas various task environments, such as a tool of a keyboard, may be provided on the other display 190b.

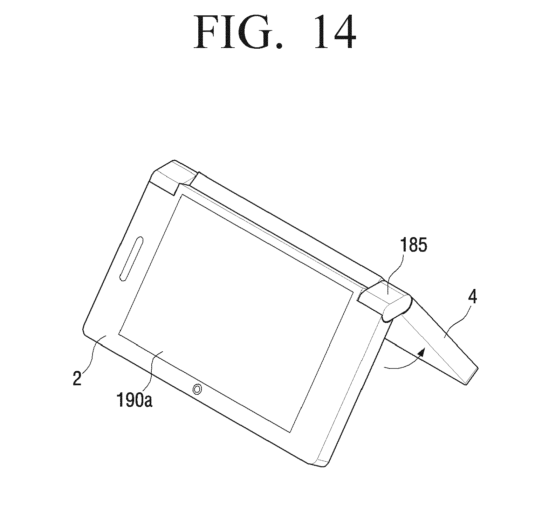

FIG. 14 is a perspective view that illustrates a state in which the relative angle (θ) of the second body 4 to the first body 2 is less than 180°, that is, the two displays 190a and 190b are almost folded out to face each other in opposite directions. This state may be called a standing mode. For example, when the relative angle (θ) between the first and second bodies 2 and 4 is between 30° and 90°, the multi-display apparatus 100 may be recognized as being in the standing mode. In the standing mode, the two displays 190a and 190b may be folded out to face outwardly and the multi-display apparatus 100 may be placed on a bottom in a triangular shape. The standing mode may be useful when the multi-display apparatus 100 is charged or used as a digital clock or album, or when the user, for example, views a private broadcast, a movie, and/or a moving image for a relatively long time. According to an exemplary embodiment, the standing mode may be applied to an application that requires collaboration between two or more uses or interaction, for example, for a video conference or a collaborative game. Some applications may display a task screen on the first display 190a of the front surface in the standing mode and may turn off the second display 190b of the rear surface. Some applications may use an option menu and may turn on the second display 190b of the rear surface.

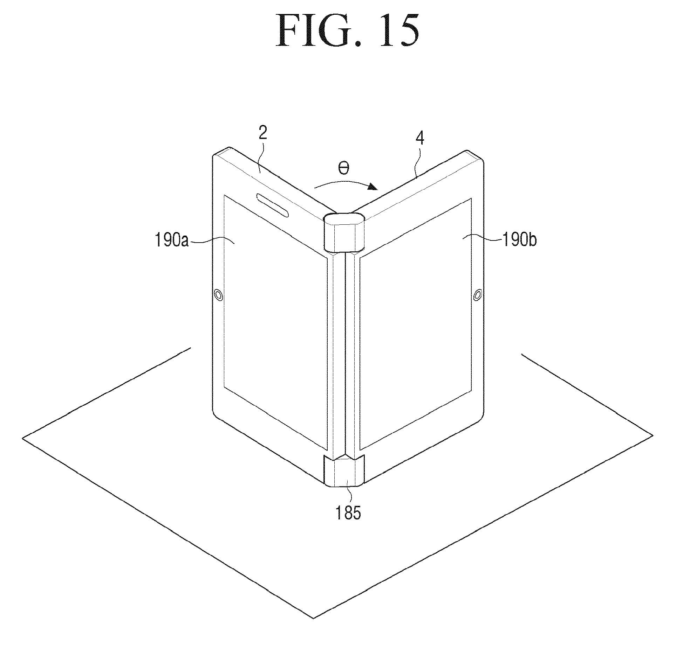

FIG. 15 is a perspective view that illustrates another exemplary embodiment of the standing mode of FIG. 14, and illustrates the multi-display apparatus 100 placed upright such that a part of the hinge 185 is in contact with a bottom. This state may be referred to as a portrait view mode. In the portrait view mode, the relative angle (θ) between the first and second bodies 2 and 4 may be between 30° and 90°, and, when it is determined that the multi-display apparatus 100 is placed upright by means of, for example, the acceleration sensor, the portrait view mode may be recognized.
For example, the acceleration sensor may sense a rotation of the multi-display apparatus 100. The acceleration sensor may sense a switch between the portrait view mode, in which the first and second displays 190a and 190b of the multi-display apparatus 100 may be positioned on the left and right sides, and a landscape view mode, in which the first and second displays 190a and 190b may be positoned on the upper and lower sides.

The portrait view mode may be applied to an application that has to provide different images to two or more users, for example, a video conference or a multi-moving image player.

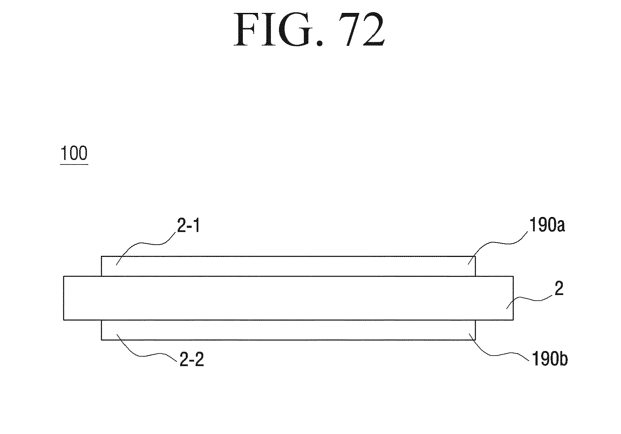

FIG. 72 illustrates an example of the multi-display apparatus 100 according to an exemplary embodiment of the present invention. Referring to FIG. 72, the multi-display apparatus 100, according to an exemplary embodiment of the present invention, may include the first body 2, which may have a first substantially planar surface 2-1 in which the first display 190a may be disposed, and a second substantially planar surface 2-2 in which the second display 190b may be disposed.

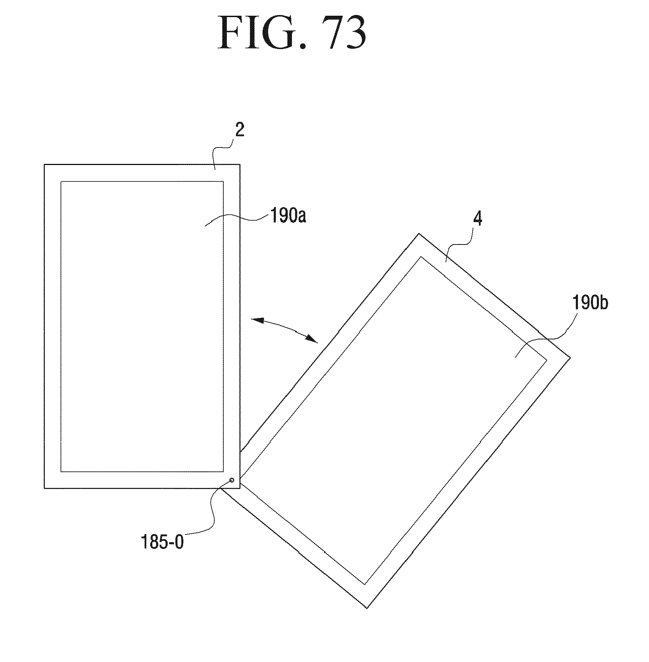

FIG. 73 illustrates an example of the multi-display apparatus 100 according to an exemplary embodiment of the present invention. Referring to FIG. 73, the multi-display apparatus 100, according to an exemplary embodiment of the present invention, may include the first body 2 having the first display 190a disposed therein, the second body 4 having the second display 190b disposed therein, and a hinge pin 185-0. The hinge pin 185-0 may couple the first body 2 and the second body 4 at, for example, a corner of each of the first body 2 and second body 4. The hinge pin 185-0 may be configured to support a pivot rotation of one of the first body 2 and the second body 4 with respect to the other of the first body 2 and the second body 4.

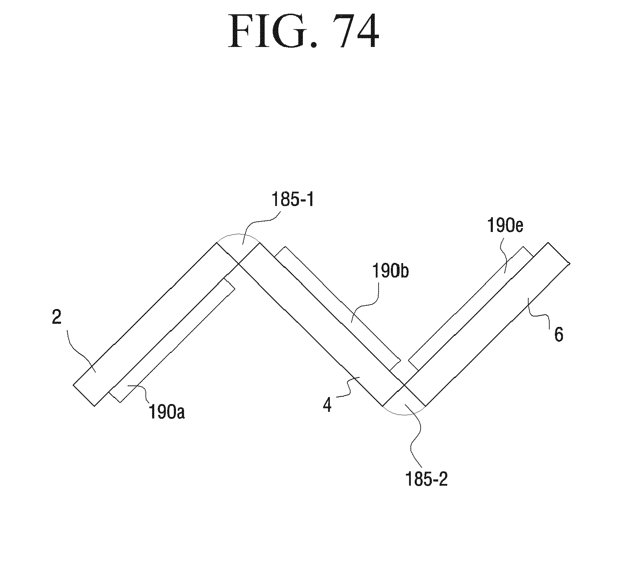

FIG. 74 illustrates an example of the multi-display apparatus 100 according to an exemplary embodiment of the present invention. Referring to FIG. 74, the multi-display apparatus 100, according to an exemplary embodiment of the present invention, may include the first body 2 having the first display 190a disposed therein, the second body 4 having the second display 190b disposed therein, a third body 6 having a third display 190e disposed therein, a first hinge 185-1, and a second hinge 185-2. The first hinge 185-1 may couple the first body 2 to the second body 4 in the same or a similar manner as does the hinge 185 illustrated at FIG. 10. The second hinge 185-2 may couple the second body 4 to the third body 6 in the same or a similar manner as does the hinge 185 illustrated at FIG. 10.

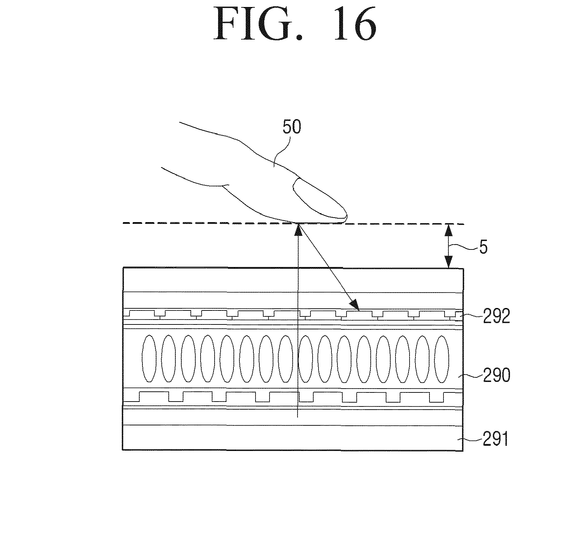

FIG. 16 is a cross sectional view that illustrates an example of a method of sensing hovering in a multi-display apparatus.

The user may input a control command to the multi-display apparatus 100 in a hovering method using, for example, a proximity sensor. The hovering may be recognized, for example, as a single touch gesture when the user does not directly touch the touch screen and a motion is recognized within a predetermined effective recognition range or space.

Referring to FIG. 16, each of the first and second displays 190a and 190b may include a display panel 290, an infrared ray (IR) source 291 configured to recognize hovering, and an IR sensor 292. The IR source 291 may emit infrared rays to a surface of the display panel 290. For example, the IR source 291 may be disposed on the lower portion of the display panel 290, which may display an image, and may emit infrared rays to the surface of the display panel 290. There may be a predetermined region in which the approach of a user object 50 may be recognized on the surface of the display panel 290. This region may be an effective recognition region 5 in which hovering may be recognized.

The user object 50 may refer to a means for inputting a command to the multi-display apparatus 100, and may be, for example, a part of the body, such as a finger, or an input pen.

When the user object 50 enters the effective recognition region 5, the IR sensor 292 may sense infrared rays reflected from the approaching user object 50 and may generate an IR scan image (not illustrated). For example, the IR sensor 292 may generate the IR scan image that corresponds to the infrared rays reflected from the approaching user object 50 using a plurality of IR sensing elements (not illustrated), which may be arranged in an array form. The multi-display apparatus 100 may sense hovering input using the generated IR scan image.

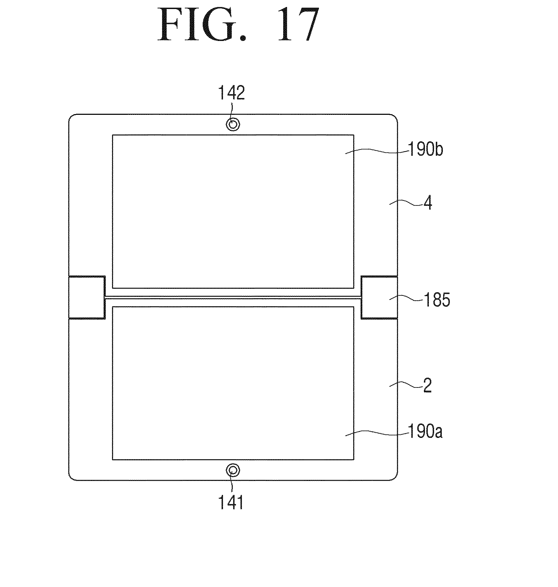

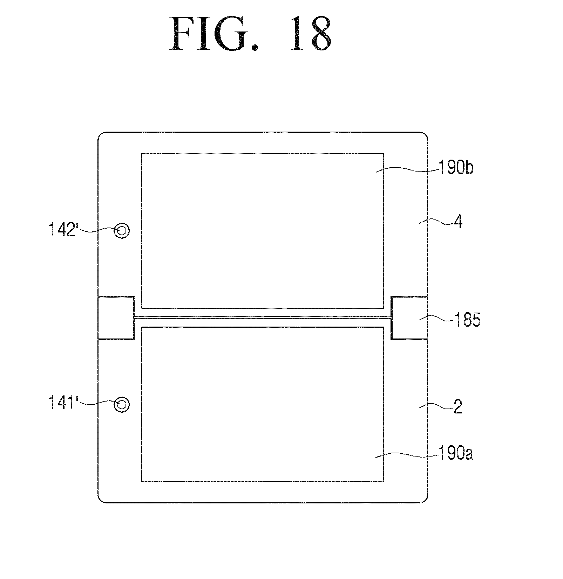

FIGS. 17 and 18 illustrate placements of two cameras of the multi-display apparatus 100 according to exemplary embodiments of the present invention. FIGS. 17 and 18 illustrate the multi-display apparatus 100 viewed from the front. FIGS. 17 and 18 illustrate placement of the cameras and thus omit many parts of the multi-display apparatus 100 other than the cameras.

Referring to FIG. 17, the multi-display apparatus 100 may include the first body 2 and the second body 4, and the first body 2 may include the first display 190a and the second body 4 may include the second display 190b. The first body 2 and the second body 4 may be connected to each other by means of the hinge 185 and may be movable relative to each other. A first camera 141 may be placed at a center of a border region opposite the hinge 185 from among border regions of the first body 2. A second camera 142 may be placed at a center of a border region opposite the hinge 185 from among border regions of the second body 4.

Placement of the cameras is explained with reference to FIG. 18. For the sake of easy understanding, explantions are made with reference to a direction in which the user faces the multi-display apparatus 100. A first camera 141' may be placed at a center surface of a left border region of the first body 2, and a second camera 142' may be placed at a center surface of a left border region of the second body 4. In another exemplary embodiment of the present invention, the first and second cameras 141' and 142' may be placed, respectively, at center surfaces of right border regions of the first and second bodies 2 and 4. In an exemplary embodiment of the present invention, the first and second cameras 141' and 142' may be placed, respectively, at corner regions of the first and second bodies 2 and 4. The multi-display apparatus 100 may be used in the horizontal direction as illustrated in FIG. 18, and may be displayed in a vertical direction.

Hereinafter, explanation is made with regard to a web browser being executed on the first display 190a and the second display 190b and web browsing screens being displayed on the first display 190a and the second display 190b according to various exemplary embodiments of the present invention.

The web browser recited herein may refer to application software that may be interlocked with hypertext markup language (HTML) documents or files that may perform interactive communication in a web server, and may output the HTML documents or files. The web browser may be one of the representative HTTP user agents. All web browsers that may be useable in a mobile device may be applied, and, for convenience of explanation, the web browser may be limited to some web browsers in the following exemplary embodiments of the present invention. However, the present invention is not limited to the web browsers included in the following explanations.

Hereinafter, displaying a web browsing screen in a multi-display apparatus according to various exemplary embodiments of the present invention is explained.

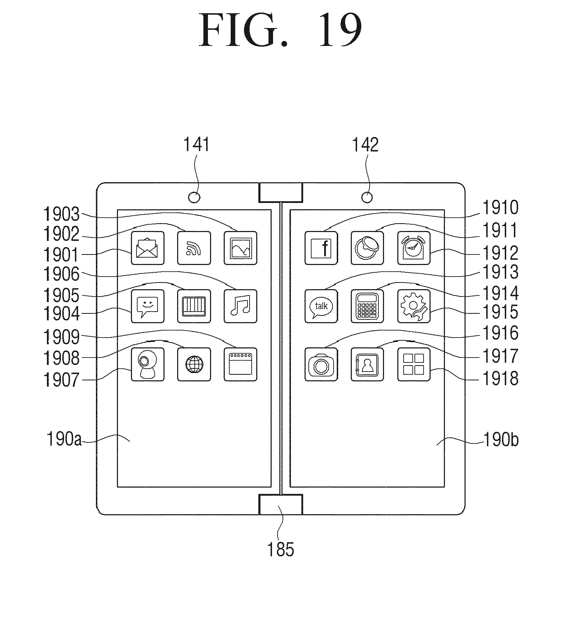

First, FIGS. 19 to 23 illustrate various examples of an initial operation of executing a web browser in a multi-display apparatus and displaying a web browsing screen.

FIG. 19 illustrates an example of a screen of the multi-display apparatus 100 on which a plurality of icons may be displayed according to an exemplary embodiment of the present invention.

As described above, the multi-display apparatus 100 may include two or more displays, but in FIG. 19, for convenience of explanation, the multi-display apparatus 100 includes two displays such as the first display 190a and the second display 190b.

The first display 190a and the second display 190b may be connected to each other by means of the hinge 185. Hereinafter, the hinge 185 may connect the first display 190a and the second display 190b to each other at an upper portion and a lower portion of the multi-display apparatus 100. However, the hinge 185 may connect one surface of the first display 190a and one surface of the second display 190b to each other. The configuration and location of the hinge 185 may be variously modified. The first display 190a and the second display 190b may refer to display panels, which may be physically separated from each other. The first camera 141 may be placed in the first body 2 that includes the first display 190a, and the second camera 142 may be placed in the second body 4 that includes the second display 190b.

When the multi-display apparatus 100 is turned on and is initialized, the controller 130 may display a home screen on the first and second displays 190a and 190b. As shown in FIG. 19, icons 1901 to 1918 for various functions supported by the multi-display apparatus 100 and applications installed in the multi-display apparatus 100 may be displayed on the home screen. The controller 130 may perform a function that corresponds to an icon that may be selected on the home screen, or may execute an application.

The home screen may be split and displayed on the first and second displays 190a and 190b. Such a home screen may be stored in the above-described frame buffer in a bitmap image file (BMP) format, and may be integrally displayed on the first and second displays 190a and 190b. Accordingly, an appropriate number of icons 1901 to 1918 may be distributed and displayed on the first and second displays 190a and 190b.

In FIG. 19, the home screen may be split and displayed on the first and second displays 190a and 190b. However, according to an exemplary embodiment of the present invention, the home screen may be displayed on one display and an execution screen of a specific function may be displayed on the other display.

When the home screen is displayed on the first and second displays 190a and 190b and a screen that indicates execution of a new application is displayed, for example, on the second display 190b, the home screen displayed on the second display 190b may be overlaid with the execution screen of the new application. That is, a layer on which the home screen may be displayed may be different from a layer on which the application may be displayed, and the layer on which the home screen may be displayed may be lower than the layer on which the application may be displayed. Therefore, when an application is executed, the home screen may be overlaid with the execution screen of the application.

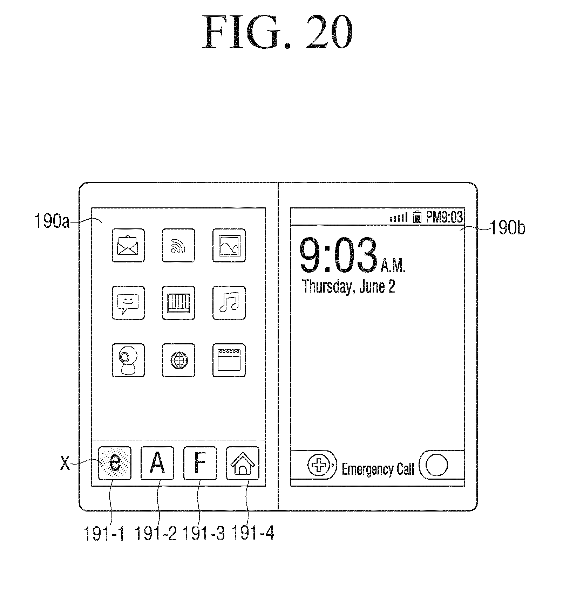

FIG. 20 illustrates an example of a home screen. FIG. 20 illustrates executing web browsing in the multi-display apparatus 100 according to an exemplary embodiment of the present invention. Referring to FIG. 20, when the multi-display apparatus 100 is turned on, an icon display screen may be displayed on the first display 190a and a screen that corresponds to a pre-stored user setting state may be displayed on the second display 190b. For example, when the user has a specific application or widget set, an execution screen of the application or widget may be displayed on the second display 190b.

In FIG. 20, an execution screen, which may include, for example, a time, a date, a day, an urgent calling button, a battery life information, and/or a communication reception state information, may be displayed as a part of the home screen along with the icon display screen. However, various widget screens, such as, for example, a schedule screen, a weather screen, and/or a search tool, may be displayed as a part of the home screen.

For example, menu icons 191-1, 191-2, 191-3, and 191-4 may be displayed on the home screen. The menu icons 191-1, 191-2, 191-3, and 191-4 may be icons that do not disappear and that may continue to be displayed even when the home screen page is turned over.

In FIG. 20, the web browser icon 191-1 may be provided as a menu icon. However, the web browser icon 191-1 may be displayed on the icon display screen as illustrated in FIG. 19. Also, the menu icons 191-1, 191-2, 191-3, and 191-4 may further include a hidden icon (not illustrated) that is not displayed on the screen.

Hereinafter, a process of executing web browsing using the multi-display apparatus 100 according to an exemplary embodiment of the present invention is explained.

When a user touches the web browser icon 191-1, a web browser may be executed. The method of executing the web browser may include pressing a specific button in addition to touching a corresponding icon. Also, the web browser may be executed by selecting the web browser icon using a motion gesture or a voice command.

When the web browser is executed, a web browsing screen may be generated and displayed according to the above-described various exemplary embodiments of the present invention. A number of web browsing screens that may be initially generated may vary according to an exemplary embodiment of the present invention.

According to an exemplary embodiment of the present invention, a single first web browsing screen may be displayed first and then a second web browsing screen may be displayed by touching the first web browsing screen. Accordingly, only a single web browsing screen, for example, may be displayed at first. The web browsing screen that may be initially displayed may be displayed on a certain screen of the multiple display screens, or may be displayed on all of the multiple display screens.

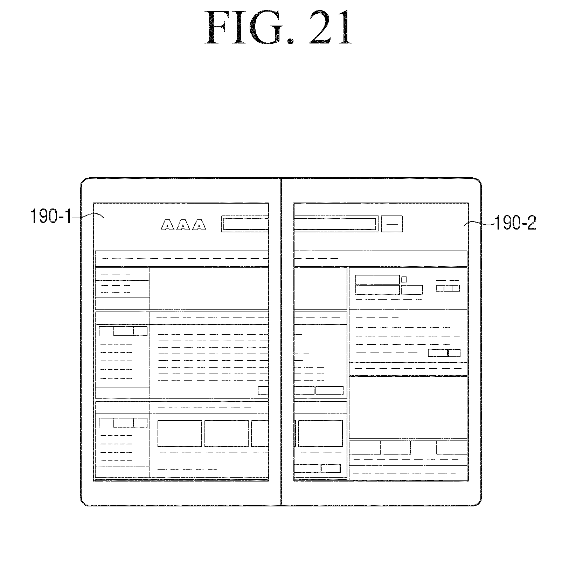

FIG. 21 illustrates a single first web browsing screen that may be displayed on both the first and second displays 190a and 190b. FIG. 21 illustrates an example of displaying a web browsing screen on first and second displays of a multi-display apparatus in full size. Referring to FIG. 21, the single first web browsing screen may be divided into two regions 190-1 and 190-2, and the first region 191-1 may be displayed on the first display 190a and the second region 191-1 may be displayed on the second display 190b.

In order to display the single first web browsing screen using the two displays 190a and 190b as illustrated in FIG. 21, the multi-display apparatus 100 may include two individual frame buffers 134a-1 and 134b-1 as illustrated in FIG. 3.

Also, the multi-display apparatus 100 may include a single integrated frame buffer 134-1 as illustrated in FIG. 4. In this case, for example, the controller 130 may display the single web browsing screen on the first and second displays 190a and 190b using the integrated frame buffer 134-1. That is, the controller 130 may store a single web browsing image in the integrated frame buffer 134-1, and may provide the single web browsing image to each display controller with reference to an address of an image frame of a portion to be output through the first display 190a and an address of an image frame of a portion to be output through the second display 190b. Each display controller may output image frame data according to the provided address such that the single web browsing screen may be displayed through the first and second displays 190a and 190b.

That is, the image frame of the whole web browsing screen stored in the integrated frame buffer 134-1 may be assigned a whole resolution of the first display 190a and the second display 190b. Under the control of the controller 130, the image frame that corresponds to the first region 190-1 may be output to the first display 190a and the image frame that corresponds to the second region 190-2 may be output to the second display 190b. In the method of using the integrated frame buffer 134-1, the display controller may provide the corresponding image frame to the corresponding display with reference to the address of the image frame stored in the integrated frame buffer 134-1. On the other hand, in the method of using the individual frame buffers, the display controllers that control the displays 190a and 190b may provide the image frames, respectively, to the displays 190a and 190b.

Also, even in the method of using the individual frame buffers 134a-1 and 134b-1, a display driver (not illustrated) may be included to integrally manage the displays 190a and 190b. At this time, when a single display driver is used, the single display driver may perform a bridge function to determine to which display, from among a plurality of displays, an image frame of the individual frame buffer may be provided.

When the first web browsing screen is displayed on the two displays 190a and 190b as illustrated in FIG. 21 and the user touches an object on the first web browsing screen, the first web browsing screen, for example, may be reduced and may be displayed on one of the two displays 190a and 190b, and a second web browsing screen linked with the object that was touched by the user may be displayed on the other display.

Although the single first web browsing screen may be displayed using the two displays 190a and 190b in FIG. 21, the first web browsing screen may be displayed only on one of the two displays 190a and 190b. In this case, it may be determined, based on pre-set default information and a current operation state of the multi-display apparatus 100, which display may display the first web browsing screen.

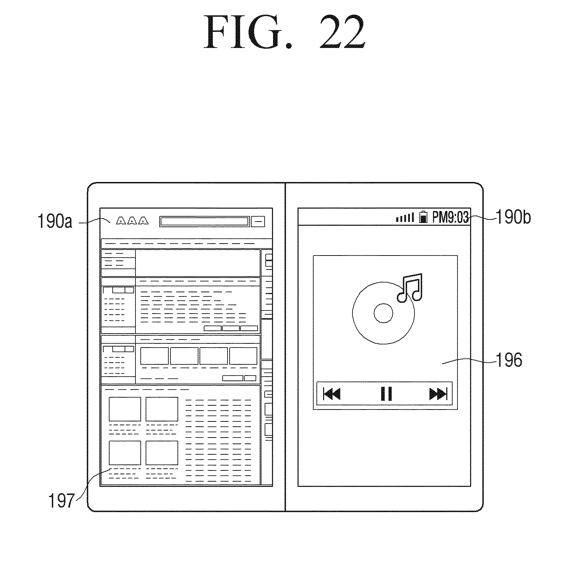

FIG. 22 illustrates an example of determining a display location of a first web browsing screen according to an operation state of the multi-display apparatus 100. FIG. 22 illustrates an example of displaying a web browsing screen and a different application execution screen, respectively, on the first and second displays 190a and 190b of the multi-display apparatus 100.

Referring to FIG. 22, when a music content playback screen 196 is displayed on the second display 190b and a web browser is executed by a user gesture performed on the first display 190a, a first web browsing screen 197 may be displayed on the first display 190a on which the music content playback screen 197 is not displayed. As described above, the initial display location of the first web browsing screen 197 may vary according to a type of an application that may be displayed on the first and second displays 190a and 190b.

When default information that designates one of the first and second displays 190a and 190b as a main display is stored, the multi-display apparatus 100 may determine a display to display the first web browsing screen 197 according to the default information.

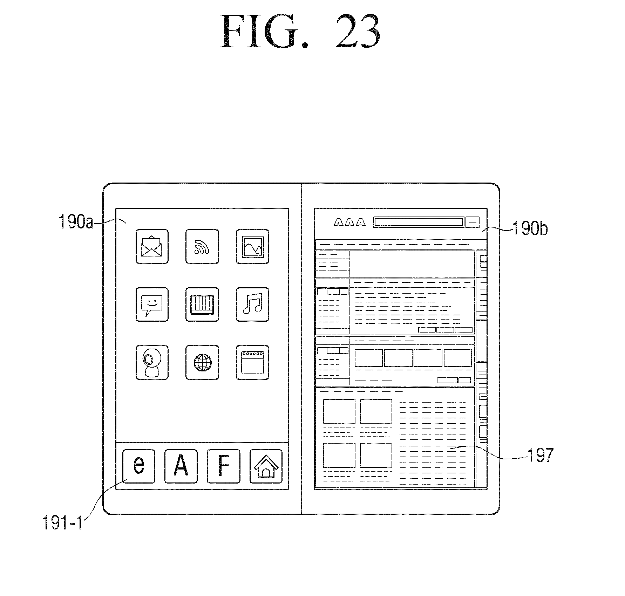

FIG. 23 illustrates an example in which the second display 190b may be set as a main display. FIG. 23 illustrates an example of displaying a home screen and a web browsing screens, respectively, on the first and second displays 190a and 190b of the multi-display apparatus 100. In this case, the first web browsing screen 197 may be displayed on the second display 190b.

Also, the display location of the first web browsing screen 197 may be determined with reference to a location of the web browser icon 191-1. For example, when the web browser icon 191-1 is displayed on the first display 190a as illustrated in FIG. 23, the first web browsing screen 197 may be automatically displayed on the second display 190b, which may be opposite the first display 190a on which the web browser icon 191-1 is displayed.

As described above, the size and the display location of the first web browsing screen 197 may be set in various ways. When the first web browsing screen 197 is displayed and the user touches an object on the first web browsing screen 197, a second web browsing screen linked with the touched object may be displayed.

The configurations illustrated in FIGS. 21 to 23 may be equally applied to many exemplary embodiments of the present invention. That is, according to an exemplary embodiment, when the first web browsing screen 197 is displayed on the two displays 190a and 190b and the user selects an object, the first web browsing screen 197 may be reduced and the second web browsing screen (not illustrated) may be displayed. Also, when the first web browsing screen 197 is displayed at a location where it does not hide the other screen currently executed and the user selects an object, the second web browsing screen may be newly displayed so as to hide the other screen.

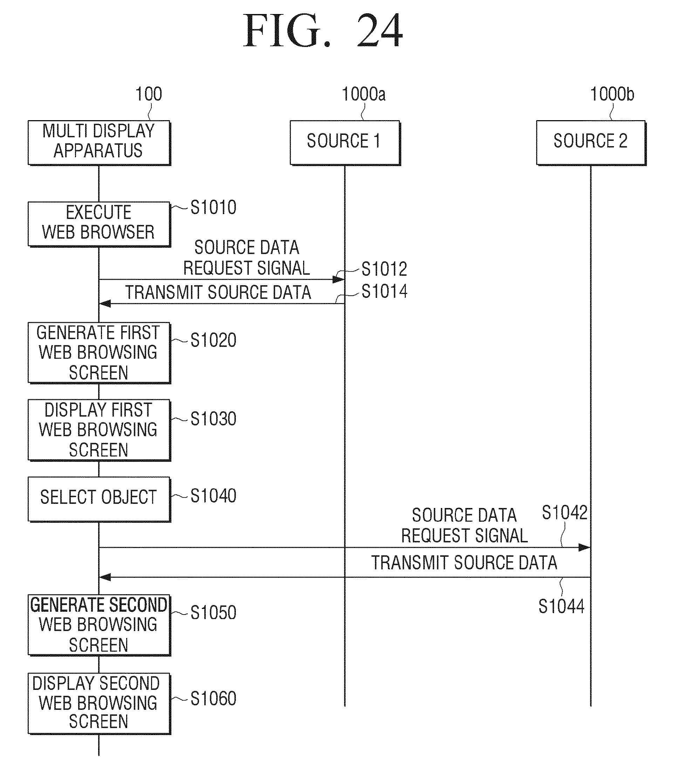

FIG. 24 is a timing chart that illustrates a method of displaying a plurality of web browsing screens on the multi-display apparatus 100 according to an exemplary embodiment of the present invention.

Referring to FIG. 24, when a web browser is executed in the multi-display apparatus 100 (S1010), the multi-display apparatus 100 may access a predetermined source 1 1000a. Accordingly, the multi-display apparatus 100 may transmit a request signal to request web page data (S1012).

For example, the multi-display apparatus 100 may access the source 1 1000a based on predetermined URL information and may transmit a web page data request signal according to a hypertext transfer protocol (http). Accordingly, when web page data is received from the source 1 1000a (S1014), the multi-display apparatus 100 may generate a first web browsing screen using the web page data and may display the first web browsing screen (S1020).

For example, the multi-display apparatus 100 may store the received web page data, may generate a BMP image by processing the web page data, and may upload the generated BMP image into a virtual frame buffer. The virtual frame buffer may be divided by first and second addresses so that a region that may be displayed on the first display 190a (first address) and a region that may be displayed on the second display 190b (second address) may be distinguished from each other. The multi-display apparatus 100 may upload image data about the first web browsing screen into the first address region of the virtual frame buffer. For example, when the first address has a horizontal pixel information value ranging from 0 to 600 and a vertical pixel information value ranging from 0 to 1024, the first display 190a may read out data mapped onto the first address of the virtual frame buffer and may display the first web browsing screen using the data (S1030).

The user may select an object displayed on the first web browsing screen (S1040). The multi-display apparatus 100 may analyze a location value of a touch region on the first web browsing screen, and may determine an object that corresponds to the analyzed location value.

When there is no http document linked with the selected object, the multi-display apparatus 100 may not execute a new web browser. When there is an http document linked with the selected object, the multi-display apparatus 100 may prepare for execution of a new web browser.

For example, the multi-display apparatus 100 may transmit a web page data request signal to a source 2 1000b that may be indicated by an address linked with the selected object (S1042). That is, the selected object may include link information and information about an IP address where a linked source may be located. The multi-display apparatus 100 may transmit a web page data request signal to the source 2 1000b where the linked document may exist based on the IP address.

In response to the web page data request signal, the source 2 1000b may transmit corresponding source data to the multi-display apparatus that may have a specific IP address has and that may have requested web page data about the corresponding http page (S1044).

The multi-display apparatus 100 may store the received web page data, may generate the second web browsing screen using the web page data, and may display the second web browsing screen through the second display (S1050 and S1060). The method of generating and displaying the second web browsing screen may be the same as or similar to the method of displaying the first web browsing screen.

Although not illustrated in FIG. 24, when the user touches the second web page screen as described above, a third web browsing screen linked with the touched object may be newly displayed.

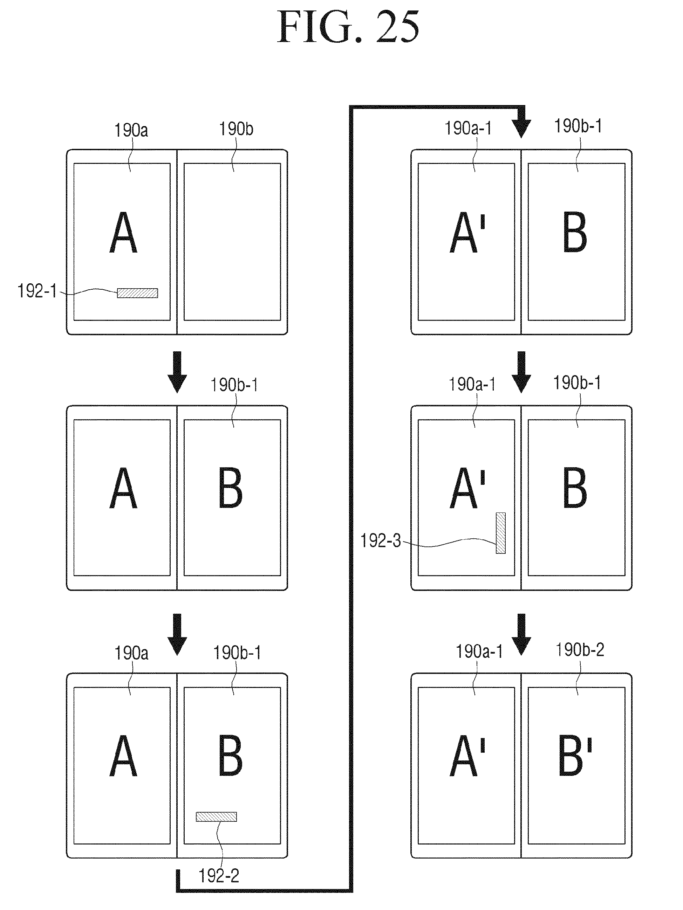

FIG. 25 illustrates a method of displaying a plurality of web browsing screens in the multi display apparatus 100 in detail according to an exemplary embodiment of the present invention.

As illustrated in FIG. 25, when a first web browsing screen A is displayed on the first display 190a and the user selects a first object 192-1 on the first web browsing screen A, a second web browsing screen B, which may be provided from a source linked with the first object 192-1, may be displayed on the second display 190b. The first object 192-1 may be, for example, one of an icon, a text, an image, and/or a menu displayed on the first web browsing screen A.

In this state, when the user selects a second object 192-2 on the second web browsing screen B, a third web browsing screen A', linked with the second object 192-2, may be displayed on the first display 190a.

At this time, the third web browsing screen A' may displayed, for example, overlapping the first web browsing screen A. The multi-display apparatus 10 may toggle between the first web browsing screen A and the third web browsing screen A' according to a user's selection. For example, when the user makes a touch manipulation, such as double touching, flicking and dragging on the third web browsing screen A' overlapping the first web browser screen A, or presses a button, the third web browsing screen A' may go under the first web browsing screen A and the first web browsing screen A may be displayed overlapping the third web browsing screen A'. Such a toggling operation may be performed alternately by user manipulation.

Also, when the third web browsing screen A' is generated, the multi-display apparatus 100 may remove the first web browsing screen A, may store information about the first web browsing screen A in the storage 170, and then may display the third web browsing screen A'. In this state, when a screen toggling command is input, the controller 130 of the multi-display apparatus 100 may remove the third web browsing screen A' and may display the first web browsing screen A on the first display 190a using the information stored in the storage 170.

On the other hand, when a third object 192-3 is selected on the third web browsing screen A', a fourth web browsing screen B', linked with the third object 192-3, may be displayed on the second display 190b.

As described above, the web browsing screens may be generated in association with one another according to a link relationship and may be displayed on the first and second displays 190a and 190b alternately. The web browsing screens may have a correlation therebetween. For example, when a photo is selected on the first web browsing screen A, a web page that includes the photo may be generated, from an URL linked with the photo, as the second web browsing screen B. Accordingly, since the user may view the plurality of web browsing screens in connection with one another, convenience for the user may be improved.

On the other hand, the storage 170 may store history information about each web browsing screen while the web browsing screens are generated and displayed in sequence. For example, referring to FIG. 25, the storage 170 may store history information about the first web browsing screen A and the third web browsing screen A', which may be displayed on the first display 190a, and may store history information about the second web browsing screen B and the fourth web browsing screen B', which may be displayed on the second display 190b.

Toggling between the screens displayed on each of the first display 190a and the second display 190b is explained below.

On the other hand, according to an exemplary embodiment of the present invention, after the user may select the first object 192-1, the second web browsing screen B, provided by the source linked with the first object 192-1, may be directly displayed on the other display. However, when the second web browsing screen B is directly displayed in this manner, it may be difficult for the user to intuitively recognize a correlation between the user's touching the first object 192-1 and the newly displayed second web browsing screen B.

Accordingly, a graphic effect, for example, may be added to a display screen that is or has been newly generated by selection of an object, and a screen changing process may be gradually displayed.

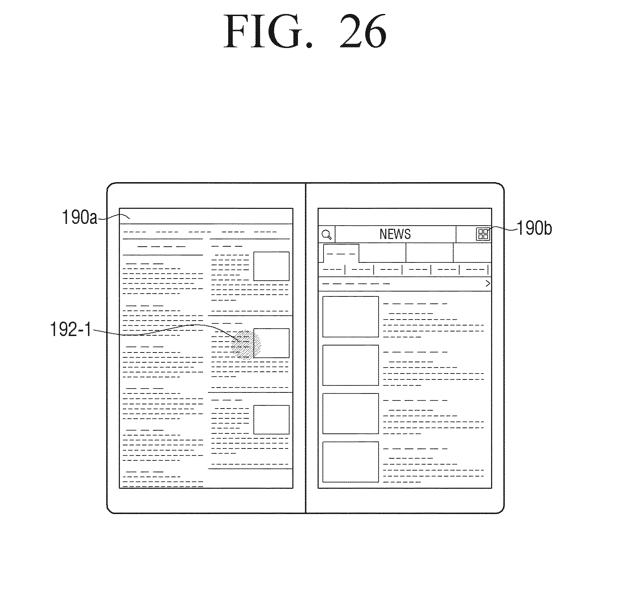

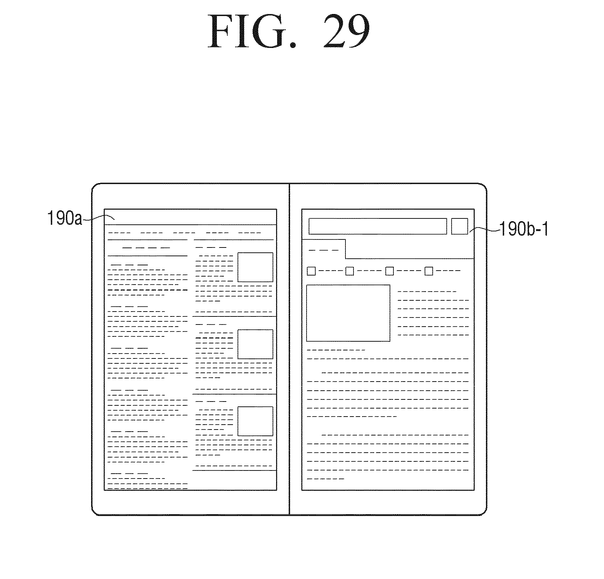

FIGS. 26 to 29 illustrate an example of a process of displaying a web browsing screen on the second display 190b according to a user selection command on the first display 190a in the multi-display apparatus 100 according to an exemplary embodiment of the present invention.

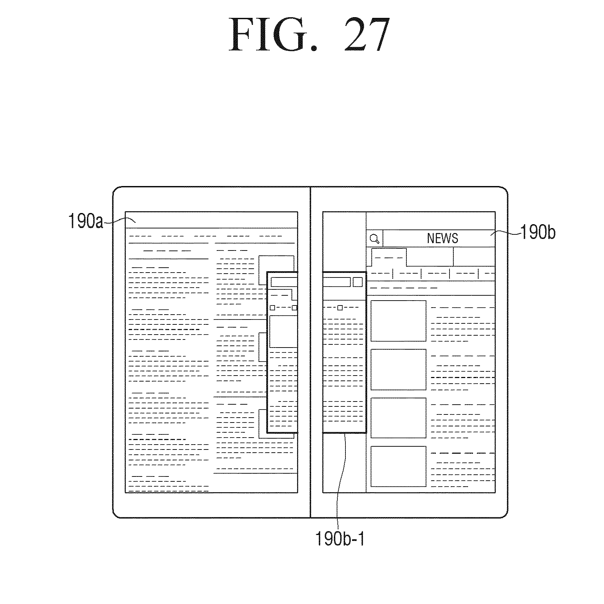

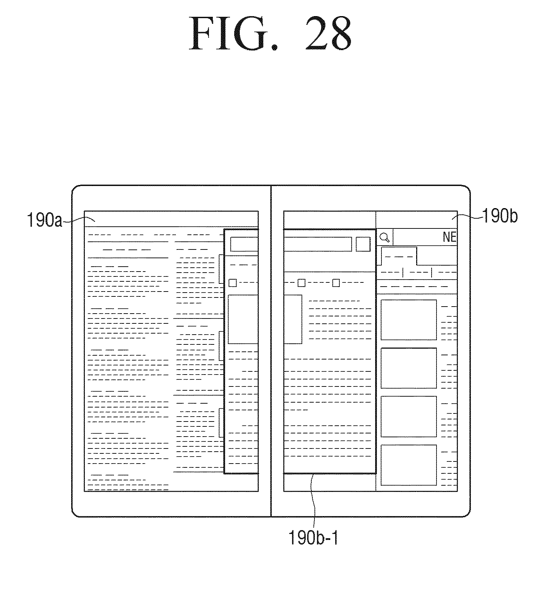

In FIG. 26, when a first web browsing screen is displayed on the first display 190a and a second web browsing screen is displayed on the second display 190b, and the first object 192-1 is selected on the first web browsing screen, the controller 130 may display a third web browsing screen 190b-1 (see FIGS. 27 and 28) on the first display 190a in a small form. Then, for example, the controller 130 may gradually move the third web browsing screen 190b-1 to the second display 190b, while gradually increasing a size of the third web browsing screen 190b-1. During this process, by adding, for example, various graphic effects along the moving trajectory of the third web browsing screen 190b-1, the multi-display apparatus 100 may allow the user to intuitively recognize that the third web browsing screen 190b-1 may be a screen that is linked with the selected first object 192-1.

That is, as shown in FIGS. 27 to 29, the third web browsing screen 190b-1 may be small at first and may gradually increase while moving to the second display 190b. When the third web browsing screen 190b-1 completely moves or has moved to the second display 190b, the third web browsing screen 190b-1 may be enlarged to fit in the second display 190b and may replace the existing second web browsing screen. That is, the second web browsing screen may be replaced with the third web browsing screen 190b-1.

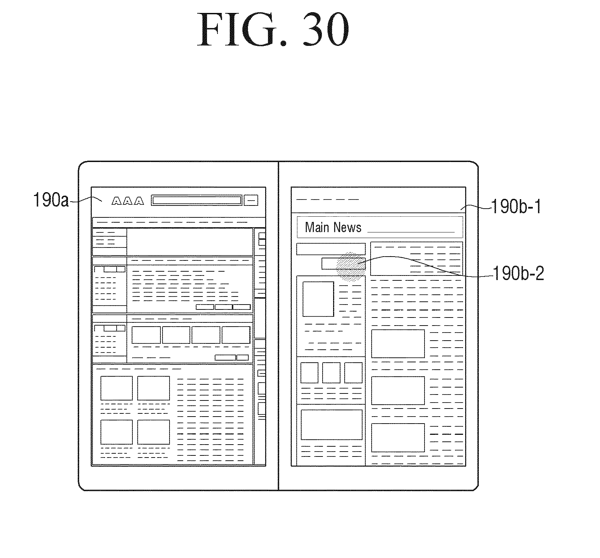

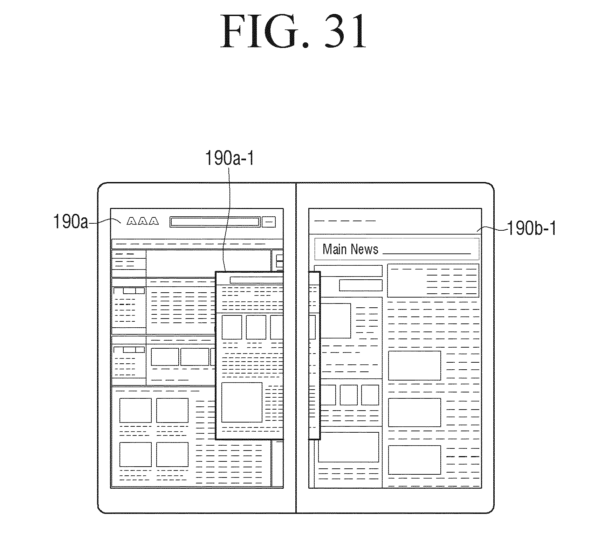

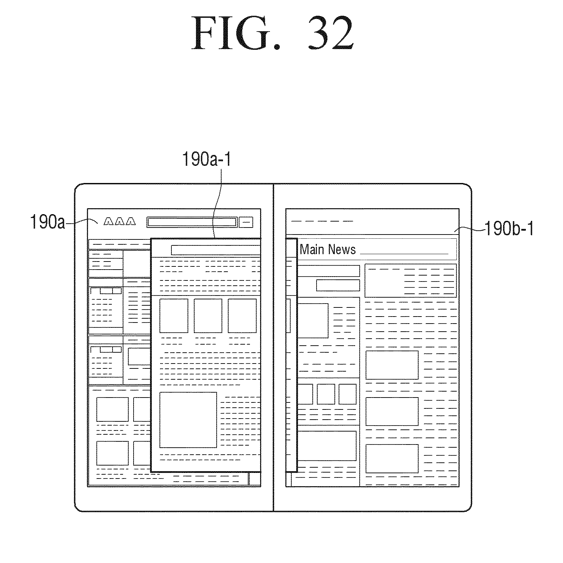

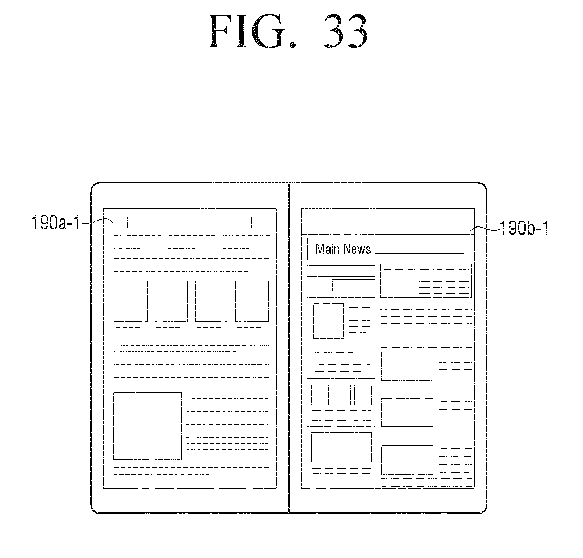

Likewise, as illustrated in FIGS. 30 to 33, a fourth web browsing screen 190a-1 may be small at first and may gradually increase in size while moving to the first display 190a. When the fourth web browsing screen 190a-1 completely moves or has moved to the first display 100a, the fourth web browsing screen 190a-1 may be enlarged to fit in the first display 190a and may replace the existing first web browsing screen. That is, the first web browsing screen may be replaced with the fourth web browsing screen 190a-1.

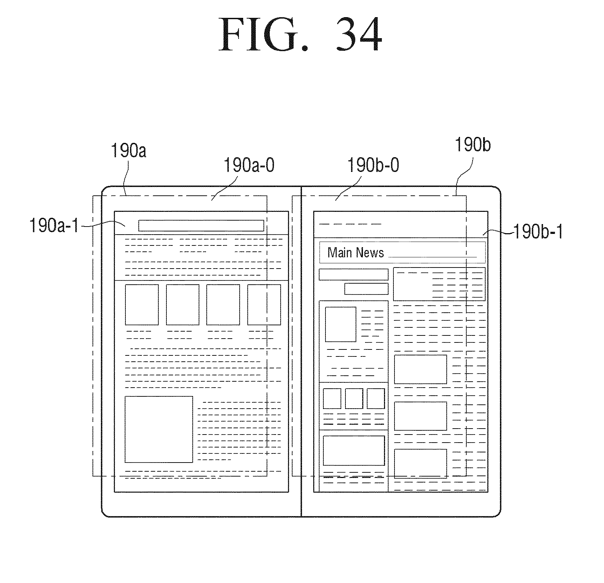

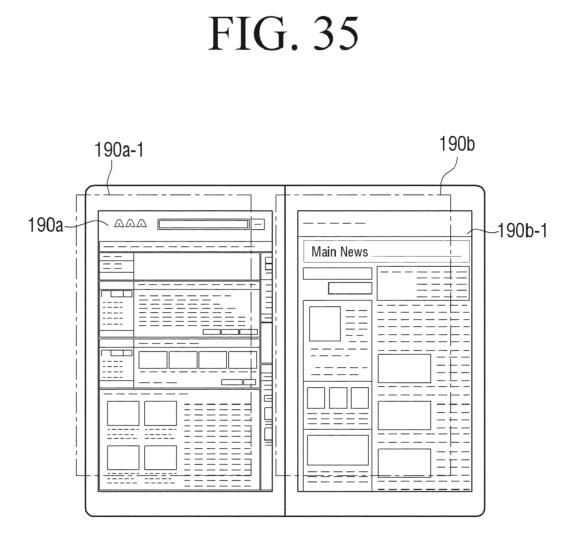

FIGS. 34 to 36 illustrate toggling between web browsing screens on each display in the multi-display apparatus 100 according to an exemplary embodiment of the present invention.

As illustrated in FIG. 34, the fourth web browsing screen 190a-1 may be displayed on the first display 190a and the third web browsing screen 190b-1 may be displayed on the second display 190b.

In FIG. 34, a first web browsing screen 190a-0, which may have been displayed on the first display 190a before the fourth web browsing screen 190a-1, is represented by a dot-dash line, and a second web browsing screen 190b-0, which may have been displayed on the second display 190b before the third web browsing screen 190b-1, is represented by a dot-dash line.

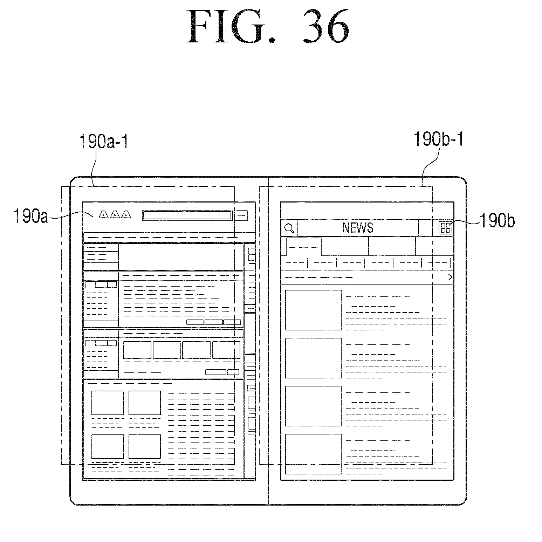

The fourth web browsing screen 190a-1 displayed on the first display 190a and the third web browsing screen 190b-1 displayed on the second display 190b may have a relationship with each other, but the fourth web browsing screen 190a-1 and the first web browsing screen 190a-0 may not have a relationship with each other. Also, the third web browsing screen 190b-1 and the second web browsing screen 190b-0 may not have a relationship with each other. Accordingly, when a separate back button is pressed, the fourth web browsing screen 190a-1 may not directly return to the first web browsing screen 190a-0, unlike in a related-art method. When a screen toggling gesture is input by the user through the first display 190a, the controller 130 may change the fourth web browsing screen 190a-1 to the first web browsing screen 190a-0 by using, for example, a URL address record and historic information of a web browser displayed on the first display 190a, which may be stored in the storage 170, and pre-stored time data of the web browsing screen displayed on the first display 190a (see FIG. 36).

Also, when a screen toggling gesture is input by the user through the second display 190b, the controller 130 may change the third web browsing screen 190b-1 to the second web browsing screen 190b-0 by using, for example, a URL address record and historic information of a web browser displayed on the second display 190b, which may be stored in the storage 170, and pre-stored time data of the web browsing screen displayed on the second display 190b (see FIG. 36).

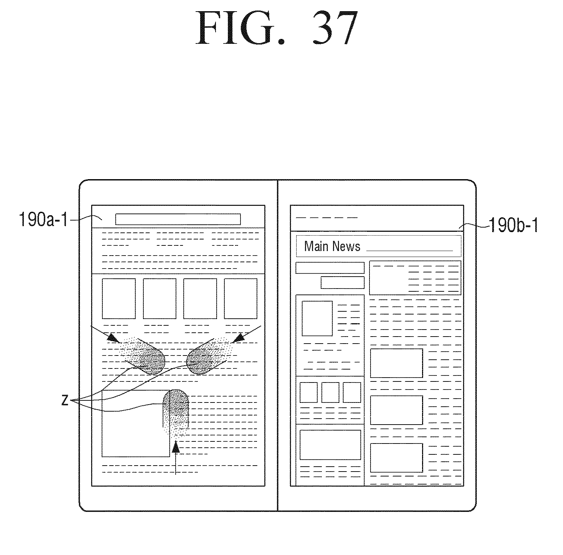

FIGS. 37 to 41 illustrate toggling between web browsing screens on each display in the multi-display apparatus 100 according to an exemplary embodiment of the present invention.

As illustrated in FIG. 37, when the fourth web browsing screen 190a-1 is displayed on the first display 190a and the third web browsing screen 190b-1 is displayed on the second display 190b, the user may perform, for example, a gesture Z by touching three regions on the first display 190a and then dragging to the center.

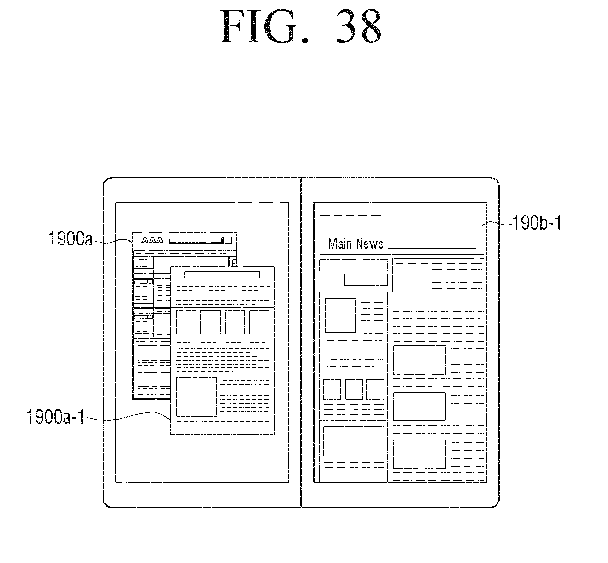

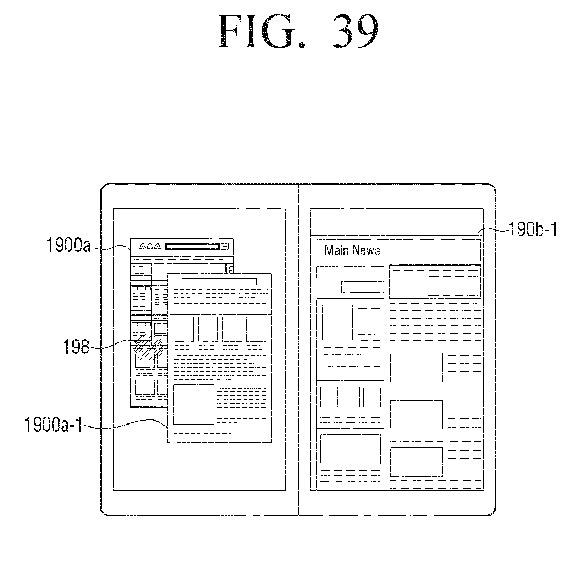

For example, when the gesture Z is input, the controller 130 may control to overlap the web browsing screens displayed on the first and second displays 190a and 190b on each display. FIG. 38 illustrates a plurality of web browsing screens that overlap one another on the first display 190a. As illustrated in FIG. 38, a first web browsing abstract screen 1900a and a fourth web browsing abstract screen 1900a-1 may overlap each other on the first display 190a, and the first web browsing abstract screen 1900a may be selected (198) (see FIG. 39).

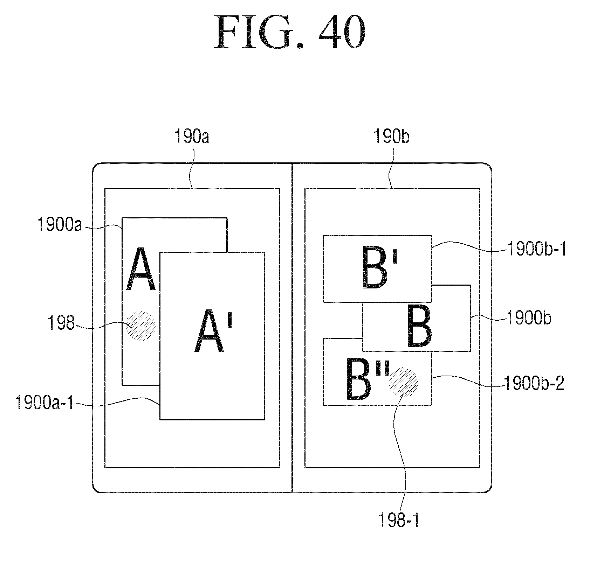

Referring to FIG. 40, by performing, for example, the gesture Z illustrated in FIG. 37, a plurality of web browsing screens may overlap one another on each of the first display 190a and the second display 190b. That is, the first web browsing abstract screen 1900a and the fourth web browsing abstract screen 1900a-1 may overlap each other on the first display 190a. A second web browsing abstract screen 1900b, a third web browsing abstract screen 1900b-1, and a fifth web browsing abstract screen 1900b-2 may overlap one another on the second display 190b.

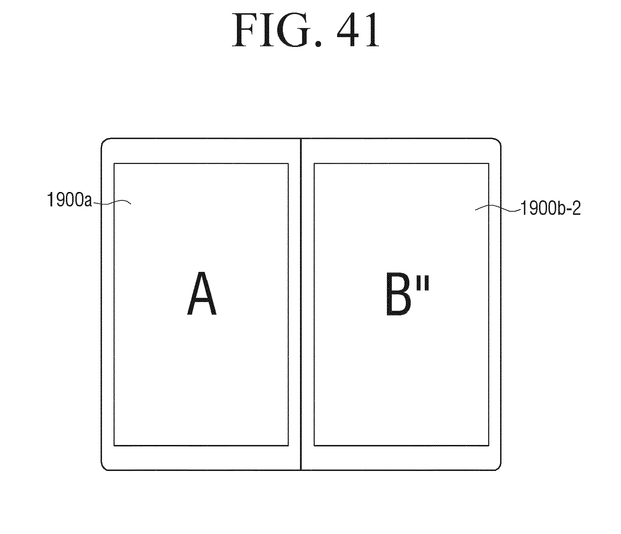

When the user selects the first web browsing abstract screen 1900a on the first display 190a (198) and selects the fifth web browsing abstract screen 1900b-2 on the second display 190b (198-1), the first web browsing abstract screen 1900a and the fifth web browsing abstract screen 1900b-2 may be displayed, respectively, on the first display 190a and the second display 190b in full size (see FIG. 41).

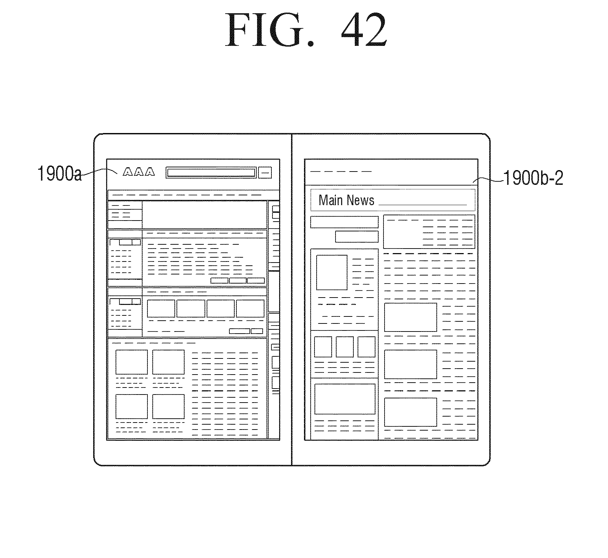

FIGS. 42 to 44 illustrate displaying a web browsing screen as a thumbnail screen in the multi-display apparatus 100 according to an exemplary embodiment of the present invention.

Referring to FIG. 42, a full screen of a first web browsing abstract screen 1900a may be displayed on the first display 190a, and a full screen of a fifth web browsing abstract screen 1900b-2 may be displayed on the second display 190b.

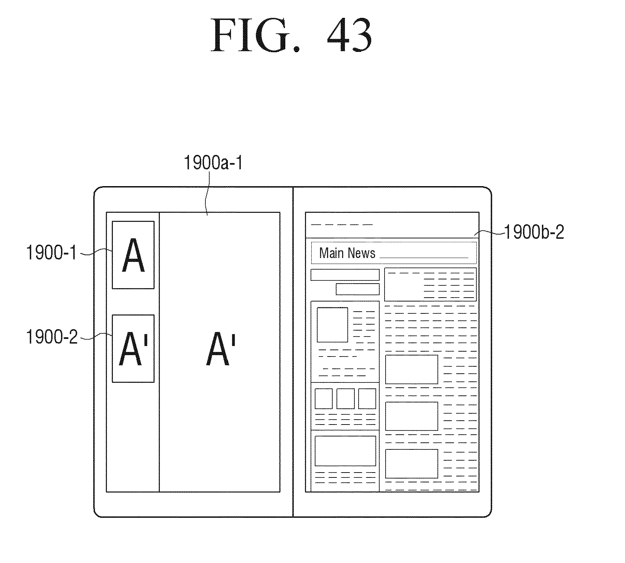

Referring to FIG. 43, for example, when the user's gesture Z is input as illustrated in FIG. 37, the first web browsing abstract screen 1900-1 and a fourth web browsing abstract screen 1900-2 may be displayed at a predetermined region of the first display 190a in a thumbnail form, and a full screen of the fourth web browsing abstract screen 1900a-1 may be displayed at the other region, as illustrated in FIG. 43. The full screen of the fifth web browsing abstract screen 1900b-2 may be displayed on the second display 190b.

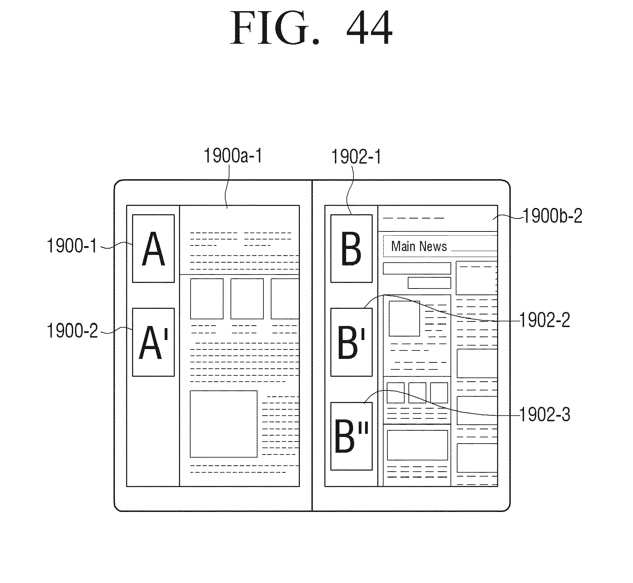

Also, even, for example, when the gesture Z is input on the first display 190a, the first through fifth web browsing abstract screens 1900-1, 1900-2, 1902-1, 1902-2, and 1902-3 may be displayed at some regions of the first and second displays 190a and 190b in the thumbnail form, as illustrated in FIG. 44.

That is, the first web browsing abstract screen 1900-1 and the fourth web browsing screen 1900-2 may be displayed at some regions of the first display 190a in the thumbnail form. The second web browsing abstract screen 1902-1, the third web browsing abstract screen 1902-2, and the fifth web browsing abstract screen 1902-3 may be displayed at some regions of the second display 190b in the thumbnail form.

In the above-described exemplary embodiment of the present invention, when the user selects a certain object on a single web browsing screen, a web browsing screen corresponding to the selected object may be displayed. However, a relevant web browsing screen may be displayed without user selection.

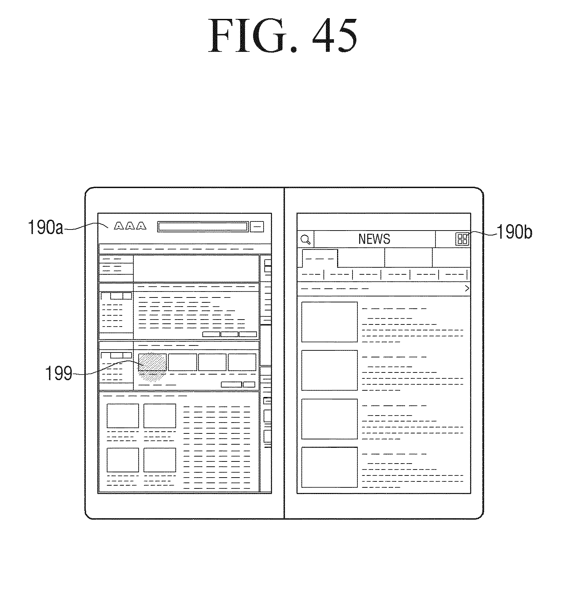

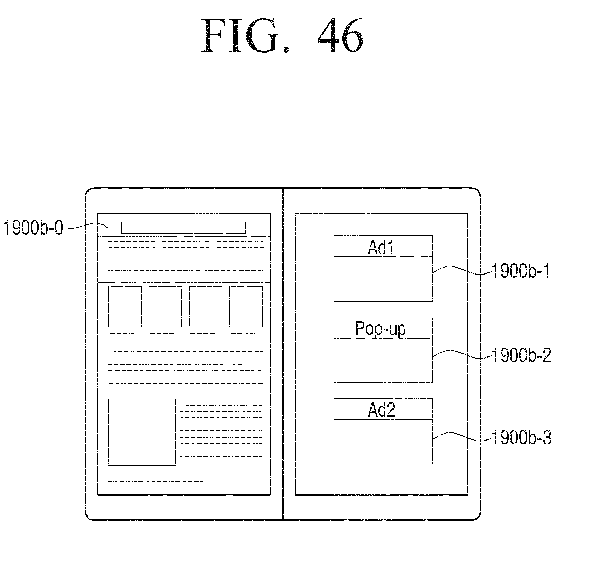

FIGS. 45 and 46 illustrate a method of displaying a plurality of web browsing screens in the multi-display apparatus 100 according to an exemplary embodiment, according to a web page attribute, of the present invention. FIGS. 45 and 46 illustrate separately displaying a main content and a sub content on a web browsing screen in the multi-display apparatus 100 according to an exemplary embodiment of the present invention.

Referring to FIG. 45, a first web browsing screen may be displayed on the first display 190a of the multi-display apparatus 100, and a second web browsing screen may be displayed on the second display 190b. According to an exemplary embodiment of the present invention, a separate application may not be displayed.

When the user selects a first link region 199 included in the first web browsing screen, the controller 130 may transmit a signal to an external server to request source data from the external server in which linked source data may be stored. Upon receiving the source data in response to the request, the controller 140 may generate a second web page screen using the source data.

At this time, the received source data may include, for example, a main content and an additional content. The main content may refer to a content that includes main items of a corresponding web page. For example, when the user clicks specific sports news, the main content may be a content directly concerned with the specific sports news. On the other hand, the additional content may be a sub item that may be included in the corresponding web page (for example, comments or relevant articles) or an advertisement content or an advertisement popup, which may have no relationship with the corresponding web page.

The controller 130 may analyze the received source data and may divide the source data into the main content and the additional content, and may control to generate a first web browsing screen, using data about the main content, and to display the first web browsing screen on the first display 190a as a main web page screen 1900b-0, and to generate a second web browsing screen, using data about the additional data, and to display the second web browsing screen on the second display 190b as sub web page screens 1900b-1, 1900b-2, and 1900b-3 (see FIG. 46).

At this time, the controller 130 may change a layout of the main web page screen 1900b-0. That is, by analyzing sub contents constituting the main content included in the source data and adjusting, for example, size, arrangement, and location of the sub contents based on a display setting value of the first display 190a, the controller 130 may generate a main web page screen 1900b-0 of improved readability and may display the main web page screen igoob-o on the first display 190a.

On the other hand, the controller 130 may divide the additional content to be displayed on the second display 190b according to an attribute and may generate sub web page screens 1900b-1, 1900b-2, and 1900b-3 that correspond to the additional content.

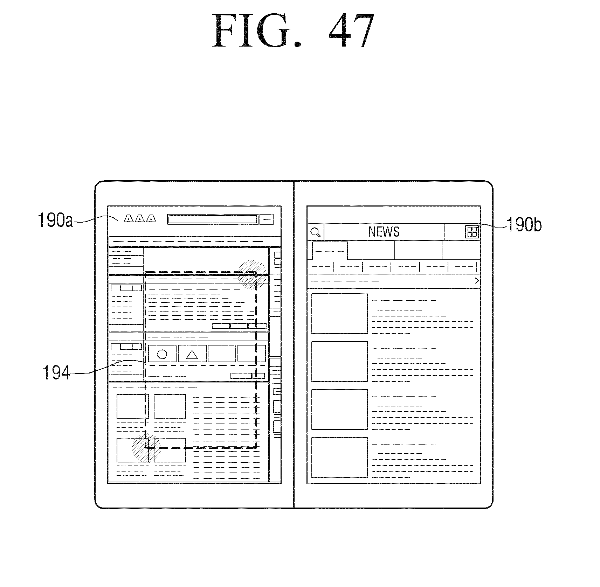

FIGS. 47 to 51 illustrate rearranging a region selected by a user and displaying the region according to an exemplary embodiment of the present invention. FIGS. 47 to 51 illustrate a process to select and display a specific region of a web browsing screen.

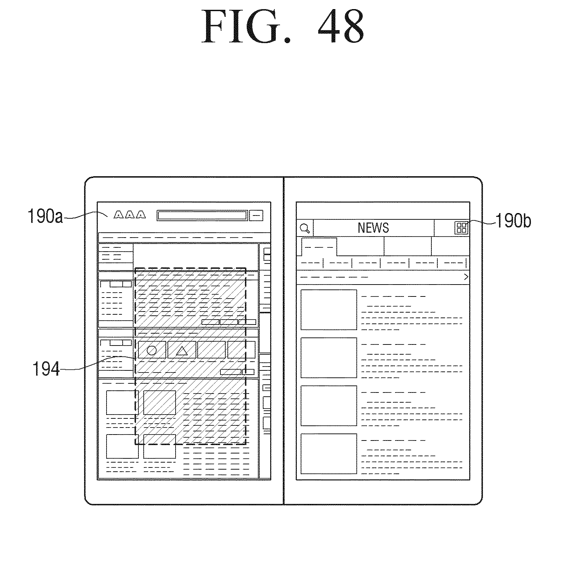

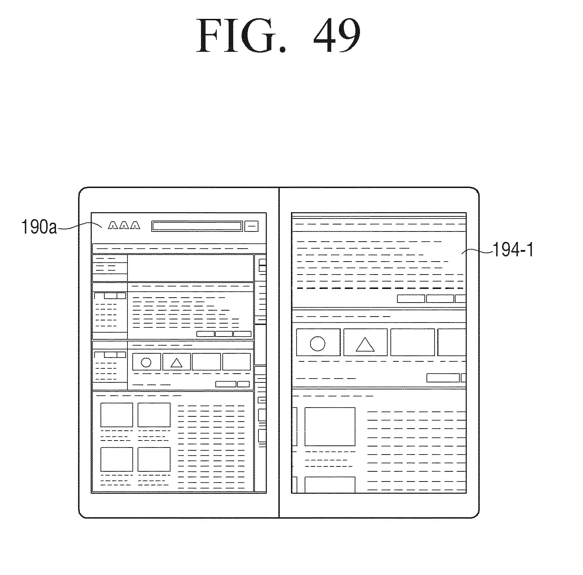

As illustrated in FIG. 47, a first web browsing screen may be displayed on the first display 190a and a separate web browsing screen or a web browsing screen having no relationship with the first web browsing screen may be displayed on the second display 190b. When a predetermined region 194 is selected by the user on the first web browsing screen, the controller 130 may analyze a part of the received source data that corresponds to the selected region 194. When a user inputs a request to enlarge the selected region 194 (see FIG. 48), the controller 130 may generate a second web browsing screen 194-1 based on the analyzed data (see FIG. 49).

As illustrated in FIG. 49, the second web browsing screen 194-1 may be a web browsing screen concerned with a content included in the certain region 194 of the first web browsing screen. That is, when the user selects the certain region 194 of the first web browsing screen, the controller 130 may analyze a content included in the selected region 194 and may generate the second web browsing screen 194-1 concerned with the content of the selected region 194 according to a result of the analysis. That is, the second web browsing screen 194-1 illustrated in FIG. 49 is not simply an enlargement of the region 194 of the first web browsing screen.

For example, the second web browsing screen 194-1 may be a new type of a web page screen that may include the content included in the selected region 194 and may have its layout changed. That is, a content that may be linked with an external server from the contents included in the selected region 194 may include link information even on the second web browsing screen 194-1. Also, the first web browsing screen and the second web browsing screen 194-1 may be associated with each other. When the controller 130 receives updated source data from the external server at predetermined time intervals to update the first web browsing screen, the controller 130 may update the first web page screen using the received update source data, and may automatically update the second web browsing screen 194-1 and may display it on the second display 190b.

According to an exemplary embodiment of the present invention, when the user selects the region 194, the second web browsing screen 194-1 configured from the selected region 194 may be directly displayed on the other display. However, when the second web browsing screen 194-1 is directly displayed in this manner, it may be difficult for the user to intuitively recognize a correlation between the user's selecting the region 194 and the newly displayed second web browsing screen 194-1.

Accordingly, a graphic effect, for example, may be added to a display screen newly generated by selection of the region 194, and thus a screen changing process may be gradually displayed.

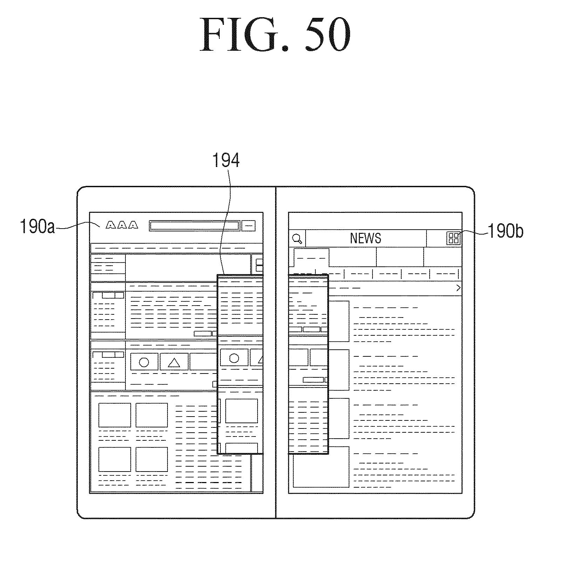

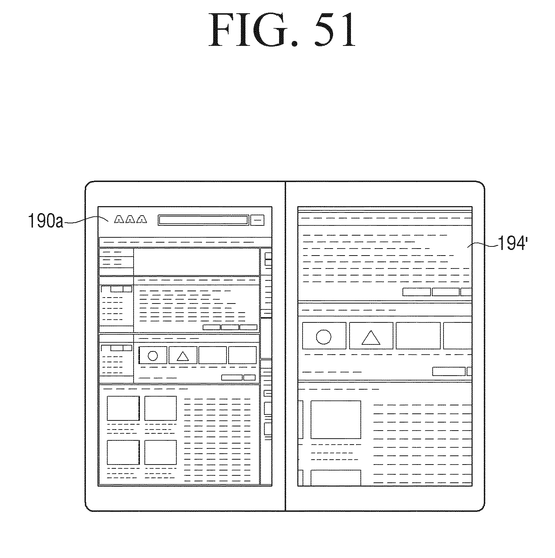

FIGS. 50 and 51 illustrate an example of a process of displaying a web browsing screen according to a user selection in the multi-display apparatus 100 according to an exemplary embodiment of the present invention.

FIG. 50 illustrates an example of a process of moving the region 194 selected by the user from the first display 190a to the second display 190b. That is, when the user selects the certain region 194 of the first web browsing screen and inputs a gesture, for example, to move the selected region 194 to the second display 190b as illustrated in FIG. 50, the selected region 194 may move from the first display 190a to the second display 190b. That is, when the user selects the region 194 as illustrated in FIG. 47 and inputs a gesture, for example, to move the selected region 194 to the second display 190b, a visual effect may be given so that the selected region 194 may move from the first display 190a to the second display 190b without increasing its size (see FIG. 50).

As illustrated in FIG. 51, when the multi-display apparatus 100 finishes or has finished moving the selected region 194 from the first display 190a to the second display 190b, the region 194 may be scaled according to a display size of the second display 190b and may be displayed as a second web browsing screen 194'. That is, the second web browsing screen 194' may have its layout changed by changing, for example, a size, an arrangement, and/or a location of contents constituting the screen.

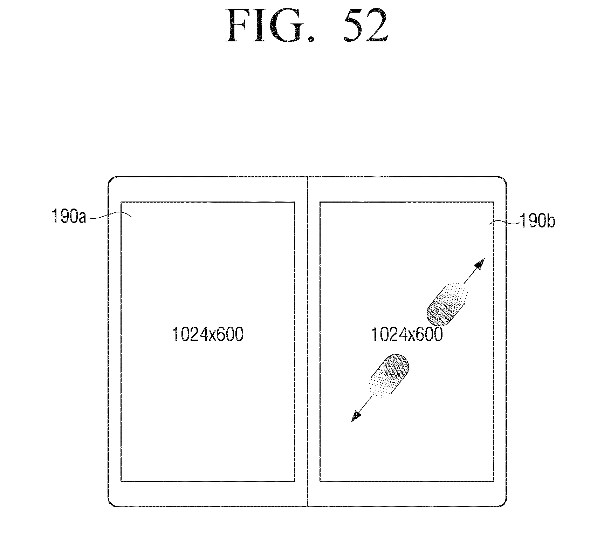

FIGS. 52 to 57 illustrate updating a web browsing screen by changing a resolution of each display of the multi-display apparatus 100, and displaying a web browsing screen according to an exemplary embodiment of the present invention. FIGS. 52 to 57 illustrate a process to change an attribute of a multi-display apparatus.

Referring to FIG. 52, the first display 190a may have a 1024X600 resolution, and the second display 190b may have a 1024X600 resolution. When the user touches, for example, two points of the second display 190b with his/her fingers and moves the fingers further apart to change the resolution of the second display 190b, the resolution of the second display 190b may be gradually reduced. For example, the resolution of the second display 190b may be gradually reduced to 800X480, 480X320, and 320X240 according to a resolution supported by the second display 190b.

Also, when the user touches, for example, two points of the second display 190b and drags the fingers closer together, the resolution of the second display 190b may be gradually increased to 320X 240, 480X 320, and 800 X480 according to a distance between the two fingers.

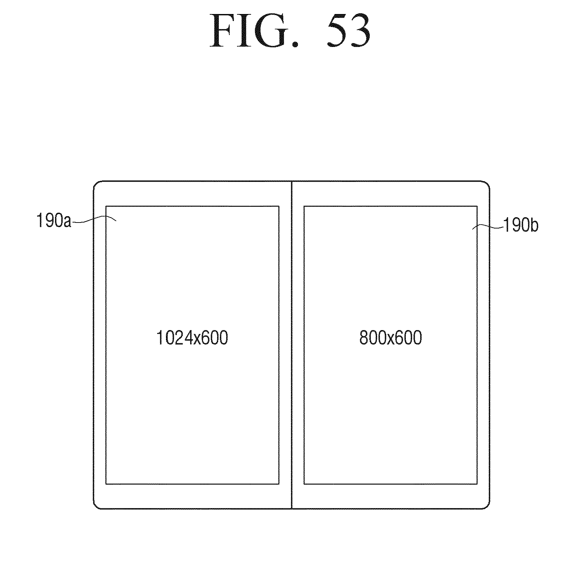

FIG. 53 illustrates an example of setting attributes of the first and second displays 190a and 190b differently by making a resolution of the second display 190b lower than a resolution of the first display 190a.

According to an exemplary embodiment of the present invention, the first display 190a and the second display 190b may be set independently. When settings of the display are changed, a web browsing screen may be rearranged to have readability optimized to the changed display settings. Also, according to an exemplary embodiment of the present invention, the multi-display apparatus 100 may set, for example, the first display 190a to display a web browsing screen of a PC version, and may set the second display 190b to display a web browsing screen of a mobile version.

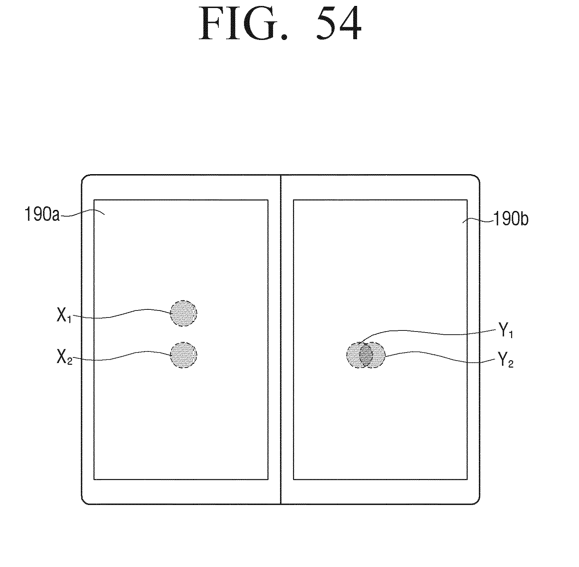

FIG. 54 illustrates one of the user's various gestures to change a resolution of a display according to an exemplary embodiment of the present invention.

When a first touch X1 and a second touch X2 are performed, for example, on the first display 190a, and the user performs, for example, a third touch Y1 on a specific region of the second display 190b, a resolution of the second display 190b may be reduced by one step, and, when the user performs, for example, a fourth touch Y₂ on the specific region of the second display 190b, the resolution of the second display 190b may be reduced by one step further.

When the user performs, for example, two touches on the second display 190b and continuously touches, for example, a specific region of the first display 190a, the resolution of the second display 190b may be reduced as much as a number of continuous touch operations. For example, when the user touches one time, the resolution may be reduced from 1024X1200 to 1024X600, and when the user touches two times, the resolution may be reduced from 1024X 600 to 800X480. After the resolution reaches a minimum level that may be supported by the display, that is, for example, a 320X240 resolution, when the user touches one time, the resolution may be changed to the maximum resolution, for example, the 1024X1200 resolution.

A method of increasing resolutions of the first display 190a and the second display 190b is explained below.

For example, when the user touches three points of the first display 190a and continuously touches a specific region of the second display 190b, the resolution of the second display 190b may be increased as much as the number of touch operations. In contrast, when the user touches, for example, three points of the second display 190a and continuously touches, for example, a specific region of the first display 190b, the resolution of the first display 190A may be increased as much as the number of touch operations.

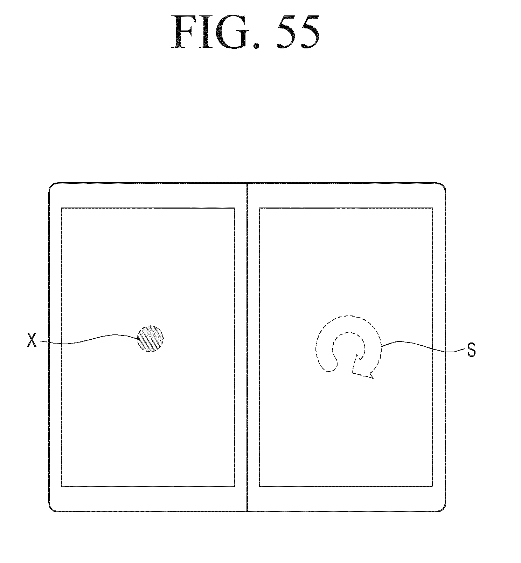

FIG. 55 illustrates an example of another gesture to change a resolution of a display.

As illustrated in FIG. 55, when the user touches, for example, one point X of the first display 190a and touches, for example, a specific region of the second display 190b and draws a circle S while stilling touching, the resolution of the first display 190a may be increased as much as a number of circle drawing operations.

When the user draws a circle S in the opposite direction, the resolution may be reduced.

The above-described gestures to change the resolution are merely examples. A separate resolution change button may be provided on the multi-display apparatus 100, and the resolution may be changed by pressing such an existing button.

The above-described methods of changing the resolution are merely examples and may be modified in various ways.

The feature of changing the resolution of the display of the exemplary embodiments of the present invention may reside, for example, in controlling a plurality of displays individually by the controller 130, such that the multi-display apparatus 100 may intuitively adjust a resolution and a layout of each display.

According to the exemplary embodiments of the present invention, by allowing the user, for example, to intuitively input a control command to change resolution information included in source data provided to a plurality of displays, the user may intuitively change a resolution of each display.

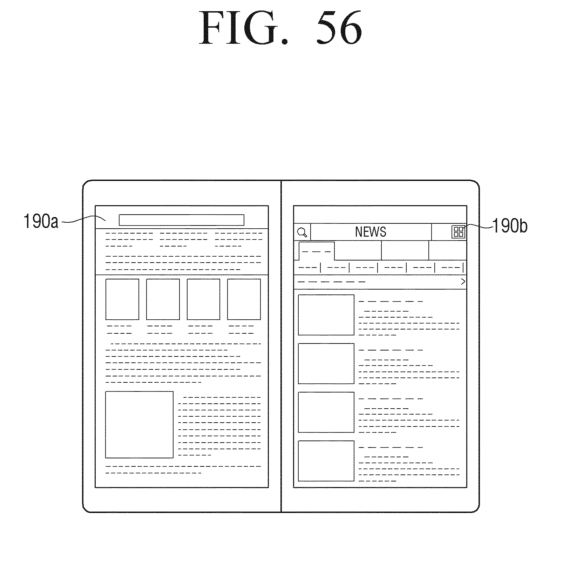

FIG. 56 illustrates the first display 190a and the second display 190b, which display screens of the same resolution.

In this case, even when the user clicks, for example, a link region (not illustrated) included in the web browsing screen displayed on the first display 190a and a new web browsing screen is displayed on the second display 190b, it may not be necessary to change the resolution of the web browsing screen.

However, when the user changes the output resolution of the second display 190b in the above-described method, the web browsing screen displayed on the second display 190b may have its layout automatically changed according to the resolution.

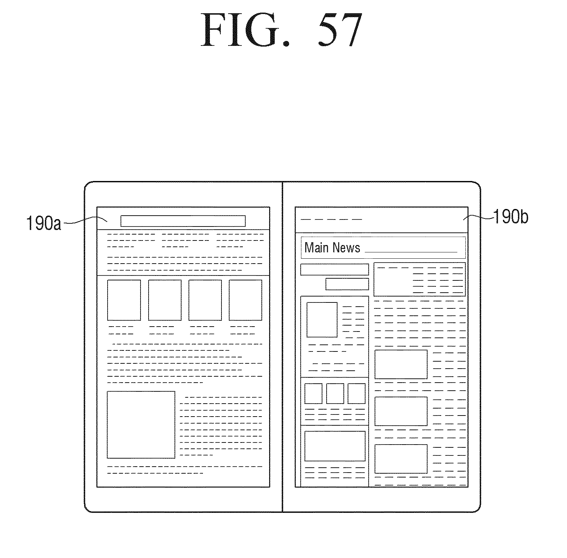

FIG. 57 illustrates a web browsing screen in which the layout is changed. Referring to FIG. 57, when the output resolution of the second display 190b is changed, the layout of the web browsing screen displayed on the second display 190b may be changed and displayed.

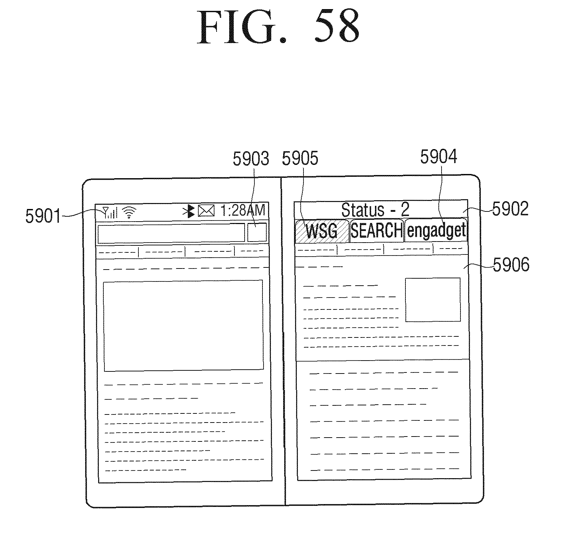

FIG. 58 illustrates the first and second displays 190a and 190b on which web browsing screens are displayed in the multi-display apparatus 100 according to an exemplary embodiment of the present invention.

As illustrated in FIG. 58, web browsing screens having no relationship with each other may be displayed, respectively, on the first display 190a and the second display 190b. Alternatively, the web browsing screens may have a relationship with each other.

The first display 190a may display a web browsing screen that includes, for example, a communication display window 5901 configure to display a communication state or a wireless LAN reception state of the multi-display apparatus 100, and a search button 5903 configured to support searching.

The second display 190b may display a web browsing screen that includes, for example, state information 5902 of a currently displayed application, a first indicator 5904 that indicates an application that is not activated from among executed applications, a second indicator 5905 that indicates an application that is activated, and a web browsing screen 5906, which may be a currently executed application. The screens of the displays illustrated in FIG. 58 are merely examples and the layout of the screen may be changed and implemented in various forms.

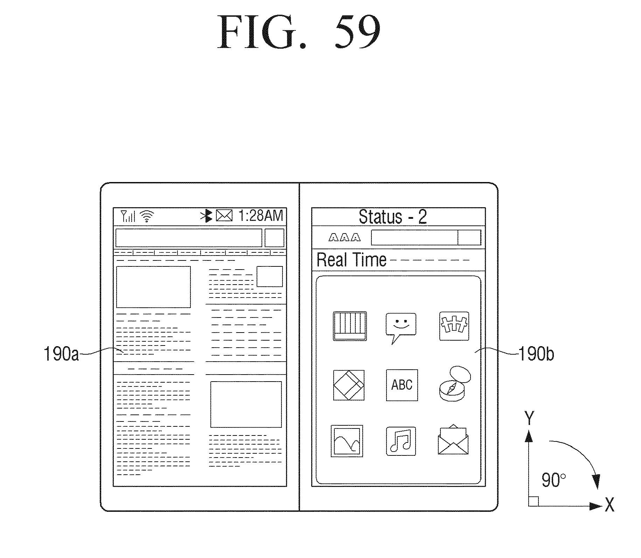

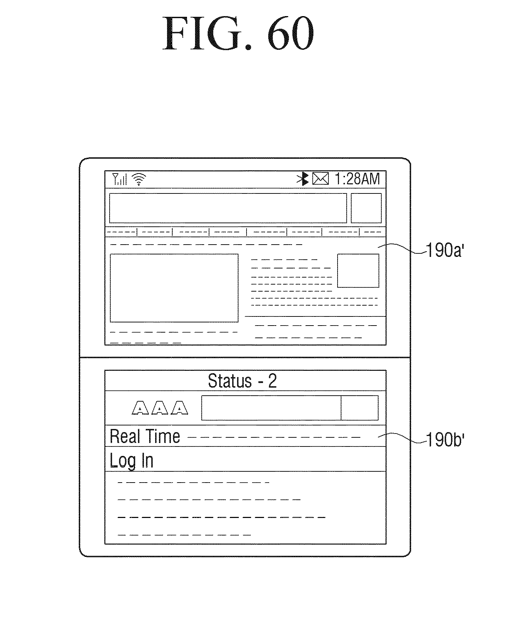

FIGS. 59 and 60 illustrate an example of rotating a web browsing screen according to rotation of the multi-display apparatus 100, and displaying the web browsing screen according to an exemplary embodiment of the present invention. FIGS. 59 and 60 illustrate a process to display a web browsing screen according to an attribute of a display.

FIG. 59 illustrates an example of web browsing being executed on the first and second displays 190a and 190b. When the multi-display apparatus 100 is rotated about a Y axis in a direction of an X axis by 90 degrees, the first display 190a and the second display 190b may change their mode to a landscape mode (see FIG. 60).

At this time, a resolution of the first display 190b may change from 600X800 to 800X600. As long as problems such as, for example, screen mosaic or low readability do not arise even when the resolution of the first display 190a changes from 600X800 to 800X600, the controller 130 may generate a third web browsing screen 190a' by analyzing the source data that may be used for generating the first web browsing screen, and adding a change value, to rotate the multi-display apparatus 100 by 90 degrees in a clockwise direction, to a direction data value to determine a display direction. The controller 130 may display the third web browsing screen 190a' on the first display 190a.

Also, a resolution of the second display 190b may change from 600X800 to 800 X600. The web browsing screen displayed on the second display 190b may have its resolution changed from 600X800 to 800X600, and thus the user's readability may be reduced. The controller 130 may generate a fourth web browsing screen 190b' by analyzing the source data that may be used for generating the second web browsing screen 190b and adding a change value, to rotate by 90 degree in a clockwise direction, to a direction data value to determine a display direction, and by analyzing all contents constituting the second web browsing screen 190b and by changing, for example, size, layouts, and/or arrangements of the contents. The controller 130 may display the fourth web browsing screen 190b' on the second display 190b.

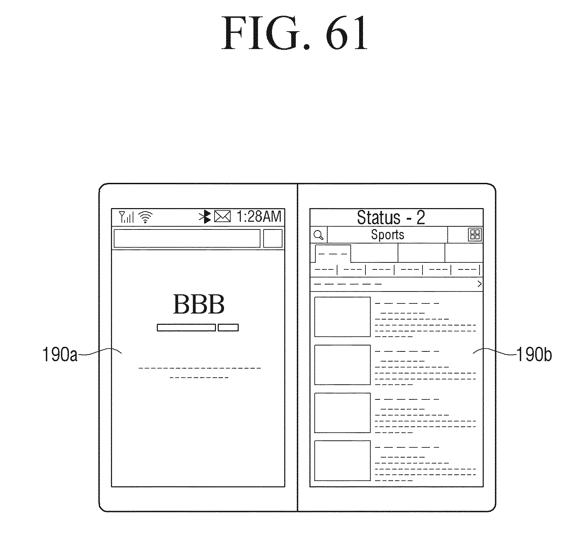

FIGS. 61 to 64 illustrate updating and changing a web browsing screen by means of a button provided on the multi-display apparatus 100 according to an exemplary embodiment of the present invention.

Referring to FIG. 61, the first display 190a may display a first web browsing screen and the second display 190b may display a second web browsing screen, which may have a relationship with the first browsing screen. The user may perform, for example, a long touch at a predetermined region of the second web browsing screen. The long touch may refer, for example, to touching a screen for 3 seconds. However, 3 seconds is merely an example and the long touch may refer to touching for longer than 3 seconds or shorter than 3 seconds.

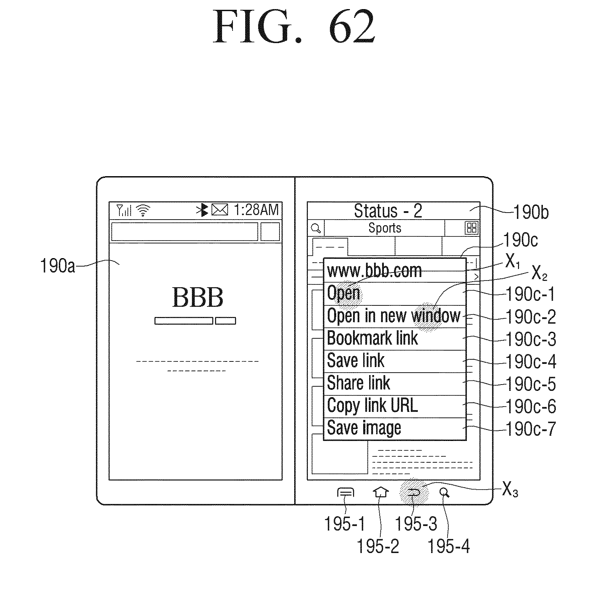

Referring to FIG. 62, when the user performs, for example, a long touch on the second web browsing screen 190b, a selection window 1900 may be displayed overlapping the second web browsing screen 190b. The selection window 190c may include, for example, selection items such as Open 190c-1, Open in new window 190c-2, Bookmark link 190c-3, Save link 190c-4, Share link 190c-5, Copy link URL 190c-6, and/or Save image 190c-7. Also, a plurality of buttons 195-1, 195-2, 195-3, and 195-4 may be provided at a lower portion of the second display 190b.

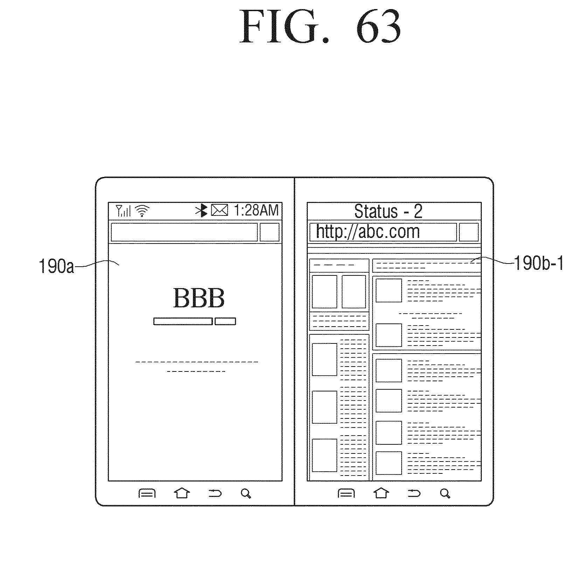

Referring to FIG. 63, when the user selects (X1 from FIG. 62), for example, the item Open 190c-1 of the selection window 190c displayed on the second display 190b illustrated in FIG. 62, a new input window (not illustrated) to move to a new web page address may be generated. When the user inputs a new web page URL address into the input window or clicks a pre-stored URL address, for example, the controller 130 may request source data from the corresponding URL address, and, upon receiving the source data in response to the request, may generate the web browsing screen 190b-1 using the source data and may display the web browsing screen 190b-1 on the second display 190b.

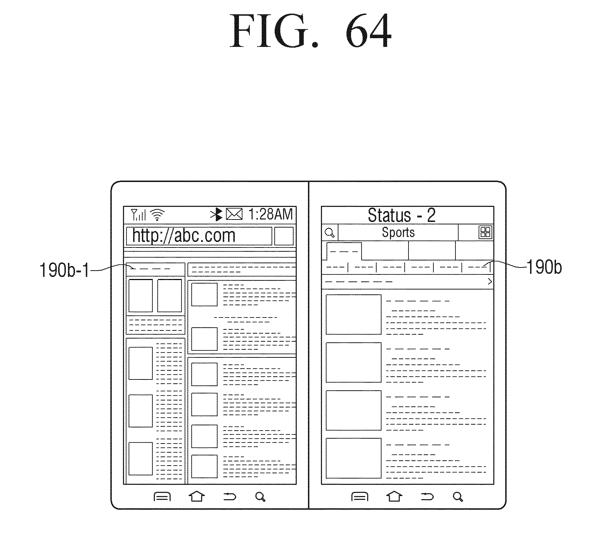

Referring to FIG. 64, when the user selects (X2 from FIG. 62), for example, the item Open in new window 190c-2 of the selection window 190c displayed on the second display 190b illustrated in FIG. 62, the controller 140 may execute a new web browser, may receive source data from a URL, which may be set as a default web page that automatically runs when the web browser is executed, may generate the web browsing screen 190b-1 using the received source data, and may display the web browsing screen 190b-1 on the first display 190a.

When the user clicks (X3 from FIG. 62), for example, a back button 195-3 from among the plurality of buttons provided at the second display 190b, the second web browsing screen 190b currently displayed on the second display 190b may return to a previous screen. When there is no screen to which the second web browsing screen 190b may return, the second web browsing screen 190b may be updated and displayed.

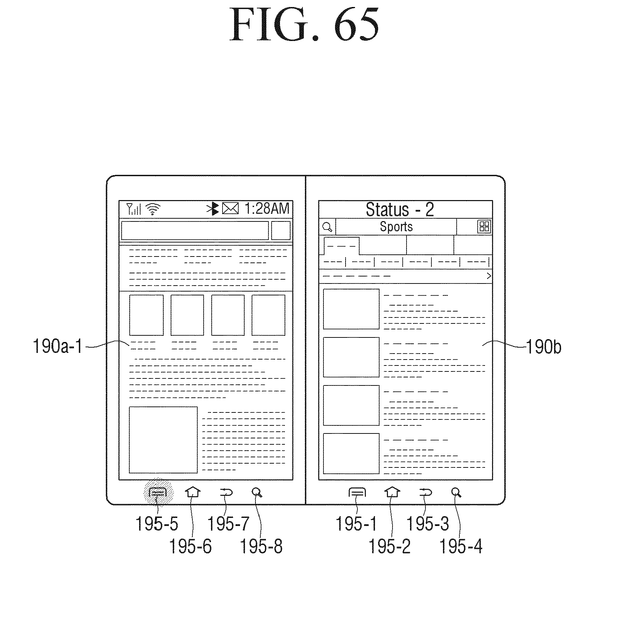

FIGS. 65 to 69 illustrate adding a new web browsing screen and toggling between a plurality of web browsing screens in the multi-display apparatus 100 according to an exemplary embodiment of the present invention.

Referring to FIG. 65, a plurality of buttons 195-5, 195-6, 195-7, and 195-8 may be provided, for example, on a lower portion of the first display 190a, and a plurality of buttons 195-1, 195-2, 195-3, and 195-4 may be provided on a lower portion of the second display 190b.

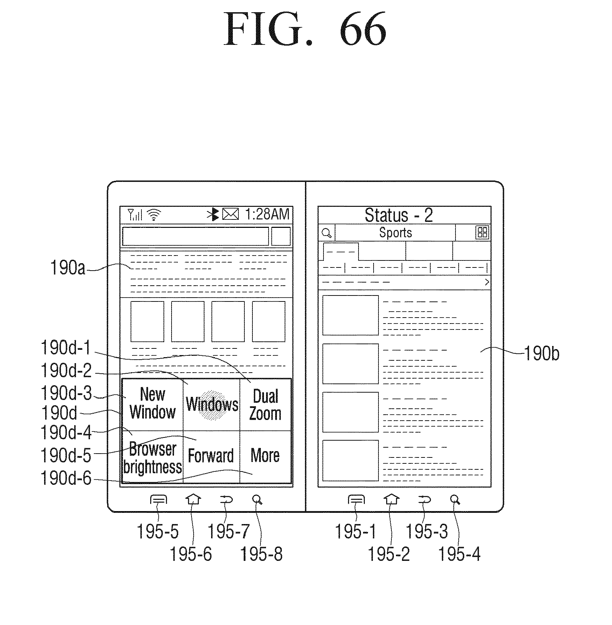

Referring to FIG. 66, when the user selects the button 195-5 provided on the lower portion of the first display 190a, a function list 190d, for example, may be displayed on the lower portion of the first display 190a overlapping the first display 190a. The function list 190d may include, for example, selection items New window 190d-3, Window 190d-2, Dual Zoom 190d-1, Browser brightness 190d-4, Forward 190d-5, and/or More 190d-6.

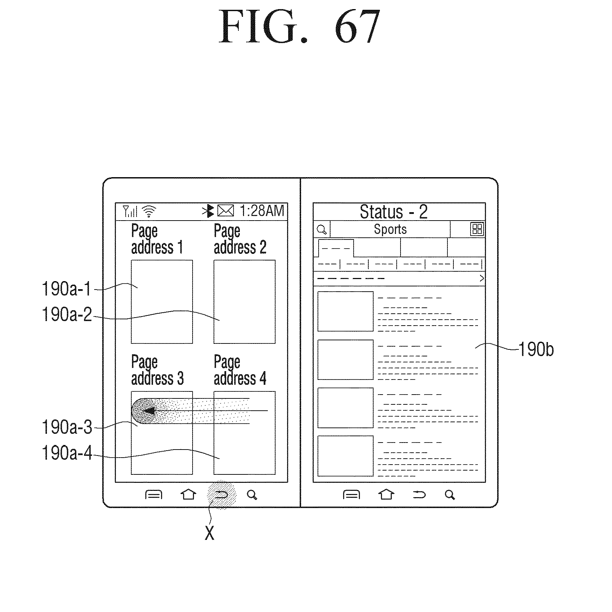

Referring to FIG. 67, when the user selects, for example, the selection item Window 190d-2 from the function list 190d, thumbnails 190a-1, 190a-2, 190a-3, and 190a-4 of the currently executed browser may be displayed on the first display 190a. When the user inputs, for example, a sliding touch gesture from the right to the left on the first display 190a on which the thumbnails of the browser are displayed, the thumbnails of the browser may move from the right to the left.

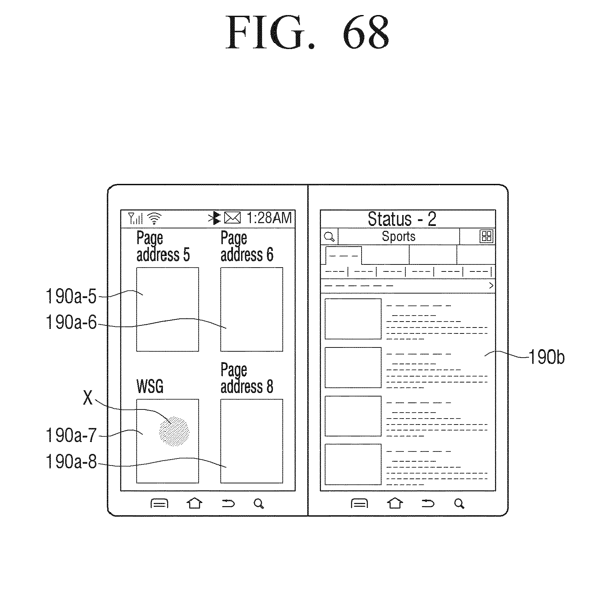

Referring to FIG. 68, when a user's sliding touch, for example, is input on the first display 190a, the thumbnail page of the browser may be turned over. That is, a plurality of browser thumbnails 190a-5, 190a-6, 190a-7, and 190a-8 may be displayed on the first display 190a.

When the user selects, for example, Web Standards Group (WSG) 190a-7 from among the plurality of browser thumbnails, a corresponding web browser may be executed. The controller 130 may receive source data from a server, which may store the source data of the WSG 190a-7, and may generate a web browsing screen using the source data.

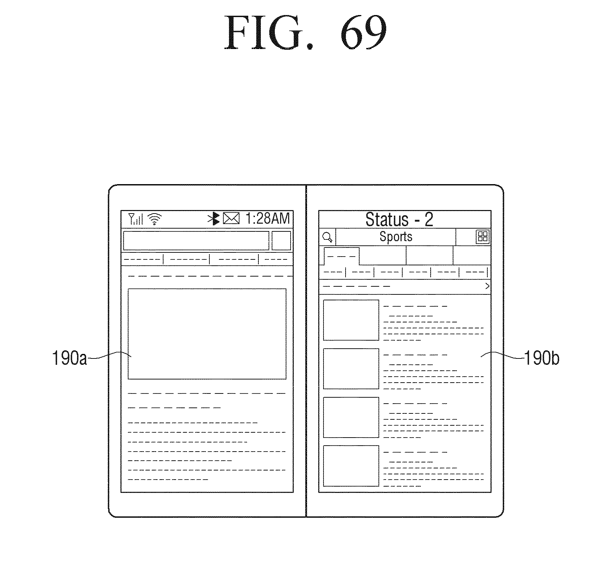

Referring to FIG. 69, the controller 130 may generate a web browsing screen related to, for example, the WSG 190a-7, and may display the web browsing screen on the first display 190a. When the web browsing screen related to the WSG 190a-7 is displayed on the first display 190a and the back button is selected (X) as illustrated in FIG. 67, the first display 190a may display a previous screen before the web browsing screen related to the WSG 190a-7 was selected.

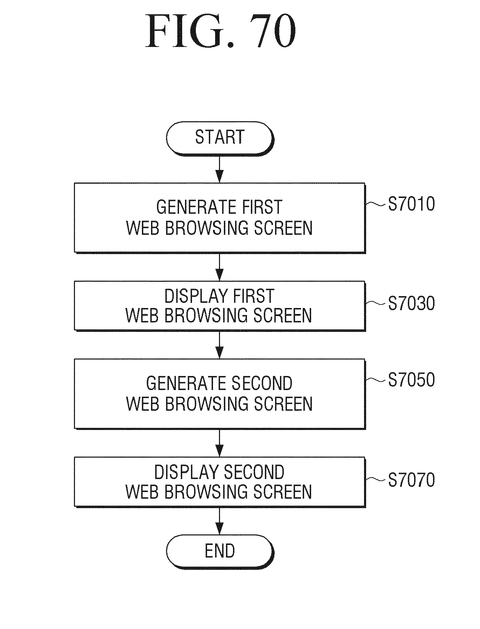

FIG. 70 is a flowchart that illustrates a method of controlling multiple displays of the multi-display apparatus 100 according to an exemplary embodiment of the present invention.

As illustrated in FIG. 70, the multi-display apparatus 100 may receive a first source data from a remote server such as, for example, a web server on which the first source data may be stored, and may generate a first web browsing screen using the received first source data (S7010). The source data may include web page data. The first web browsing screen may be changed according to display settings of the first display (S7030).

After that, the multi-display apparatus 100 may generate a second web browsing screen separately from the first web browsing screen and may display the second web browsing screen (S7050 and S7070).

According to an exemplary embodiment of the present invention, the second web browsing screen may be determined in various ways.

For example, according to an above-described exemplary embodiment, when a first link region included in the first web browsing screen is selected by the user, the multi-display apparatus 100 may receive a second source data from a server on which source data linked with the first link region may be stored and may generate the second web browsing screen (S7050).

In the operation of displaying the second web browsing screen, the second web browsing screen generated to correspond to the second display may be displayed. That is, the second web browsing screen may have its layout changed appropriately according to a display setting and a display direction of the second display (S7070).

Also, the multi-display apparatus 100 may generate first and second web browsing screens, which may be different from each other, using data for a single web page received from a web server, and may display the screens, respectively, on the first and second displays.

For example, the controller 130 may generate a first web browsing screen using a main content in the web page data and may display the first web browsing screen on the first display, and may generate a second web browsing screen using an additional content in the web page data and may display the second web browsing screen on the second display. The main content may be, for example, an image or a text that may be included in the web page, and the additional content may be, for example, a banner image or a popup image. In the case of a portal web site, an advertisement or a notice may be displayed on one of the displays in a form of a banner image or a popup image. Therefore, a full screen size may be increased. Considering this, the controller 130 may collect the main content and may display the main content on one display, and may collect the additional content separately and may display the additional content on the other display, so that the user may easily identify displayed content. The screen of the additional content may be deleted if desired.

The web server may provide web page data of different versions. For example, web pages of different versions in which the same content may be displayed in different layouts, such as, for example, a PC monitor version or a mobile device version, may be individually provided. In this case, the controller 130 may generate a first web browsing screen using a first version of the web page data received from the web server and may display the first web browsing screen on the first display, and may generate a second web browsing screen using a second version of the web page data and may display the second web browsing screen on the second display. The user may enlarge a screen of a specific version over both the first and second displays 190a and 190b.

According to an exemplary embodiment of the present invention, the controller 130 may display, as the second browsing screen, additional information that corresponds to a specific region, which may be selected on the first web browsing screen.

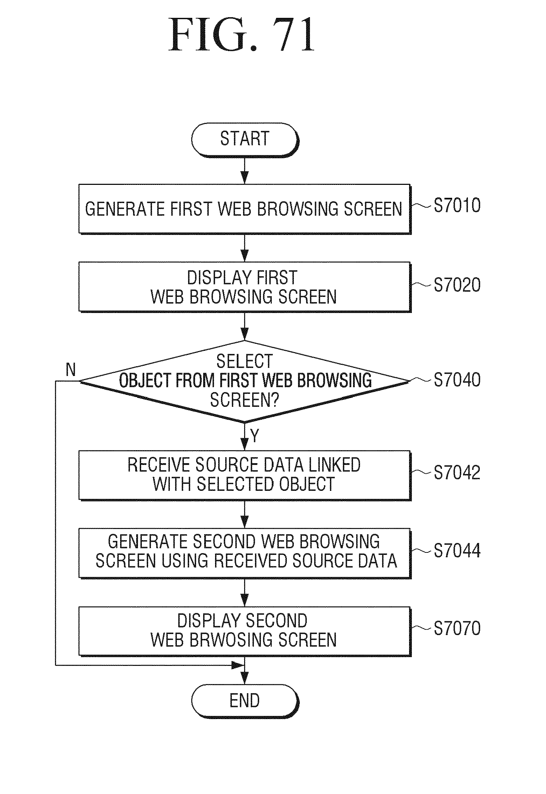

FIG. 71 is a flowchart that illustrates in detail a method of controlling the multi-display apparatus 100 that displays an additional web browsing screen in response to a selection of an object by a user according to an exemplary embodiment of the present invention. FIG. 71 is a flowchart that illustrates in detail a method of controlling multiple displays of the multi-display apparatus 100 according to an exemplary embodiment of the present invention.

Referring to FIG. 71, when a first web browsing screen is displayed and the user selects a certain object on the first web browsing screen (S7040-Y), the multi-display apparatus may request a source data from a remote server, on which the source data linked with the selected object may be stored, and may receive the source data from the remote server in response to the request (S7042). The multi-display apparatus may generate a second web browsing screen according to a display setting value of the second display using the received source data (S7044).

The generated second web browsing screen may be displayed on the second display (S7070).

According to various exemplary embodiments of the present invention as described above, the user may automatically display a new web browsing screen on an empty display without manipulating the multi-display apparatus. Considering degrees of importance of a plurality of applications displayed on the multi-displays, a display location of the newly displayed browsing screen may automatically be determined, so that convenience for the user may be improved.

Also, when the user executes a new web page while web surfing, an additional content displayed along with a main content may be appropriately filtered and blocked or the filtered additional content may be displayed on a display other than the display on which the main content may be displayed, so that the user may view only the main content that includes desired information, and an operation of deleting the undesired additional content from the screen may be reduced.

The method of controlling the operation of the multi-display apparatus 100, the web browsing method, and the display method according to the above-described various exemplary embodiments of the present invention may be implemented by a program and provided to the multi-display apparatus 100.

For example, a non-transitory computer readable medium, which stores a program configured to perform executing a web browser and generating a first web browsing screen, displaying the first web browsing screen on a first display, generating a second web browsing screen having a relationship with the first web browsing screen, and displaying the second web browsing screen on the second display, may be provided.

The present invention can also be embodied as computer-readable codes on a computer-readable medium. The computer-readable medium can include a computer-readable recording medium and a computer-readable transmission medium. The computer-readable recording medium is any data storage device that can store data as a program which can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can be transmitted through carrier waves or signals (e.g., wired or wireless data transmission through the Internet). Also, functional programs, codes, and code segments to accomplish the present invention can be easily constructed by programmers skilled in the art to which the present invention pertains.

The non-transitory computer readable medium refers to a medium that stores data semi-permanently rather than storing data for a very short time, such as a register, a cache, and a memory, and is readable by a device. For example, the above-described various applications or programs may be stored in a non-transitory computer readable medium such as a compact disc (CD), a digital versatile disk (DVD), a hard disk, a Blue-ray disk, a universal serial bus (USB), a memory card, and/or a read only memory (ROM), and may be provided.

Although a few embodiments of the present invention have been shown and described, it will be appreciated by those skilled in the art that changes may be made in these embodiments without departing from the principles of the invention, the scope of which is defined in the appended claims.

## Claims

1. A display apparatus comprising:
a first body comprising a first display;
a second body comprising a second display;
a connector configured to connect the first body and the second body;
a communicator configured to communicate with a web server when a web browser is executed;
a storage configured to store web page data which is received from the web server; and
a controller configured to display a first web browsing screen which is generated based on the web page data on the first display, and, when a single object is selected on the first web browsing screen, configured to display a second web browsing screen, which is linked with the selected object, on the second display.

2. The display apparatus as claimed in claim 1, wherein, when a single object is selected on the second web browsing screen, the controller displays a third web browsing screen, which is linked with the selected object, on the first display.

3. The display apparatus as claimed in claim 2, wherein the controller has the first web browsing screen overlaid with the third web browsing screen, and alternately switches between the first web browsing screen and the third web browsing screen according to a user selection.

4. The display apparatus as claimed in claim 2, wherein, when the third web browsing screen is generated, the controller is arranged to remove the first web browsing screen, to store information about the first web browsing screen in the storage, and to display the third web browsing screen on the first display,
wherein, when a screen switch command is input, the controller is arranged to remove the third web browsing screen displayed on the first display, and to display the first web browsing screen on the first display again using the information stored in the storage.

5. The display apparatus as claimed in claimed in any one of the preceding claims, wherein the first web browsing screen and the second web browsing screen are displayed according to different display options,
wherein a display option comprises at least one of a resolution, a screen size, a layout, a screen arrangement direction, a color, a font, and a letter size.

6. A method for controlling a display of a display apparatus, which comprises a first body including a first display, a second body including a second display and a connector configured to connect the first body and the second body, the method comprising:
executing a web browser and generating a first web browsing screen;
displaying the generated first web browsing screen on the first display; and
when a single object is selected on the first web browsing screen, displaying a second web browsing screen, which is linked with the selected object, on the second display.

7. The method as claimed in claim 6, further comprising:
when a single object is selected on the second web browsing screen, receiving data from a source which is linked with the selected object;
generating a third web browsing screen using the received data; and
displaying the third web browsing screen on the first display.

8. The method as claimed in claim 7, further comprising:
having the first web browsing screen overlaid with the third web browsing screen; and
alternately switching between the first web browsing screen and the third web browsing screen according to a user selection.

9. The method as claimed in claim 7, further comprising:
when the third web browsing screen is generated, removing the first web browsing screen;
storing information about the first web browsing screen;
displaying the third web browsing screen on the first display; and
when a screen switch command is input, removing the third web browsing screen displayed on the first display, and displaying the first web browsing screen on the first display again using the stored information.

10. The method as claimed in any one of claims 6 to 9, wherein the first web browsing screen and the second web browsing screen are displayed according to different display options,
wherein a display option comprises at least one of a resolution, a screen size, a layout, a screen arrangement direction, a color, a font, and a letter size.

11. A display apparatus comprising:
a first body comprising a first display;
a second body comprising a second display;
a connector configured to connect the first body and the second body;
a communicator configured to communicate with a web server when a web browser is executed;
a storage configured to store data associated wih a single web page, which is received from the web server; and
a controller configured to generate different first and second web browsing screens using the data, and to display the first and second web browsing screens on the first and second displays, respectively.

12. The display apparatus as claimed in claim 11, wherein the controller is arranged to generate the first web browsing screen using a main content of the data and to display the first web browsing screen on the first display, and to generate the second web browsing screen using an additional content of the data and to display the second web browsing screen on the second display,
wherein the additional content comprises at least one of a banner image and a pop-up image.

13. The display apparatus as claimed in claim 11, wherein the controller is arranged to generate the first web browsing screen using a first version of the data received from the web server and to display the first web browsing screen on the first display, and to generate the second web browsing screen using a second version of the data and to display the second web browsing screen on the second display,
wherein the first and second web browsing screens are screens on which the same content is arranged in different layouts.

14. The display apparatus as claimed in claim 11, 12 or 13, wherein the controller is arranged to display additional information corresponding to a specific region, which is selected by a user on the first web browsing screen, as the second web browsing screen.

15. The display apparatus as claimed in any one of claims 11 to 14, wherein the controller is arranged to generate first and second web browsing screens having different display options based on the data, and to displays the first and second web browsing screens on the first and second displays, respectively,
wherein a display option comprises at least one of a resolution, a screen size, a layout, a screen arrangement direction, a color, a font, and a letter size.
